# EUROPEAN PATENT APPLICATION

(11) **EP 2 584 818 A1**
(43) Date of publication of application: **24.04.2013**
(21) Application number: 10853604.6
(22) Date of filing: 21.06.2010
(51) Int. Cl.: H04W 24/10

(54) **WIRELESS COMMUNICATION METHOD AND WIRELESS COMMUNICATION DEVICE**

(71) Applicant: Fujitsu Limited, Kawasaki-shi, Kanagawa 211-8588 (JP)
(72) Inventor: YANO Tetsuya, Kawasaki-shi Kanagawa 211-8588 (JP); KAWASAKI Yoshihiro, Kawasaki-shi Kanagawa 211-8588 (JP); OHTA Yoshiaki, Kawasaki-shi Kanagawa 211-8588 (JP); OBUCHI Kazuhisa, Kawasaki-shi Kanagawa 211-8588 (JP)
(74) Representative: Lewin, David Nicholas
(86) International application number: PCT/JP2010/060429
(87) International publication number: WO 2011/161744

(57) **Abstract**

A radio communication method for performing radio communication by using a plurality of frequency bands in a first radio communication apparatus and a second radio communication, the method including transmitting to the second radio communication apparatus a first channel quality information request corresponding to each of the plurality of frequency band, by the first radio communication apparatus; and transmitting to the first radio communication apparatus an information relating to a channel state for the frequency band specified by the first channel quality information request, when the second radio communication apparatus receives the first channel quality information request, by the second radio communication apparatus.

## Description

### TECHNICAL FIELD

The embodiments discussed herein are related to a radio communication method and a radio communication apparatus.

### BACKGROUND ART

At present, portable telephone systems, radio MANs (Metropolitan Area Networks), and other radio communication systems are in wide use. In the field of radio communications, next-generation communication technologies is continued to discuss to further improve communication speeds and capacities. For example, in the 3GPP (3rd Generation Partnership Project), which is one of the standards party, what is called LTE (Long Term Evolution) radio communication system and LTE-A (Long Term Evolution-Advanced) radio communication system which extend LTE, is proposed.

In such a radio communication system, a radio base station allocates radio resource to terminal, performs scheduling by deciding encoding and modulation method, and thereby attempts to perform radio communication efficiently. The radio base station can decide on encoding and modulation method according to the state of radio link, by performing scheduling using information relating to channel state such as radio link quality.

There is a CSI (Channel State Information) as an information related to channel state. For example, the CSI is an information relating to channel state, and the terminal generates the CSI and reports to the radio base station. Such the CSI reporting, there is periodic reporting in which the terminal reports CSI periodically, and aperiodic reporting in which reporting is not periodic, for example. In the case of periodic reporting, the terminal transmits the CSI to the radio base station periodically with predetermined timing for example, and in the case of aperiodic reporting, the terminal transmits the CSI with timing that is not predetermined for example.

In the case of periodic reporting, the terminal transmit the CSI by using a PUCCH (Physical Uplink Control CHannel). The PUCCH is a physical channel for control signal transmission in an uplink (a link from the terminal to the radio base station), for example. However, when the terminal transmits data simultaneously with the CSI, the terminals multiplexes the CSI with data and transmits the CSI by using a PUSCH (Physical Uplink Shared CHannel). The PUSCH is a physical channel for data transmission in the uplink, for example.

On the other hand, the terminal transmits the CSI using the PUSCH in the case of aperiodic reporting. For example, even when the terminal does not transmit data, the terminal transmits the CSI by using the PUSCH.

In the case of data transmission using the PUSCH, the radio base station transmit a control signal (PDCCH signal) by using a PDCCH (Physical Downlink Control CHannel) to the terminal, and the terminal transmits data by the PUSCH by using the control signal transmitted as the PDCCH signal. The PDCCH is a physical channel for control information transmission in a downlink direction (the direction from the radio base station to the terminal), for example.

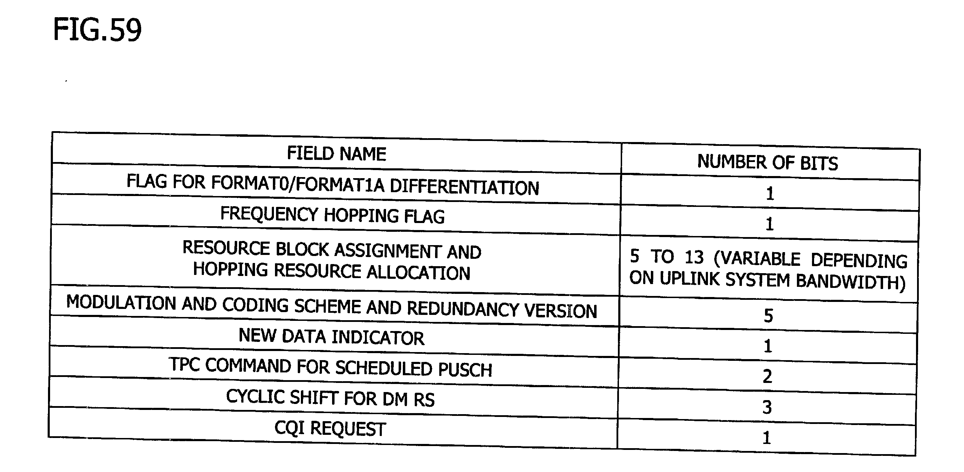

There is a DCI format 0 ((Downlink Control Information) format 0) as one format for control signal transmitted by the PDCCH. FIG. 59 illustrates an example of parameters included in the DCI format 0 for a case of frequency division duplex (FDD) transmission. As illustrated in FIG. 59, one parameter included in the DCI format 0 is "CQI request". The "CQI request" is a parameter indicating whether the terminal performs CSI aperiodic reporting or not, for example. For example, when the radio base station transmits "1" to the terminal as the parameter value in the "CQI request" field, the terminal performs CSI aperiodic reporting.

On the other hand, it also studied that radio communication is performed by using a plurality of frequency bands in parallel in the radio communication system. Each of the plurality of frequency bands is called a component carrier (hereafter "CC") for example, and large-capacity radio communications can be performed by using a plurality of CCs (or a plurality of frequency bands).

Regarding CSI reporting in such the radio communication system using the plurality of frequency bands, for example there is a following technique. That is, there is a technique in which, when the radio base station uses one frequency band of a plurality of frequency bands in the downlink direction to transmit control signal, the terminal performs CSI reporting for the frequency band. In this case, for example, when the radio base station transmit the control signal of a DCI format 0 by using DLCC#1 in the downlink direction (the first downlink CC), the terminal may perform CSI reporting for the DLCC#1.

Further, there is another technique in which, when the radio base station transmits the control information by using one of the plurality of frequency bands in the downlink direction, the terminal may perform CSI reporting for all of the plurality of downlink-direction frequency bands.

Non-patent Reference 1: 3GPP TS 36.212V9.1.0 (for example, section 5.3.3.1)
Non-patent Reference 2: 3GPP TS 36.212V9.1.0 (for example, sections 7.2.1 and 7.2.2)
Non-patent Reference 3: "CQI/PMI/RI reporting for carrier aggregation", 3GPP, R1-103090
Non-patent Reference 4: "Aperiodic CQI Reporting for Carrier Aggregation", 3GPP, R1-102868

### SUMMARY OF THE INVENTION

### PROBLEMS TO BE SOLVED BY THE INVENTION

However, when the terminal performs CSI reporting for the frequency band used in control signal transmission, the terminal cannot report the CSI for the frequency band not used in control signal transmission, of the plurality of downlink-direction frequency bands. Hence using this technique, the radio base station cannot cause the terminal to transmit the CSI for an arbitrary frequency band of the plurality of frequency bands.

On the other hand, when the terminal performs CSI reporting for all frequency bands of the plurality of downlink-direction frequency bands, the radio base station can receive the CSI for all the downlink-direction frequency bands. However, there are also cases in which the radio base station uses only the CSI for a number of frequency bands among the received CSI reports. In such a case, because the CSI for all frequency bands is transmitted from the terminal to the radio base station, transmissions of frequency band CSIs which are not used are wasteful, and throughput cannot be improved.

Accordingly, it is an object in one aspect of the invention to provide a radio communication method and radio communication apparatus such that information relating to a channel state in an arbitrary frequency bandwidth among a plurality of frequency bandwidths can be reported.

Furthermore, it is an another object in one aspect of the invention to a radio communication method and radio communication apparatus such that throughput can be improved.

### MEANS FOR SOLVING THE PROBLEM

According to an aspect of the embodiments, a radio communication method for performing radio communication by using a plurality of frequency bands in a first radio communication apparatus and a second radio communication, the method including transmitting to the second radio communication apparatus a first channel quality information request corresponding to each of the plurality of frequency band, by the first radio communication apparatus; and transmitting to the first radio communication apparatus an information relating to a channel state for the frequency band specified by the first channel quality information request, when the second radio communication apparatus receives the first channel quality information request, by the second radio communication apparatus.

### EFFECTIVENESS OF THE INVENTION

A radio communication method, radio communication system and radio communication apparatus can be provided such that, information relating to channel states in an arbitrary frequency band of a plurality of frequency bands can be reported. Further, a radio communication method and radio communication apparatus can be provided such that throughput can be improved.

### BRIEF DESCRIPTION OF DRAWINGS

FIG. 1 illustrates an example of the configuration of a radio communication system;
FIG. 2 illustrates an example of the configuration of a radio communication system;
FIG. 3 illustrates an example of component carrier setting;
FIG. 4 illustrates an example of the configuration of a radio frame;
FIG. 5 illustrates an example of PDCCH and other setting;
FIG. 6 illustrates an example of DCI format parameter;
FIG. 7A illustrates an example of a DLCC for CSI report; and FIG. 7B illustrates an example of a DLCC for CSI report;
FIG. 8 illustrates an example of the configuration of a base station;
FIG. 9 illustrates an example of the configuration of a terminal;
FIG. 10 is a flowchart illustrating an operation example;
FIG. 11 is a flowchart illustrating an operation example;
FIG. 12 illustrates an example of DCI format parameter;
FIG. 13 illustrates an example of PDCCH and other setting;
FIG. 14 illustrates an example of the configuration of a base station;
FIG. 15 illustrates an example of the configuration of a terminal;
FIG. 16 is a flowchart illustrating an operation example;
FIG. 17 is a flowchart illustrating an operation example;
FIG. 18A illustrates an example of DCI format parameter; and FIG. 18B illustrates an example of DCI format parameter;
FIG. 19A illustrates an example of PDCCH and other setting; and FIG. 19B illustrates an example of PDCCH and other setting;
FIG. 20 is a flowchart illustrating an operation example;
FIG. 21 is a flowchart illustrating an operation example;
FIG. 22A illustrates an example of a correspondence relation; and FIG. 22B illustrates an example of a DLCC for CSI report;
FIG. 23 illustrates an example of the configuration of a base station;
FIG. 24 illustrates an example of the configuration of a terminal;
FIG. 25 is a flowchart illustrating an operation example;
FIG. 26 is a flowchart illustrating an operation example;
FIG. 27 illustrates an example of a correspondence relation;
FIG. 28A illustrates an example of a correspondence relation; and FIG. 28B illustrates an example of a DLCC for CSI report;
FIG. 29 is a flowchart illustrating an operation example;
FIG. 30 is a flowchart illustrating an operation example;
FIG. 31A illustrates an example of a correspondence relation; and FIG. 31B illustrates an example of a DLCC for CSI report;
FIG. 32 is a flowchart illustrating an operation example;
FIG. 33 is a flowchart illustrating an operation example;
FIG. 34 illustrates an example of a DCI format;
FIG. 35 illustrates an example of a DLCC for CSI report;
FIG. 36 is a flowchart illustrating an operation example;
FIG. 37 is a flowchart illustrating an operation example;
FIG. 38A illustrates an example of a DLCC for CSI report; and FIG. 38B illustrates an ULCC for transmission;
FIG. 39 is a flowchart illustrating an operation example;
FIG. 40 is a flowchart illustrating an operation example;
FIG. 41 illustrates an example of a DLCC for CSI report;
FIGs. 42A-42C illustrate examples of a DLCC for CSI report;
FIG. 42C illustrates an example of a DLCC for CSI report;
FIG. 43 is a flowchart illustrating an operation example;
FIG. 44 is a flowchart illustrating an operation example;
FIGs. 45A-45E illustrates examples of a DLCC for CSI report;
FIG. 46 is a flowchart illustrating an operation example;
FIG. 47 is a flowchart illustrating an operation example;
FIGs. 48A-48C illustrates examples of CSI report timing;
FIG. 49 illustrates an example of a DLCC for CSI report;
FIG. 50 is a flowchart illustrating an operation example;
FIGs. 51A-51B illustrates examplse of a DLCC for CSI report;
FIG. 52 is a flowchart illustrating an operation example;
FIG. 53 is a flowchart illustrating an operation example;
FIG. 54A illustrates an example of a DCI format example; and FIG. 54B illustrates an example of PDCCH and other setting;
FIG. 55 illustrates an example of the configuration of a base station;
FIG. 56 illustrates an example of the configuration of a terminal;
FIG. 57 is a flowchart illustrating an operation example;
FIG. 58 is a flowchart illustrating an operation example; and
FIG. 59 illustrates an example of a DCI format.

### BEST MODE FOR CARRYING OUT THE INVENTION

Below, embodiments are explained in detail, referring to the drawings.

### First Embodiment

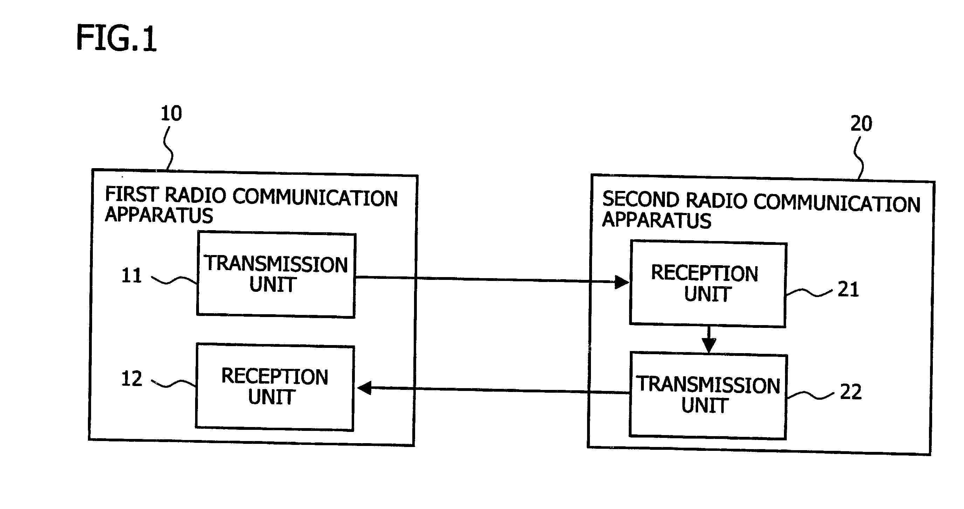

FIG. 1 illustrates an example of a configuration of a radio communication system of a first embodiment. The radio communication system includes a first radio communication apparatus 10 and a second radio communication apparatus 20. The first radio communication apparatus 10 and second radio communication apparatus 20 perform radio communications by using a plurality of radio communication bands.

The first radio communication apparatus 10 includes a transmission unit 11 and a reception unit 12.

The transmission unit 11 transmits first channel quality information requests, corresponding to each of the plurality of frequency band, to the second radio communication apparatus 20.

The reception unit 12 receives information from the second radio communication apparatus 20 relating to channel states for frequency bands specified by first channel quality information requests.

On the other hand, the second radio communication apparatus 20 includes a reception unit 21 and a transmission unit 22.

The reception unit 21 receives first channel quality information requests from the first radio communication apparatus.

The transmission unit 22 transmits information to the first radio communication apparatus 10 relating to channel states for frequency bands specified by first channel quality information requests.

The first radio communication apparatus 10 transmits first channel quality information requests corresponding to each of the plurality of frequency bands to the second radio communication apparatus 20, and the second radio communication apparatus 20 transmits information relating to channel states for frequency bands specified by the first channel quality information requests to the first radio communication apparatus 20.

Hence, of the plurality of frequency band, the first radio communication apparatus 10 can receive from the first radio communication apparatus 20 information relating to the channel state of an arbitrary frequency band. Further, the second radio communication apparatus 20 transmits information relating to the channel states for the specified frequency band, so that compared with a case in which information relating to the channel states for all frequency bands is transmitted, the radio resources required for channel state reports is reduced, and to this extent the radio resources which can be used in other data transmission are increased, so that throughput can be improved.

### Second Embodiment

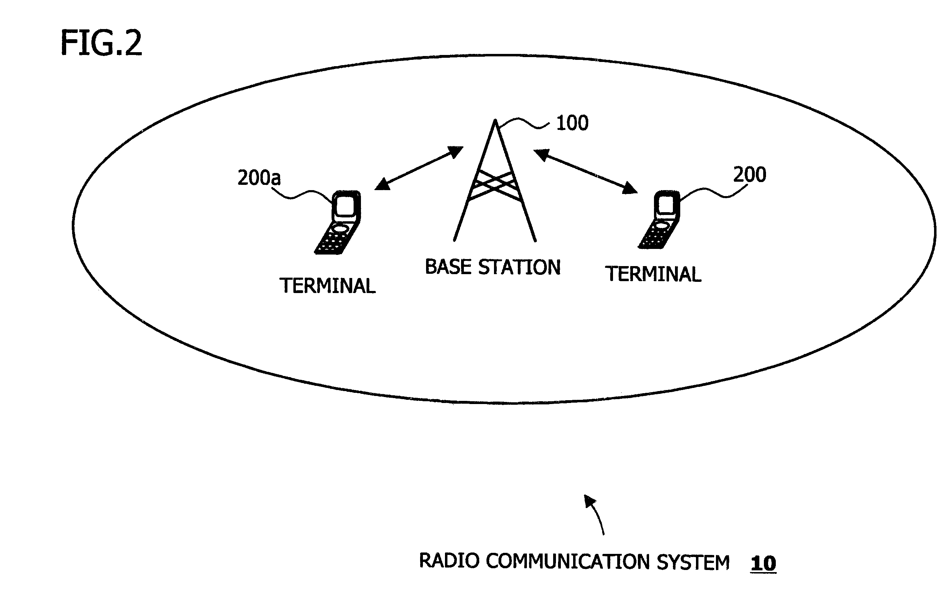

FIG. 2 illustrates an example of the configuration of the radio communication system of a second embodiment. The radio communication system includes a radio base station apparatus (hereafter "base station") 100, and terminal apparatuses (hereafter "terminals") 200 and 200a.

The base station 100 is a radio communication apparatus which performs radio communication with the terminals 200 and 200a. The base station 100 is connected to a wire higher-level network, and transfers data signal (hereafter "data") between the higher-level network and the terminals 200 and 200a. The base station 100 can use a plurality of (for example, five) frequency band, called component carriers (CCs), in radio communication. The base station 100 performs radio communication by using a portion of or all of the plurality of frequency bands. Using the plurality of frequency bands to perform radio communication, there is a case called "carrier aggregation".

The terminals 200 and 200a are radio communication apparatuses which are radio-connected to the base station 100 and perform radio communication, and may be, for example, portable telephone sets, portable information terminal apparatuses, or similar. The terminals 200 and 200a receive data from the base station 100, and transmit data to the base station 100. In this Description, the direction from the base station 100 to the terminals 200 and 200a is called the "downlink" (DL) direction, and the direction from the terminals 200 and 200a to the base station 100 is called the "uplink" (UL) direction.

The base station 100 is one example of the first radio communication apparatus 10 in the first embodiment, and the terminals 200 and 200a are examples of the second radio communication apparatus 20 in the first embodiment.

In the example of FIG. 2, an example of two terminals 200 and 200a is illustrated, but there may be three or more terminals, The two terminals 200 and 200a may both have the same configuration, and unless stipulated otherwise, the explanations are for the example of the terminal 200.

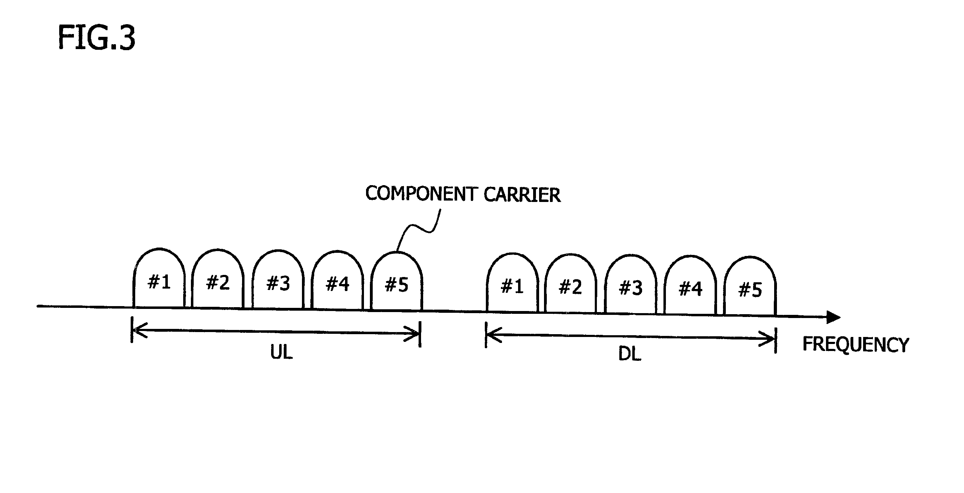

FIG. 3 illustrates an example of component carrier setting. When FDD is used in radio communications between the base station 100 and the terminal 200, for example five frequency bands, CC#1 to CC#5, are secured for each of DL and UL. When referring simply to a "CC", this may mean a combination of a frequency band for DL and a frequency band for UL. Further, when TDD (Time Division Duplex) is used in radio communications, for example five frequency bands are secured, without discriminating between those for DL and for UL. FIG. 3 illustrates the FDD case. Here an example is illustrated for a case in which the numbers of CCs are the same for DL and for UL, but cases are also possible in which the numbers of CCs for DL and for UL are not equal.

The base station 100 sets bandwidths of each of CC#1 to CC#5, taking into consideration the number of terminals planned for accommodation, communication speed and similar. As examples of the bandwidths of each of CC#1 to CC#5, for example 1.4 MHz, 5 MHz, 10 MHz, 15 MHz, 20 MHz, or similar are possible. The base station 100 may set all of CC#1 to CC#5 to the same frequency bandwidth, or may use different frequency bandwidths. Further, the base station 100 may perform radio communication by using an arbitrary number of CCs.

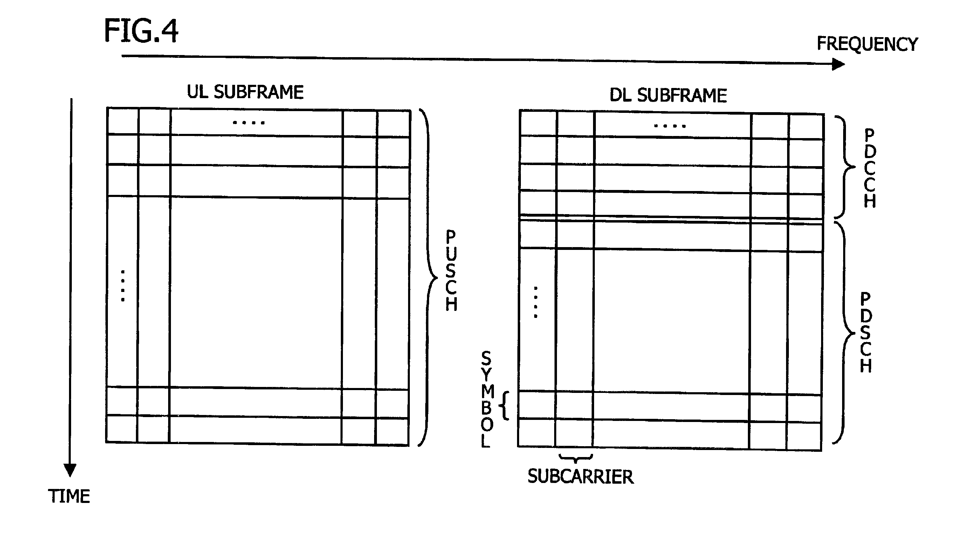

FIG. 4 illustrates an example of the configuration of a radio frame. Radio frames are transmitted and received between the base station 100 and terminal 200 in each CC. One radio frame includes a plurality of subframes (for example, 10 subframes).

A minimum unit of the radio frame in the frequency direction is a subcarrier, and the minimum unit in the time direction is a symbol. As multiple access method, for example, for UL subframe SC-FDMA (Single Carrier-Frequency Division Multiple Access), and for DL subframe, OFDMA (Orthogonal Frequency Division Multiple Access), are used.

The UL subframe includes an area (or radio resource) for an uplink physical shared channel (PUSCH). The PUSCH is a physical channel used for example by the base station 100 to transmit user data and control information. The base station 100 can allocate UL subframe to each terminal 200, and can set the PUSCH for a plurality of terminals 200 and 200a in one UL subframe.

The DL subframe includes areas (or radio resources) for a downlink physical control channel (PDCCH) and a downlink physical shared channel (PDSCH, Physical Downlink Shared CHannel). The PDCCH area is set for N symbols from the beginning of the DL subframe, and the PDSCH area is set for the remaining symbols continuing from the PDCCH.

The PDCCH is a physical channel used by the base station 100 to transmit L1/L2 (Layer 1/Layer 2) control signals to a terminal 200. Control signals (PDCCH signals) transmitted in the PDCCH include control signals relating to the PDSCH and PUSCH. PDCCH signals in the DCI format 0, described below, are an example of control signals relating for example to the PUSCH. Information indicated by control signals relating to the PUSCH includes, for example, information indicating radio resources, information specifying the data format such as modulation and encoding method (MCS: Modulation and Coding Scheme), information relating to uplink retransmission control by HARQ (Hybrid Automatic Repeat reQuest), and similar. Information indicated by control signals relating to the PDSCH includes, for example, information indicating PDSCH radio resource, information indicating the data format, information relating to downlink retransmission control, and similar. The terminal 200 can extract control signals relating to the PUSCH and PDSCH by monitoring the PDCCH area of a CC in which there is the possibility that control signals addressed to itself are transmitted.

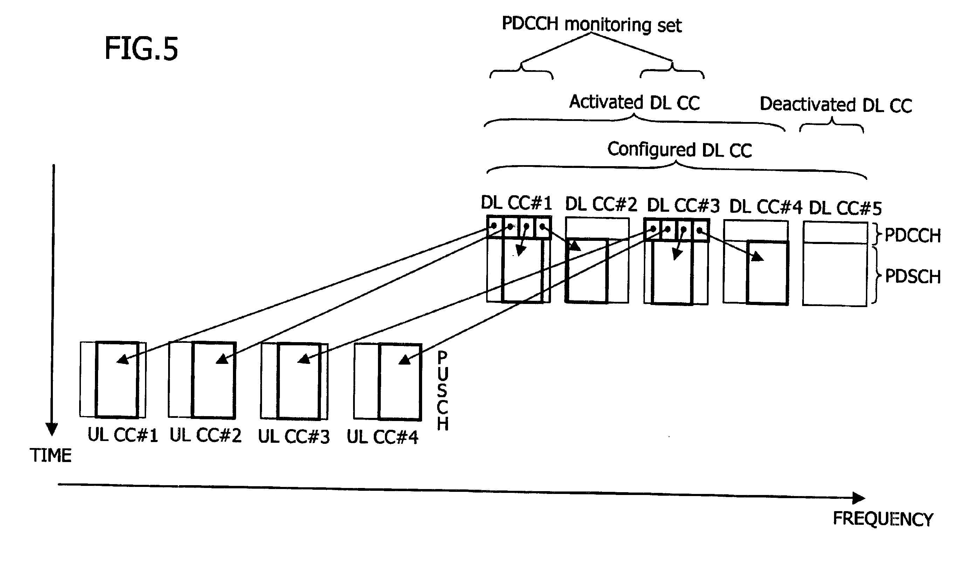

FIG. 5 illustrates an example of PDCCH, PDSCH and PUSCH settings. In this example, the base station 100 sets DLCC#1 and DLCC#3 as PDCCHs of the five DL (downlink-direction) CCs, CC#1 to CC#5. For example, the terminal 200 can receive PDCCH signals from the base station 100 in DLCC#1 and DLCC#3. In the PDCCH area of DLCC#1, a control signal indicating that the terminal performs transmission of data and similar in ULCC#1, and a control signal indicating that the terminal performs transmission of data and similar in ULCC#2, are set. Further, a control signal indicating that DLCC#1 is used to perform data reception, and a control signal indicating that DLCC#2 is used to perform data reception, are set.

In this way, in the PDCCH area, the base station 100 can transmit control signal relating to the physical channel CC different from the CC to which the PDCCH belongs. Such scheduling, there is a case called "cross-carrier scheduling". On the other hand, there is also scheduling called "same-carrier scheduling". Same-carrier scheduling is a scheduling in which, for example, the ULCC with the same number as the DLCC to which the PDCCH belong is used to transmit data and similar.

On the other hand, the base station 100 can set each of the states of CC#1 to CC#5 for each terminal 200. The terminal 200 performs radio reception processing for each CC based on the states of CC#1 to CC#5. The states of the CC can for example be classified into a "configured but deactivated CC", a "configured and activated CC", and a "PDCCH monitoring set".

The "configured but deactivated CC" is for example a CC in a state which is not currently used for data transmission, but which can be used (inactive state). The terminal 200 need not monitor the PDCCH or PDSCH for the inactive state DLCC. In the example of FIG. 5, DCLL#5 is in the inactive state, and the terminal 200 may halt reception processing of the radio frequency bandwidth.

The "configured and activated CC" is for example a CC in a state which is currently used for data communication (active state). In the example of FIG. 5, DLCC#1 to #4 are in the active state, and the terminal 200 perform reception processing for the self-addressed PDSCH at least in these frequency bandwidths.

The "PDCCH monitoring set" is for example an active state, and is the set of CCs for which PDCCHs addressed to the terminal 200 can be set. In the example of FIG. 5, this set includes the DLCC#1 and the DLCC#3. The terminal 200 monitors the PDCCH in this radio frequency band. "PDCCH monitoring set" can be defined as a subset of the "configured and activated CCs" subset, but there are cases in which the terminal 200 perform PDCCH reception processing in all the "configured and activated CCs". In this case, "PDCCH monitoring set" and "configured and activated CC" are taken to mean the same aggregate.

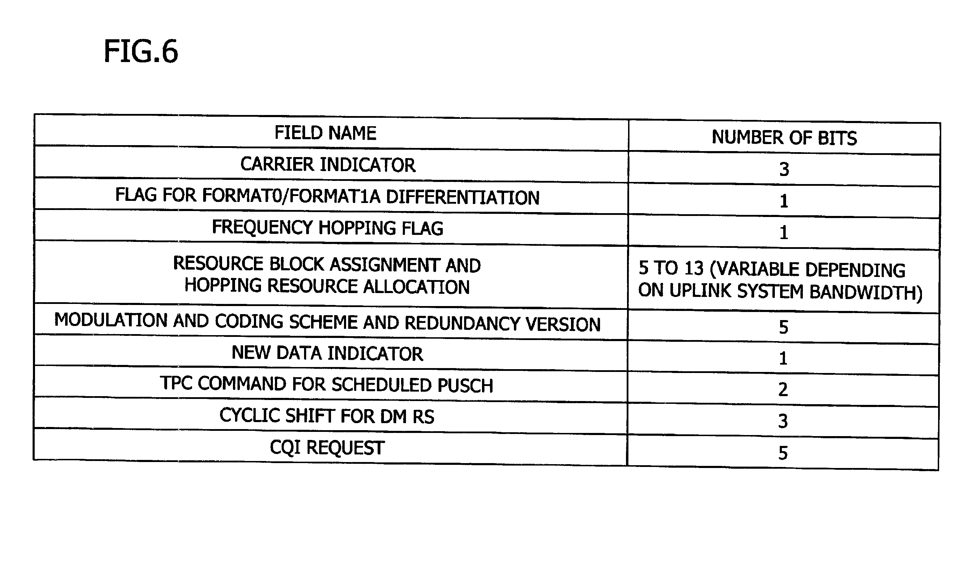

FIG. 6 illustrates an example of DCI format 0 parameter. As described above, the DCI format 0 control signal is transmitted in the PDCCH area from the base station 100 to the terminal 200, and include a control information for transmission of data and similar in the uplink. In the first embodiment, of the DCI format 0 parameters, "CQI request" (or a channel quality information request) has 5 bits for example, and using these 5 bits, CCs for which CCI reports are to be made are specified, of the DLCC#1 to #5.

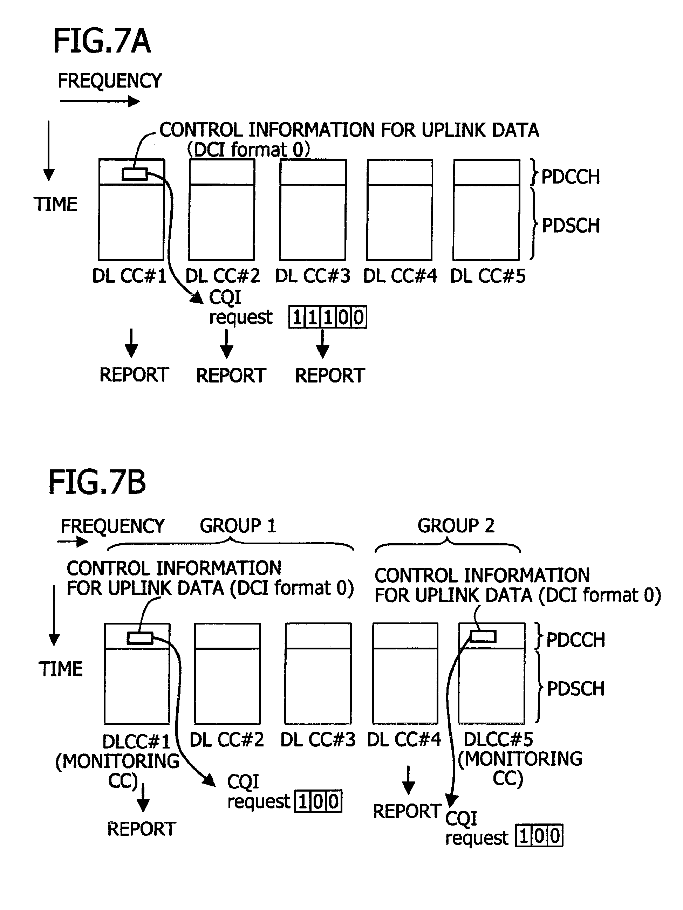

FIG. 7A illustrates an example of the relation between bits specified by "CQI request" and CC for which CSI report are to be made. When the base station 100 transmits "11100" as the "CQI request", the terminal 200 performs CSI reports for the CCs DLCC#1 to #3. In this way, the parameter value specified as the "CQI request" can specify not only one DLCC, but a combination of a plurality of DLCCs.

In cross-carrier scheduling, the terminal 200 transmits CSI using an ULCC specified by the "carrier indicator" of the DCI format 0.

In this way, the base station 100 can use the 5-bit "CQI request" to specify arbitrary DLCC and cause CSI report to be made, and in this way, can receive CSI for arbitrary DLCC from the terminal 200.

The number of bits in the "CQI request" may be other than 5 bits, and for example 8 bits or similar can be used, according to the number of DLCCs.

An example is explained of the DCI format 0 as the DCI format including "CQI request" as the parameter; but any format may be used, so long as the control signal format includes "CQI request".

Further, when the base station 100 uses the "CQI request" to specify the CSI for which the CSI report is to be made, and the terminal 200 generates and transmits to the base station 100 the CSI for the specified DLCC, this report is for example an "aperiodic" CSI report. In the case of a periodic report, report is periodically generated and transmitted by the terminal 200 for a DLCC initially set or similar by the base station 100; in such a state, when the base station 100 specifies the DLCC and causes CSI report to be made, the report is for example "aperiodic".

The above is similarly true for the embodiments below which include the second embodiment.

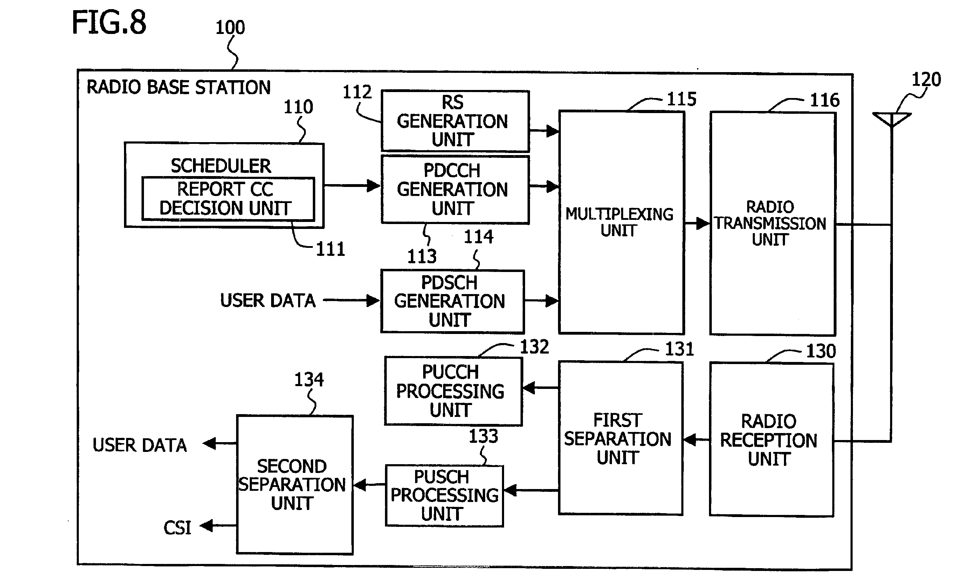

FIG. 8 illustrates an example of the configuration of the base station 100 in the second embodiment. The base station 100 includes a scheduler 110, RS generation unit 112, PDCCH generation unit 113, PDSCH generation unit 114, multiplexing unit 115, radio transmission unit 116, antenna 120, radio reception unit 130, first separation unit 131, PUCCH processing unit 132, PUSCH processing unit 133, and second separation unit 134. The scheduler 110 inclueds a report CC decision unit 111.

The scheduler 110, report CC decision unit 111, RS generation unit 112, PDCCH generation unit 113, PDSCH generation unit 114, multiplexing unit 115, and radio transmission unit 116 correspond for example to the transmission unit 11 in the first embodiment. The radio reception unit 130, first separation unit 131, PUCCH processing unit 132, PUSCH processing unit 133, and second separation unit 134 correspond for example to the reception unit 12 in the first embodiment.

The scheduler 110 manages allocation of DL radio resource and UL radio resource. That is, when user data addressed to the terminal 200 arrives in the buffer of the base station 100, the scheduler 110 allocates the DL radio resource to the terminal 200. Further, the scheduler 110 detects the quantity of user data that the terminal 200 is to transmit from control information acquired from the PUSCH processing unit 133, for example, and allocates the UL radio resource to the terminal 200. The scheduler 110 outputs the scheduling result to the PDCCH generation unit 113.

The report CC decision unit 111 decides the DLCC for which there is to be CSI report from the plurality of DLCCs. The scheduler 110 creates DCI format 0 control information in which the corresponding bit in the "CQI request" is set to "1" to generate a report for the DLCC thus decided, and outputs the control information to the PDCCH generation unit 113.

The RS generation unit 112 generates and outputs to the multiplexing unit 115 a reference signal (RS). The reference signal is a signal used when a terminal 200 generates CSI, for example.

The PDCCH generation unit 113 generates control information for downlink data (or control information relating to the PDSCH) based on the scheduling result. The PDCCH generation unit 113 generates control information for uplink data (or control information related to the PUSCH) based on the scheduling results and DCI format 0 control information. The PDCCH generation unit 113 performs error correction encoding of the generated control information, and generates and outputs to the multiplexing unit 115 a PDCCH signal.

The PDSCH generation unit 114 reads user data stored in a buffer and addressed to the terminal 200, performs error correction encoding of the read-out user data, and generates and outputs to the multiplexing unit 115 a PDSCH signal.

The multiplexing unit 115 multiplexes the reference signal, the PDCCH signal (control signal), and the PDSCH signal (data signal). The multiplexing unit 115 outputs the multiplexed reference signal and similar to the radio transmission unit 116.

The radio transmission unit 116 up-converts the multiplexed signal to a radio signal by frequency conversion and similar, and outputs the signal to the antenna 120.

The antenna 120 performs radio transmission to the terminal 200 radio signal output from the radio transmission unit 116. The antenna 120 receives radio signal transmitted from the terminal 200, and outputs the signal to the radio reception unit 130. In the example illustrated in FIG. 8, there is one antenna 120, used for both transmission and reception; however, a plurality of antennas may be used separately for transmission and for reception.

The radio reception unit 130 down-converts radio signal received by the antenna 120 by frequency conversion and similar, converts the radio signal into baseband signal, and outputs to the first separation unit 131.

The first separation unit 131 extracts the PUCCH signal and PUSCH signal from the baseband signal, outputs the PUCCH signal to the PUCCH processing unit 132, and outputs the PUSCH signal to the PUSCH processing unit 133. For example, the first separation unit 131 references the UL radio resource of which the base station 100 notified to the terminal 200 by the PDCCH, and extracts the PUCCH signal or PUSCH signal.

The PUCCH processing unit 132 performs error correction decoding of PUCCH signal, and extracts control information relating to the PUCCH from PUCCH signal. For example, the PUCCH processing unit 132 performs error correction decoding and other processing corresponding to the encoding method stipulated in advance between the base station 100 and the terminal 200.

The PUSCH processing unit 133 performs error correction decoding of PUSCH signal, extracts user data and CSI from PUSCH signal, and outputs the user data and CSI to the second separation unit 134.

The second separation unit 134 separates and outputs user data and CSI.

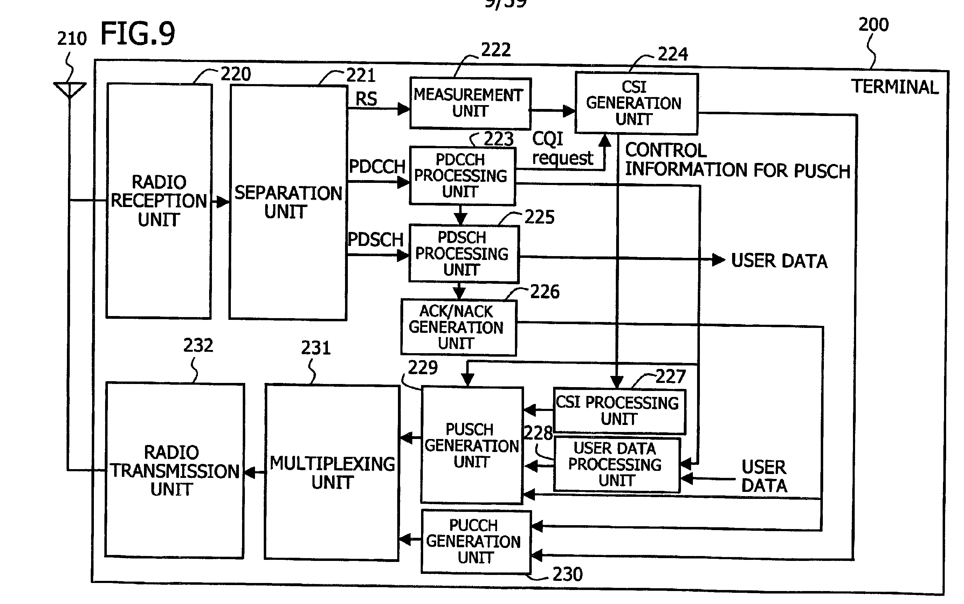

FIG. 9 illustrates an example of the configuration of the terminal 200. The terminal 200 includes an antenna 210, radio reception unit 220, separation unit 221, measurement unit 222, CSI generation unit 224, PDCCH processing unit 223, PDSCH processing unit 225, ACK/NACK generation unit 226, CSI processing unit 227, user data processing unit 228, PUSCH generation unit 229, PUCCH generation unit 230, multiplexing unit 231, and radio transmission unit 232. The terminal 200a is configured similarly to the terminal 200.

The radio reception unit 220, separation unit 221, PDCCH processing unit 223, and PDSCH processing unit 225 correspond for example to the reception unit 21 in the first embodiment. The CSI generation unit 224, CSI processing unit 227, user data processing unit 228, PUSCH generation unit 229, PUCCH generation unit 230, multiplexing unit 231 and radio transmission unit 232 correspond for example to the transmission unit 22 in the first embodiment.

The antenna 210 receives radio signal transmitted from the base station 100 and outputs the radio signal to the radio reception unit 220. The antenna 210 also transmits radio signal output from the radio transmission unit 232 to the base station 100. In the example illustrated in FIG. 9, one antenna 210 is used for both transmission and reception, however a plurality of antennas may be used separately for transmission and for reception.

The radio reception unit 220 down-converts radio signal by frequency conversion and similar, converting radio signal into baseband signal, and outputs the converted baseband signal to the separation unit 221.

The separation unit 221 extracts RS signal, PDCCH signal, and PDSCH signal from baseband signal, and outputs RS signal to the measurement unit 222, outputs PDCCH signal to the PDCCH processing unit 223, and outputs PDSCH signal to the PDSCH processing unit 225. For example, the separation unit 221 receives transmitted signal by a PCFICH (Physical Control Format Indicator CHannel). The PCFICH includes information indicating for example the number of symbols (1, 2 or 3) to which PDCCH signal is mapped, and the separation unit 221 can separate PDCCH signal by removing the number of symbols from the beginning of DL subframe. The separation unit 221 can then extract the PDSCH signal from the remaining symbols following the PDCCH signal. Because for example the RS signal is disposed in a predetermined radio resource, the separation unit 221 can use resource information held in advance to separate the RS signal from the baseband signal.

The measurement unit 222 measures downlink channel reception quality and other parameters of the channel state based on the RS signal output from the separation unit 221, and outputs measurement value to the CSI generation unit 224. At this time, the measurement unit 222 also outputs information indicating for which DLCC, of a plurality of DLCCs, the measurement values is made. For example, the measurement unit 222 holds, as setting information, information indicating to which frequency bands DLCC#1 to CC#5 belong. Based on the setting information, the measurement unit 222 can then output information indicating for which DLCC measurement is made, from the reception frequency band of the measured RS signal.

The PDCCH processing unit 223 performs error correction decoding of PDCCH signal output from the separation unit 221 which may be addressed to itself, and extracts control signal addressed to itself. As explained above, the information indicated by control signal includes control information relating to the PDSCH, and the control information relating to the PUSCH. The Control information relating to the PUSCH (for example DCI format 0) includes for example the "CQI request" specifying CC for which CSI report is to be made. From the extracted control signal, the PDCCH processing unit 223 outputs to the PDSCH processing unit 225 the control information relating to the PDSCH, and outputs to the user data processing unit 228 the control information relating to the PUSCH. The PDCCH processing unit 223 outputs the extracted "CQI request" to the CSI generation unit 224.

The CSI generation unit 224 generates CSI for DLCC indicated by the "CQI request" of the measurement values measured by the measurement unit 222. For example, the CSI generation unit 224 takes as input measurement value from the measurement unit 222 and information indicating which DLCC the channel states describe; of these, the CSI is generated for the channel state of the DLCC indicated by the "CQI request" and is output to the CSI processing unit 227.

The CSI may for example include a CQI (Channel Quality Indicator), PMI (Precoding Matrix Indicator), RI (Rank Indicator), and similar. The CSI generation unit 224 outputs as the CSI any of these, or a combination thereof. The CQI is information indicating the reception quality of a radio channel, for example (in this example, a downlink radio channel), and the PMI is an index associated with a precoding matrix used for example by the base station 100. The RI is for example the maximum number of streams which can be transmitted in parallel.

The CSI generation unit 224 periodically generates a CSI for DLCC other than specified DLCC, and outputs the generated CSI to the PUCCH generation unit 230.

The PDSCH processing unit 225 references control information relating to the PDSCH output from the PDCCH processing unit 223, and performs error correction decoding of the PDSCH signal. By this means, user data and similar transmitted from the base station 100 and addressed to the terminal 200 is extracted. Further, the PDSCH processing unit 225 outputs a signal indicating whether the PDSCH signal is received normally (or whether user data or similar is extracted normally, or similar) to the ACK/NACK generation unit 226.

Upon input of the signal from the PDSCH processing unit 225 indicating that the PDSCH signal is received normally, the ACK/NACK generation unit 226 generates an ACK signal, and upon input of a signal indicating that a PDSCH signal is not received normally, the ACK/NACK generation unit 226 generates a NACK signal. The ACK/NACK generation unit 226 outputs the generated ACK signal or NACK signal to the PUCCH generation unit 230.

The CSI processing unit 227 performs error correction encoding and similar of the CSI output from the CSI generation unit 224, and outputs the result to the PUSCH generation unit 229.

The user data processing unit 228 references control information relating to the PUSCH output from the PDCCH processing unit 223, performs error correction encoding, modulation and other processing of the user data, and outputs the result to the PUSCH generation unit 229.

The PUSCH generation unit 229 references control information relating to the PUSCH output from the PDCCH processing unit 223, and outputs, as PUSCH signal to be transmitted using the PUSCH, each of the output signals from the CSI processing unit 227, the user data processing unit 228, and the ACK/NACK generation unit 226. The PUSCH generation unit 229 outputs PUSCH signal to the multiplexing unit 231.

The PUCCH generation unit 230 inputs the output from the ACK/NACK generation unit 226 and the CSI output from the CSI generation unit 224 which is to be reported periodically, and outputs these as the PUCCH signal to be transmitted using the PUCCH. The PUCCH generation unit 230 outputs the PUCCH signal to the multiplexing unit 231.

The multiplexing unit 231 multiplexes the PUSCH signal and PUCCH signal, and outputs the result to the radio transmission unit 232.

The radio transmission unit 232 performs frequency conversion and other processing to up-convert the multiplexed PUSCH signal and PUCCH signal to the radio signal, which is output to the antenna 210.

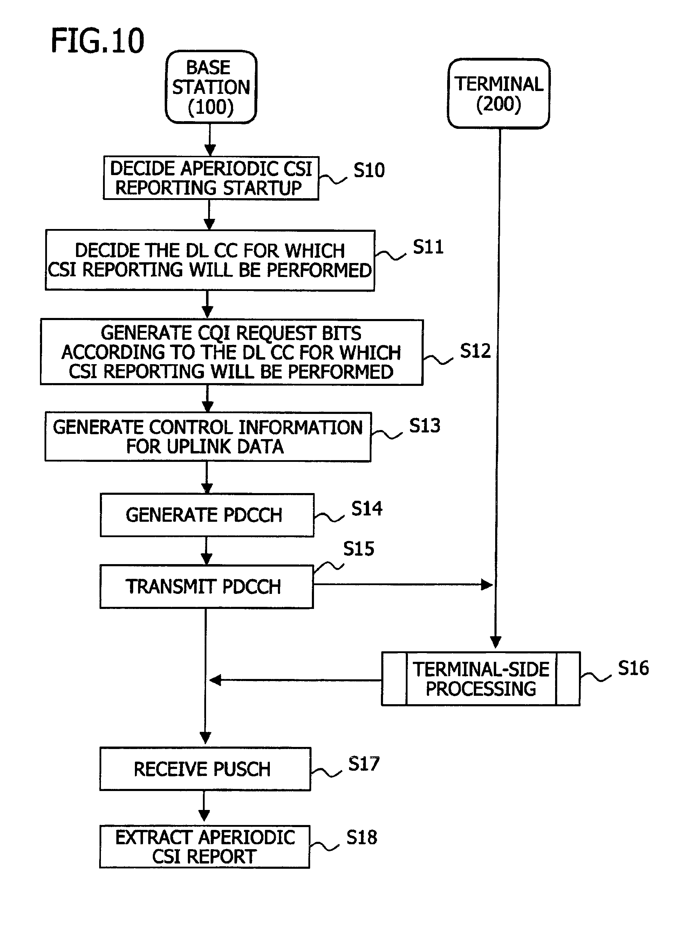

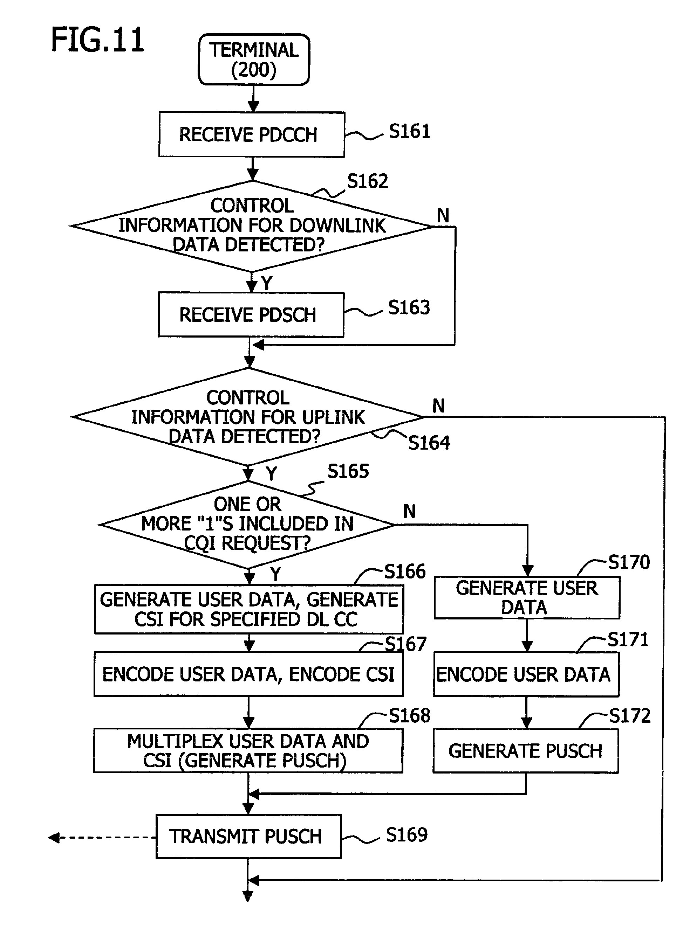

Next, an example of operation of the second embodiment is explained. FIG. 10 and FIG. 11 are flowcharts illustrating an example of operation. Below, the operation example illustrated in FIG. 10 and FIG. 11 is explained in the order of the step numbers.

Firstly, the base station 100 decides on startup of aperiodic CSI reporting, and decides for which DL CC CSI reports is to be made (S10, S11). For example, the base station 100 starts aperiodic CSI reporting when for example a large quantity of downlink data is arrived, or when some other condition is satisfied, and the report CC decision unit 111 decides for which CCs CSI reports is to be made.

Next, the base station 100 generates "CQI request" bit according to the DC CC for which CSI report is to be made (S12). For example, when the report CC decision unit 111 causes CSI report to be made for the DLCCs from DLCC#1 to #3, the scheduler 110 generates the "CQI request" bits "11100".

Next, the base station 100 generates the control information for uplink data (S13). For example, the scheduler 110 generates the control information for uplink data (for example DCI format 0 control information) including the generated "CQI request" bits.

Next, the base station 100 generates the PDCCH signal (S14). For example, the PDCCH generation unit 113 generates the PDCCH signal (control signal) from control information for uplink data generated by the scheduler 110.

Next, the base station 100 transmits the PDCCH signal to the terminal 200 (S15). For example, the radio transmission unit 116 converts to the radio signal and transmits the PDCCH signal generated by the PDCCH generation unit 113.

Next, the terminal 200 performs terminal-side processing (S16). FIG. 11 is a flowchart illustrating an example of operation for terminal-side processing.

The terminal 200 receives the PDCCH signal (S161). For example, the separation unit 221 separates the PDCCH signal and outputs the PDCCH signal to the PDCCH processing unit 223, and the PDCCH processing unit 223 retrieves control information for downlink data (control information relating to the PDSCH) and uplink data control information (control information relating to the PUSCH) from the PDCCH signal.

Next, the terminal 200 determines whether the PDCCH signal includes, as control information, control information for downlink data (S162). There is also case in which the PDCCH signal includes, as control information for downlink data, control information related to the PDSCH. On the other hand, the signal length of the PDCCH signal is different for control information relating to the PUSCH and for control information relating to the PDSCH. For example, the PDCCH processing unit 223 can judge from the signal length of the PDCCH signal whether control information related to the PDSCH is included. Or, a Flag for format 0/format 1A differentiation included in the PDCCH signal can be used to discriminate between control information relating to the PDSCH and control information relating to the PUSCH.

Upon determining that the PDCCH signal includes the control information for downlink data ("Y" in S162), the terminal 200 receives the PDSCH signal (S163). For example, the separation unit 221 separates the PDSCH signal and outputs the PDSCH signal to the PDSCH processing unit 225, and the PDSCH processing unit 225 references control information relating to the PDSCH output from the PDCCH processing unit 223 and decodes the PDSCH signal.

The terminal 200, after receiving the PDSCH signal (S163), or upon judging that control information for downlink data is not included ("N" in S162), determines whether control information for uplink data is detected (S164). For example, the PDCCH processing unit 223 can detect control information for uplink data from the signal length of the PDCCH signal. Or, a Flag for format 0/format 1A differentiation included in the PDCCH signal can be used to discriminate between control information relating to the PDSCH and control information relating to the PUSCH. This control information for uplink data includes the "CQI request", and is for example DCI format 0 control information.

When the control information for uplink data cannot be detected ("N" in S164), the terminal 200 does not receive the control information to transmit user data and similar on the uplink, and so the series of processing ends without performing this transmission.

On the other hand, upon determining that control information for uplink data is detected ("Y" in S164), the terminal 200 detects whether one or more "1"'s is included in the "CQI request" included in the control information for uplink data (S165). For example, the PDCCH processing unit 223 can perform detection by referencing the "CQI request" bits in the DCI format 0.

When one or more "1" is included in the "CQI request" ("Y" in S165), the terminal 200 generates CSI for the DLCC specified by the "CQI request" (S166). For example, the CSI generation unit 224 generates CSI for the DLCC corresponding to the "CQI request" output from the PDCCH processing unit 223. At this time, if there is user data to be transmitted, the terminal 200 also generates the user data.

Next, the terminal 200 encodes the generated CSI and user data (S167). For example, the CSI processing unit 227 references the control information relating to the PUSCH and performs error correction encoding of the CSI, and the user data processing unit 228 references the control information relating to the PUSCH and performs error correction encoding of user data.

Next, the terminal 200 multiplexes the CSI and user data and generates the PUSCH signal (S168). For example, the PUSCH generation unit 229 multiplexes the CSI and user data, and generates the PUSCH signal to be transmitted using the PUSCH.

Next, the terminal 200 transmits the generated PUSCH signal to the base station 100 (S169). For example, the terminal 200 uses the UL CC specified by the "carrier indicator" of the DCI format 0 to transmit the CSI after the time of four subframes.

On the other hand, when one or more "1" is not included in the detected "CQI request" ("N" in S165), the terminal 200 performs user data generation (S170). In this case, the base station 100 is not specifying the DLCC for aperiodic reporting, and thus the terminal 200 does not perform aperiodic CSI reporting. The terminal 200 performs user data generation and similar according to control information for uplink data.

That is, the terminal 200 encodes the generated user data and generates a PUSCH signal (S171, S172). For example, the user data processing unit 228 references the control information for uplink data (for example DCI format 0 control information) output from the PDCCH processing unit 223, and performs error correction encoding and similar of the user data.

Returning to FIG. 10, the base station 100 receives the PUSCH signal transmitted from the terminal 200 (S17), and when CSI is included in the PUSCH signal, extracts the CSI (S18). For example, the PUSCH processing unit 133 performs error correction decoding of the PUSCH signal and extracts the CSI transmitted as a PUSCH signal, and the second separation unit 134 separates the user data and CSI to extract the CSI. By this means, the base station 100 can receive the CSI for the specified DLCCs.

In this way, in the second embodiment the base station 100 can use the control information for uplink data, such as for example the "CQI request" of DCI format 0, to specify arbitrary DLCCs for which CSI reports are to be made. Hence the base station 100 can cause the terminal 200 to report information relating to the channel states for arbitrary bandwidths. Further, the terminal 200 transmits the CSI for the specified DLCC, so that compared with a case in which the CSI is transmitted for all DLCCs, throughput can be improved.

As another example in the second embodiment, for example DLCC can be grouped, and the 5-bit "CQI request" can for example be reduced to 3 bits. FIG. 7B illustrates an example of grouping. For example, when 3 bits can be transmitted as the "CQI request", one group is grouped as a maximum 3 CCs, and within one group a plurality of DLCCs for CSI report can be specified. In this case, the base station 100 may transmit the "CQI request" specifying DLCC for the CSI report through the DLCC included in the "PDCCH monitoring set". Or, the base station 100 can perform transmission through at least one of the DLCCs in the group. In this case also, the base station 100 uses at least one of the plurality of DLCCs, and by transmitting at least one control information item for uplink data including a 5-bit "CQI request", can cause CSI report for the specified DLCC.

### Third Embodiment

Next, a third embodiment is explained. Differences with the second embodiment are mainly explained, and explanation of similar matter is omitted. The third embodiment is an example in which the "CQI request" is added to the control information for downlink data (for example, DCI formats 1, 1A, 1B, 1C, 1D, 2, 2A, 2B).

First, the DCI format is explained. A Format for the PDCCH signal include DCI formats 1, 1A and similar. These DCI formats are used selectively according to the control signal application. Examples are cited below.

(0) DCI format 0 is used for example in PUSCH scheduling, as explained in the second embodiment.

(1) DCI format 1 is for example used in normal PDSCH scheduling. In DCI format 1, discontinuous radio resource can also be specified.

(1A) DCI format 1A is used in compact PDSCH scheduling. Compact scheduling is a scheduling method in which, for example, continuous radio resource is specified by a starting position and size. DCI format 1A is also used for random access startup.

(1B) DCI format 1B is used for compact PDSCH scheduling when providing notification including precoding information.

(1C) DCI format 1C is used in compact PDSCH scheduling such that notification information is further decreased compared with DCI format 1A.

(1D) DCI format 1D is used in compact PDSCH scheduling when notification includes both precoding information and power offset information.

(2) DCI format 2 is used in PDSCH scheduling when executing MIMO under closed-loop control (closed-loop MIMO (Multiple Input Multiple Output)).

(2A) DCI format 2A is used in PDSCH scheduling when executing MIMO under open-loop control (open-loop MIMO).

(2B) DCI format 2B is used in PDSCH scheduling when executing dual layer transmission.

Thus each of the DCI formats 1 to 2B is the control information used in PDSCH scheduling.

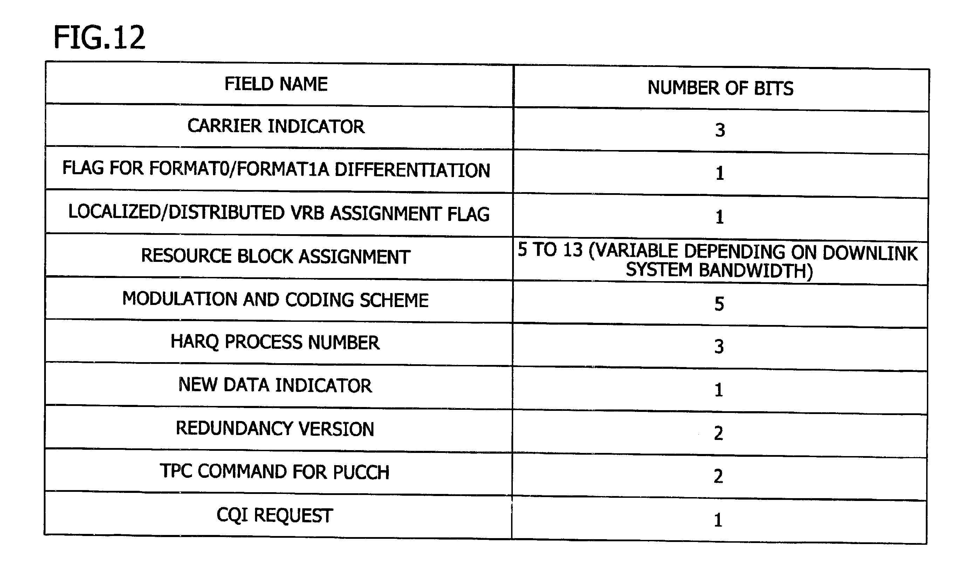

FIG. 12 illustrates an example of DCI format 1 parameters. As illustrated in FIG. 12, in the third embodiment, 1 bit is further added to the "CQI request" as a parameter of the control information for downlink data (for example DCI format 1), indicating whether aperiodic CSI report is made.

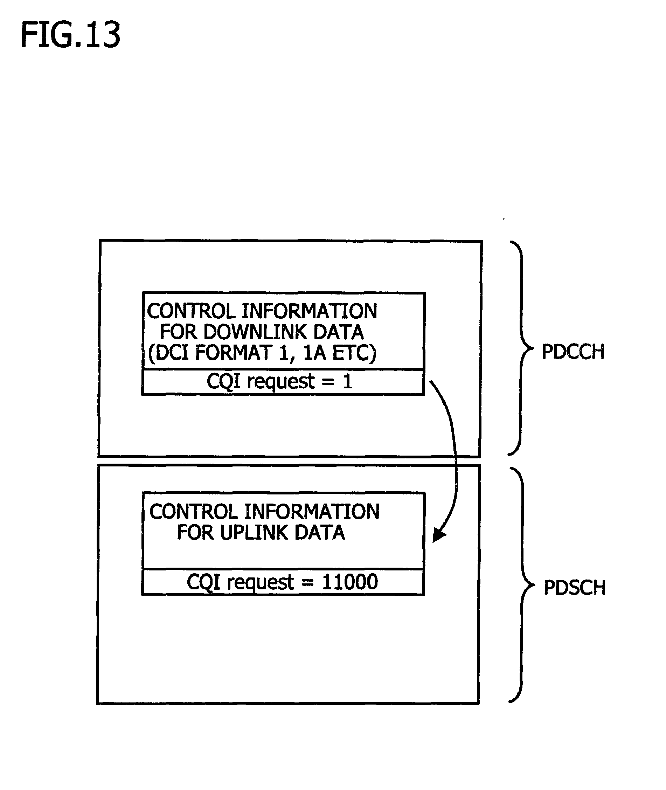

FIG. 13 illustrates an example of PDCCH and PDSCH settings. In the third embodiment, the base station 100 requests that the terminal 200 perform aperiodic CSI report by setting the "CQI request" to "1" in the control information for downlink data to which the "CQI request" is added. The base station 100 transmits the control information for uplink data explained in the second embodiment (for example, DCI format 0 in FIG. 6) to the terminal 200 as the PDSCH signal. When the "CQI request" of the control information for downlink data is "1", the terminal 200 receives the PDSCH signal and extracts for example the 5-bit "CQI request" (hereafter called the "detailed CQI request") from the control information for uplink data. The terminal 200 generates the CSI for the DLCC specified by the detailed CQI request.

The control information for uplink data transmitted as the PDSCH signal becomes, for example, control information when the terminal 200 transmits the CSI for the specified DLCC.

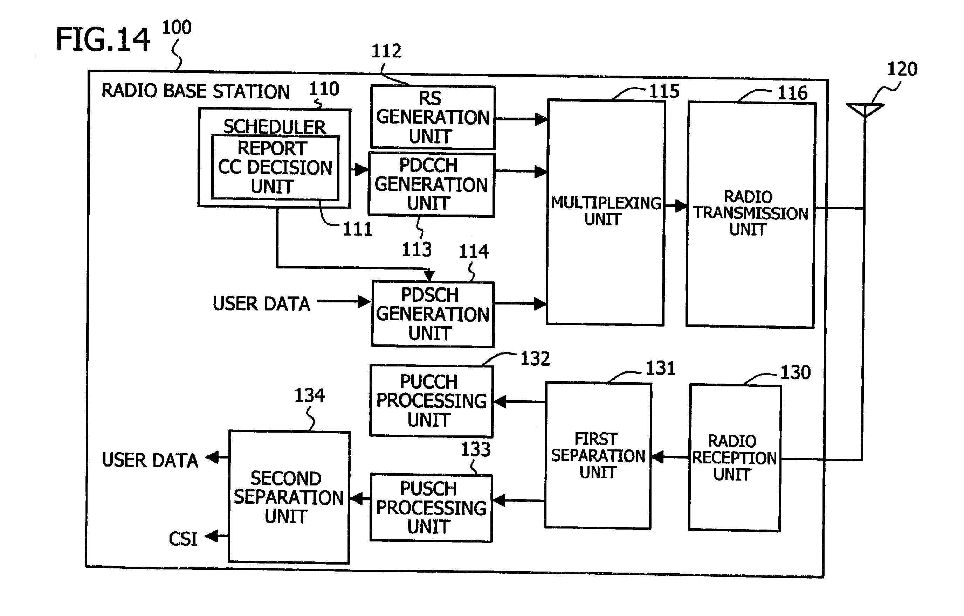

FIG. 14 illustrates an example of the configuration of the base station 100 in the third embodiment. The scheduler 110 generates parameter value of the detailed CQI request corresponding to the DL CC decided by the report CC decision unit 111, and generates the control information for uplink data (PUSCH) explained in the first embodiment (for example, the control information of DCI format 0 (for example FIG. 6)). The scheduler 110 outputs the generated DCI format 0 control information to the PDSCH generation unit 114. The PDSCH generation unit 114 outputs the DCI format 0 control information to the multiplexing unit 115 as the PDSCH signal.

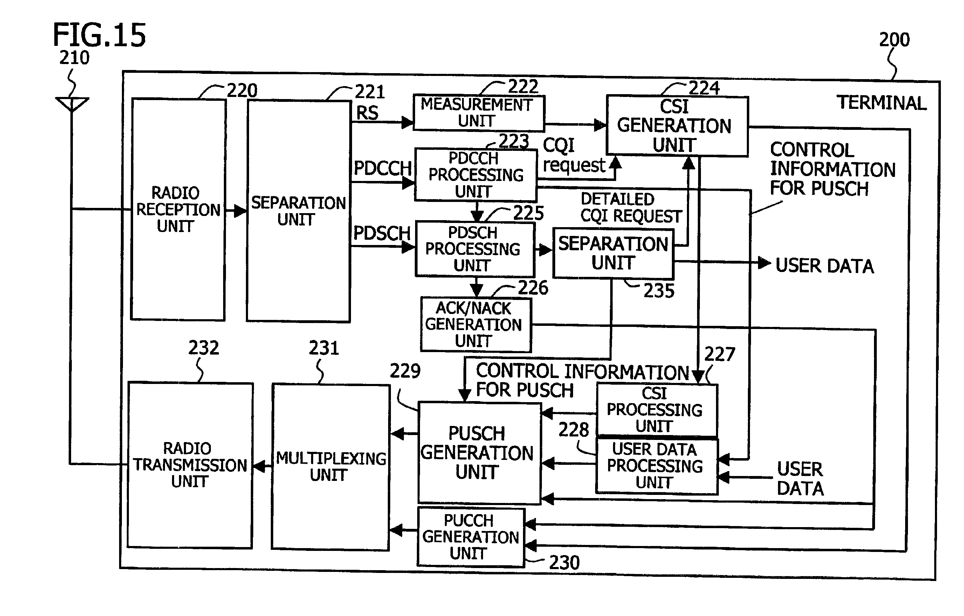

FIG. 15 illustrates an example of the configuration of the terminal 200 in the third embodiment. The terminal 200 further includes a separation unit 235. The separation unit 235 includes for example the reception unit 21 in the first embodiment.

The separation unit 235 separates the user data and control information for uplink data (for example DCI format 0 control information) output from the PDSCH processing unit 225, and separates the DCI format 0 control information into a detailed CQI request parameter value, and other control information. The separation unit 235 outputs the detailed CQI request to the CSI generation unit 224, and outputs the DCI format 0 control information other than the detailed CQI request to the PUSCH generation unit 229.

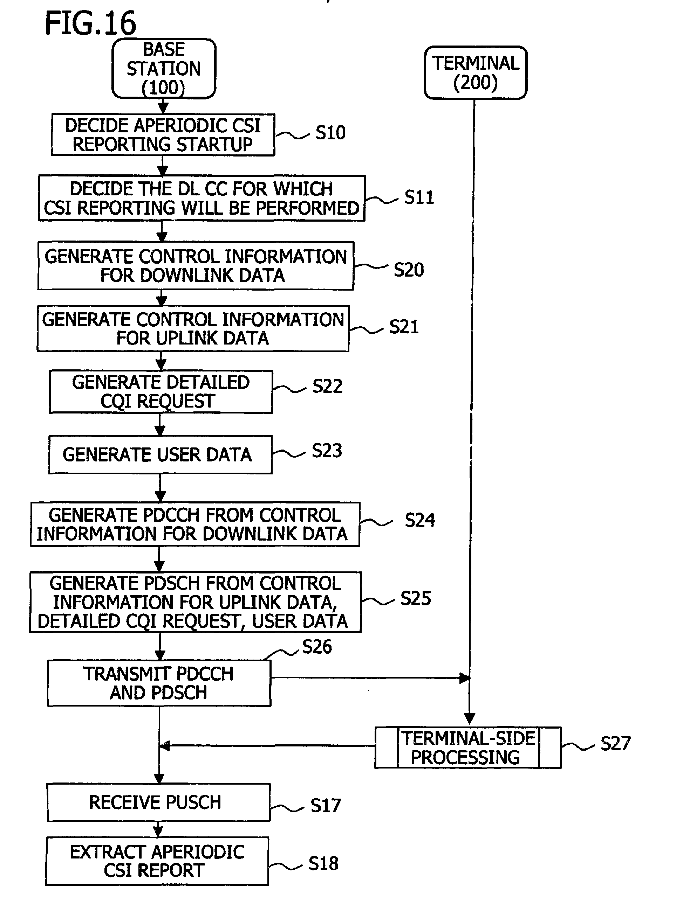

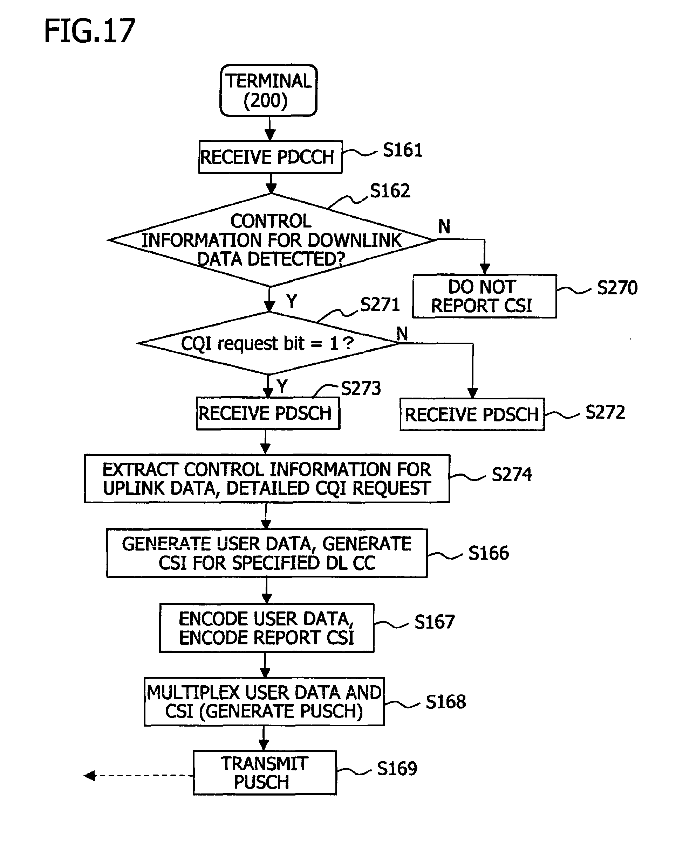

Next, an example of operation in the third embodiment is explained. FIG. 16 and FIG. 17 are flowcharts illustrating an operation example. Below, the operation example of FIG. 16 and FIG. 17 is explained in the order of the step numbers, but an explanation of portions similar to the second embodiment is omitted.

The base station 100, upon deciding for which DLCC CSI report is to be made (S11), generates the control information for downlink data (S20). For example, the scheduler 110 generates the control information relating to the PDSCH, such as for example DCI format 1 and 1A or other control information. At this time, the scheduler 110 generates the control information in which the added "CQI request" bit is set to "1".

Next, the base station 100 generates the control information for uplink data (S21). For example, the scheduler 110 generates the control information included in DCI format 0 (for example FIG. 6) to cause CSI reporting.

Next, the base station 100 generates the parameter value of the detailed CQI request (S22). For example, the scheduler 110 generates the parameter value ("11100" or similar) corresponding to the CCs decided upon by the report CC decision unit 111. By this means, the base station 100 can specify the DLCC for which CSI report is to be made.

Next, the base station 100 generates user data (S23). For example, the generated user data is input to the PDSCH generation unit 114.

Next, the base station 100 generates the PDCCH signal from the control information for downlink data (S24). For example, the PDCCH generation unit 113 generates the PDCCH signal for the DCI format 1 or other control information output from the scheduler 110.

Next, the base station 100 generates the PDSCH signal from the control information for uplink data, detailed CQI request, and user data (S25). For example, the PDSCH generation unit 114 generates the PDSCH signal for DCI format 0 the control information output from the scheduler 110 and user data output from a higher-order apparatus.

Next, the base station 100 transmits the PDCCH signal and the PDSCH signal to the terminal 200 (S26).

The terminal 200 performs terminal-side processing of these signals (S27). FIG. 17 is a flowchart illustrating an example of terminal-side processing.

When the control information for downlink data is not included in the received PDCCH signal ("N" in S162), no DCI format 1, 1A or other control information (for example FIG. 12) is received, and the terminal 200 does not perform CSI reporting (S270).

On the other hand, when the control information for downlink data is received ("Y" in S162), the terminal 200 references the "CQI request" bit of the control information and determines whether the bit is "1" (S271). For example, the DCI format 1, 1A or other control information extracted by the PDCCH processing unit 223 is referenced, and a determination is made as to whether the "CQI request" bit is "1".

If the bit is not "1" ("N" in S271), the terminal 200 does not perform CSI reporting, but references the control information for downlink data and receives the PDSCH signal (S272). If the "CQI request" bit is not "1", the base station 100 does not specified that CSI reporting be performed non-periodically, and thus the terminal 200 does not perform aperiodic CSI reporting. However, the terminal 200 receives the control information for downlink data, and so receives the PDSCH signal accordingly. For example, the PDSCH processing unit 225 references the control information for downlink data output from the PDCCH processing unit 223 and decodes the PDSCH signal.

On the other hand, if the "CQI request" of the control information for downlink data is "1" ("Y" in S271), the terminal 200 references the control information for downlink data and receives the PDSCH signal (S273), and extracts the DCI format 0 control information included in the PDSCH signal (S274). For example, the PDSCH processing unit 225 extracts the DCI format 0 control information from the PDSCH signal and outputs the DCI format 0 control information to the separation unit 235. Of the DCI format 0 control information, the separation unit 235 outputs the detailed CQI request parameter value to the CSI generation unit 224, and outputs the other parameter value to the PUSCH generation unit 229.

Thereafter, the CSI generation unit 224 generates CSI for DLCC specified by the detailed CQI request (S166), and the terminal 200 transmits the CSI for the specified DLCC to the base station 100 (S167 to S169, S17, S18).

Thus, in the third embodiment also, the information (the detailed CQI request) specifying for which DLCC the CSI is to be reported is transmitted to the terminal 200 by the PDSCH signal. Hence, in the third embodiment also, the base station 100 causes the terminal 200 to report information relating to the channel state for arbitrary frequency band. Further, compared with a case in which the terminal 200 transmits CSI for all CCs, the terminal 200 transmits CSI for the specified DL CC, so that throughput can be improved.

In the operation example of the third embodiment (FIG. 16), the order of generation of control information for downlink data and control information for uplink data (S20, S21) may be reversed. Further, the order of generation of the PDCCH and generation of the PDSCH (S24, S25) may also be reversed.

### Fourth Embodiment

Next, a fourth embodiment is explained. Differences with the second and third embodiments are mainly explained, and explanation of similar matter is omitted. The fourth embodiment is an example in which, when requesting aperiodic CSI report, interpretation of the control information for uplink data (for example DCI format 0) is changed.

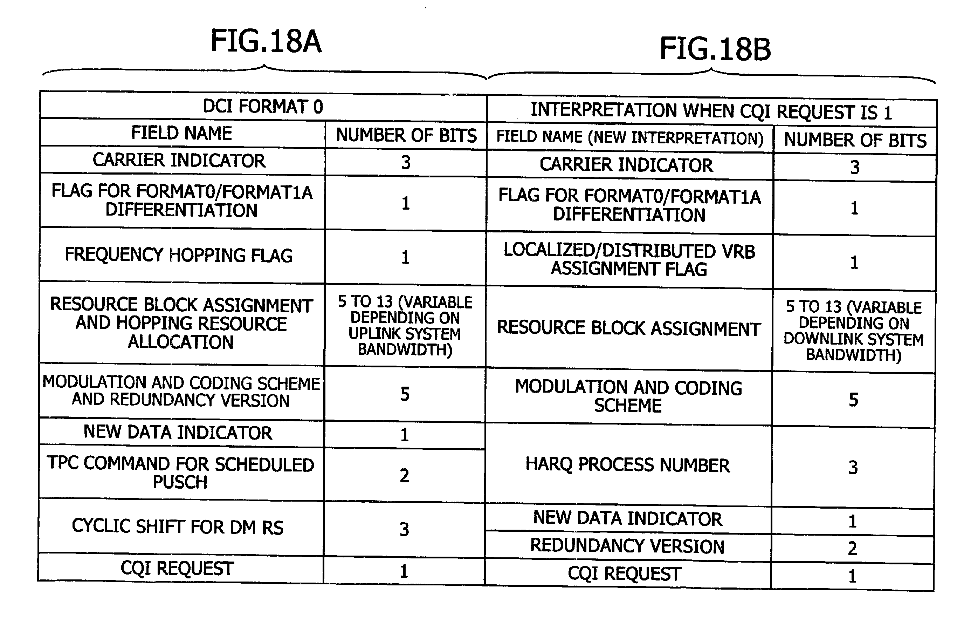

FIG. 18A and FIG. 18B illustrate example of the DCI format 0 parameter. When the "CQI request" bit is "1" (when aperiodic CSI reports are requested), the DCI format 0 parameter is taken to be parameter indicating the control information for downlink data, as in FIG. 18B, rather than parameter indicating the control information for uplink data. When "CQI request" is "0" (aperiodic CSI report is not requested), the parameter indicate the usual control information for uplink data, as in FIG. 18A.

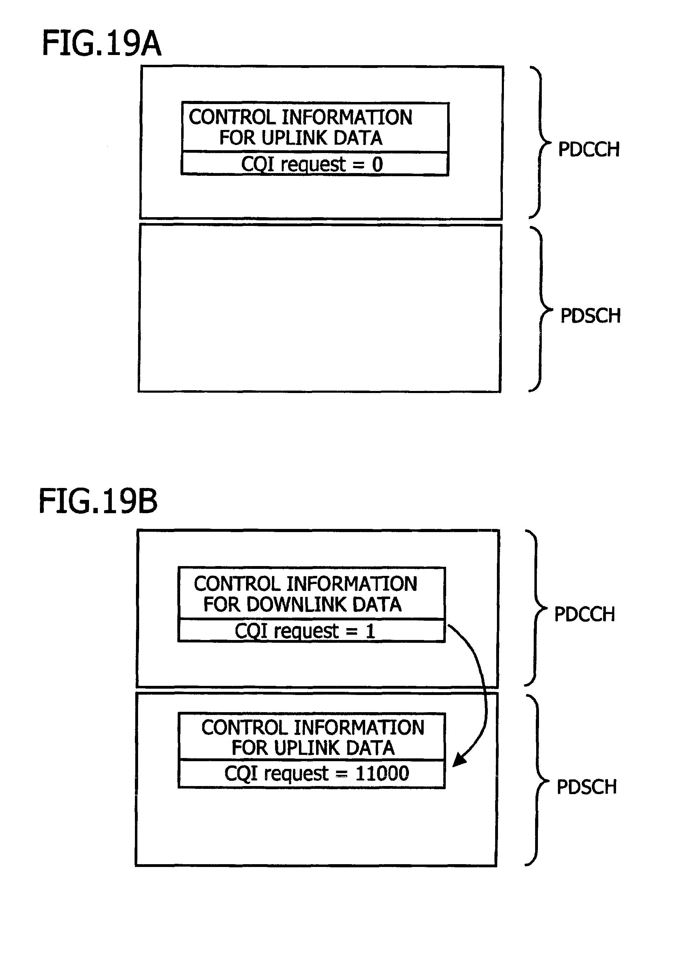

FIG. 19A and FIG. 19B illustrate PDCCH and PDSCH setting examples respectively. When the base station 100 does not cause the terminal 200 to perform aperiodic CSI report, the base station 100 transmits the DCI format 0 control information in which "CQI request" is set to "0" as the PDCCH signal.

On the other hand, when the base station 100 causes the terminal 200 to perform aperiodic CSI reporting, the base station 100 transmits, as the PDCCH signal, the DCI format 0 control information including control information for downlink data in which "CQI request" is set to "1". And, the base station 100 transmits to the terminal 200, as the PDSCH signal, the control information for uplink data (for example the DCI format 0 in FIG. 6) in which the DLCC for CSI reporting is specified as a detailed CQI request.

Examples of the configurations of the radio communication system, base station 100, and terminal 200 in the fourth embodiment can be implemented similarly to those of the third embodiment (for example FIG. 14 and FIG. 15).

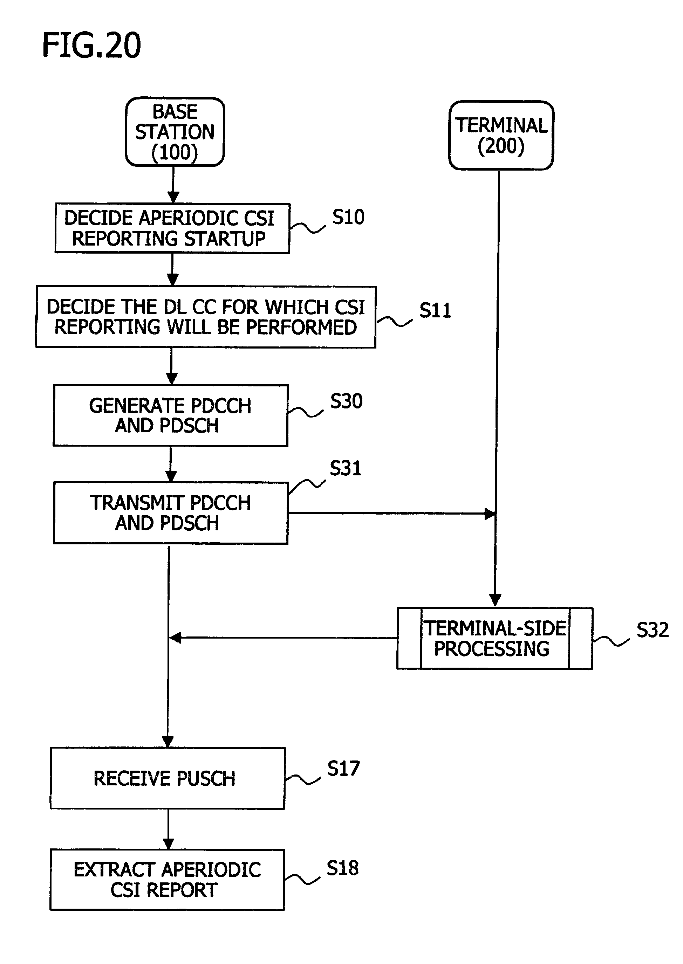

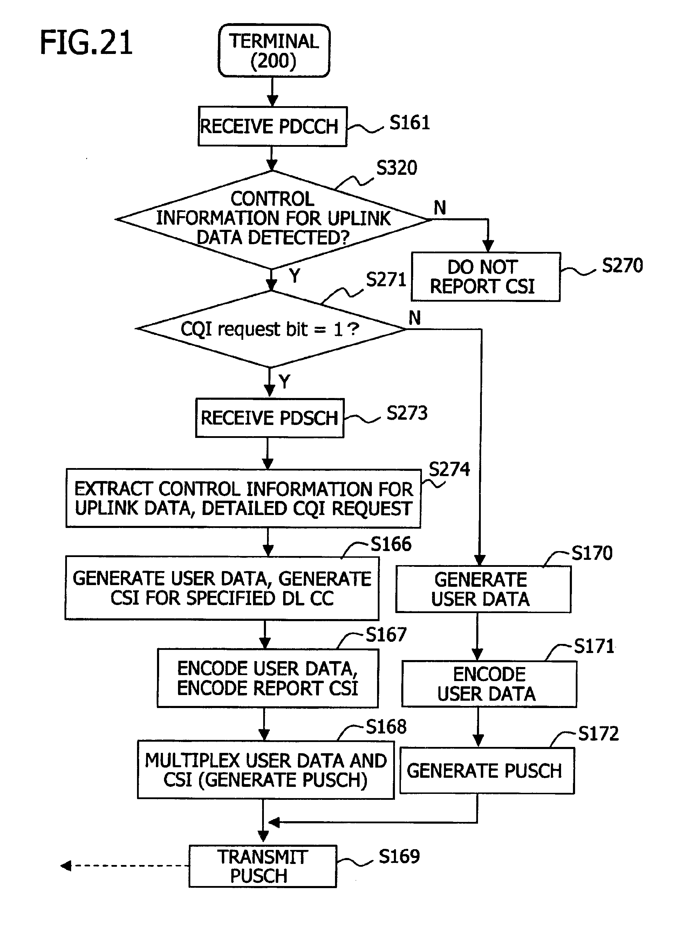

FIG. 20 and FIG. 21 are flowcharts illustrating an operation example. The operation example is explained in the order of the step numbers, focusing mainly on differences with the third embodiment.

The base station 100 decides for which DL CC the CSI report is to be made (S11), and generates the PDCCH signal and the PDSCH signal (S30). In this case, for example, the DCI format 0 parameter value for which the interpretation is changed (for example FIG. 18B) are included in the PDCCH signal. The PDSCH signal includes, as the control information for uplink data, the DCI format 0 parameter value explained in the second embodiment. The DCI format 0 parameter value included in the signal transmitted as this PDSCH signal include, for example, 5 bits of the detailed CQI request. For example, the scheduler 110 generates each of the parameter value, the PDCCH generation unit 113 generates the PDCCH signal, and the PDSCH generation unit 114 generates the PDSCH signal.

Next, the base station 100 transmits the generated PDCCH signal and PDSCH signal to the terminal 200 (S31). For example, the multiplexing unit 115 and radio transmission unit 116 transmit the signals as the radio signal to the terminal 200.

Next, the terminal 200 performs terminal-side processing (S32). FIG. 21 is a flowchart illustrating an example of terminal-side processing. After receiving the PDCCH signal (S161), the terminal 200 discriminates whether the control information for uplink data is detected (S320). For example, the PDCCH processing unit 223 discriminates whether the PDCCH signal for control information for uplink data is received through the signal length of the PDCCH signal and a Flag for format 0/format 1A differentiation included in the PDCCH signal. If control information for uplink data cannot be detected ("N" in S320), the terminal 200 does not perform aperiodic CSI reporting.

On the other hand, when the control information for uplink data is detected in the PDCCH signal ("Y" in S320), the terminal 200 confirms the "CQI request" from the control information for uplink data transmitted by the PDCCH signal (S271), and thereafter performs processing similar to that of the third embodiment.

Thus, in the fourth embodiment also, the base station 100 can use the detailed CQI request to specify the DLCC for which aperiodic CSI reporting is to be performed. Hence, similarly to the third embodiment, the base station 100 can cause the terminal 200 to report the information relating to channel state for arbitrary frequency bands. Further, because the terminal 200 transmits CSI for specified DLCC, compared with a case in which the CSI is transmitted for all CCs, throughput can be improved.

### Fifth Embodiment

Next, a fifth embodiment is explained. Differences with the second embodiment are mainly explained, and explanation of similar matter is omitted. The fifth embodiment is an example in which the terminal 200 performs CSI reporting through the correspondence relationship between DLCC set in the "PDCCH monitoring set" (hereafter called "PDCCH monitoring CCs"), and DLCC with PDSCH scheduling (hereafter called "scheduled DLCC").

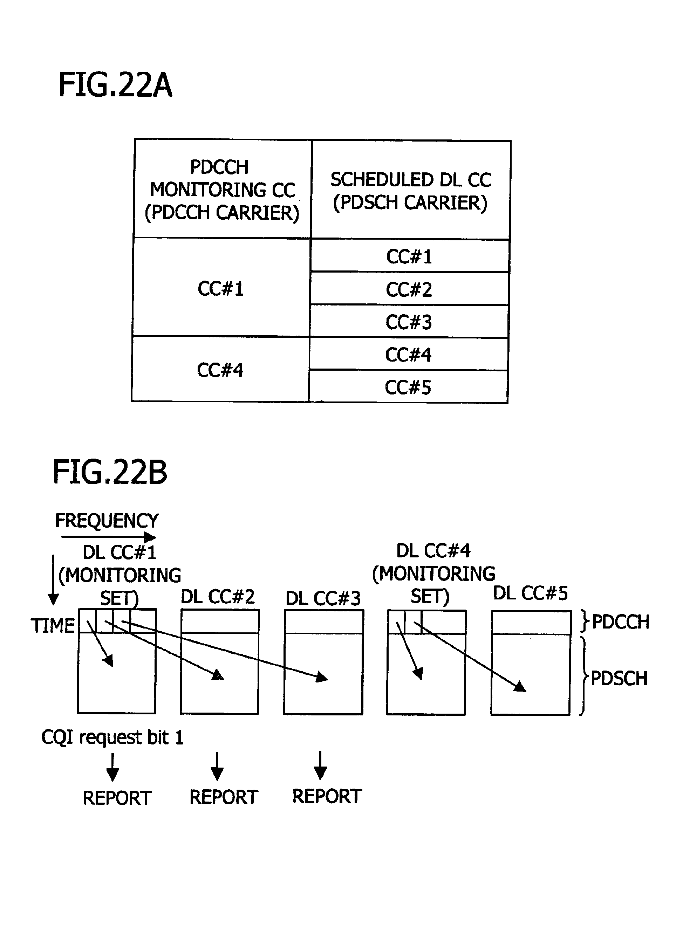

FIG. 22A illustrates an example of the correspondence relation between PDCCH monitoring CCs and scheduled DLCC; FIG. 22B illustrates an example of DLCC for which CSI reporting is performed. As explained in the first embodiment, the PDCCH monitoring CC is a DLCC for which, for example, there is the possibility that the PDCCH is set for the terminal 200. In the example of FIG. 22A, the PDCCH monitoring CCs are DLCC#1 and DLCC#4. In the PDCCH of DLCC#1, the setting is made so as to perform scheduling for the PDSCH of DLCC#1 to #3. In this case, DLCC#1 to #3 are set as scheduled DLCCs for the DLCC#1, which is the PDCCH monitoring CC. Similarly, DLCC#4 and #5 are set as scheduled DLCCs for the DLCC#4, which is set as the PDCCH monitoring CC.

In such a correspondence relationship, as illustrated in FIG. 22B, when the base station 100 transmits the control information for uplink data using the DLCC#1 with "CQI request" set to "1" (for example, causing aperiodic reporting), the terminal 200 transmits the CSI for DLCC#1 to #3 to the base station 100. Further, when the base station 100 transmits the control information for uplink data using the DLCC#4 with "CQI request" set to "1", the terminal 200 transmits the CSI for DLCC#4 and DLCC#5 to the base station 100. The terminal 200 reports the CSI for DLCC#1 to #3, for which it is possible that scheduling is performed using the control information transmitted using DLCC# 1.

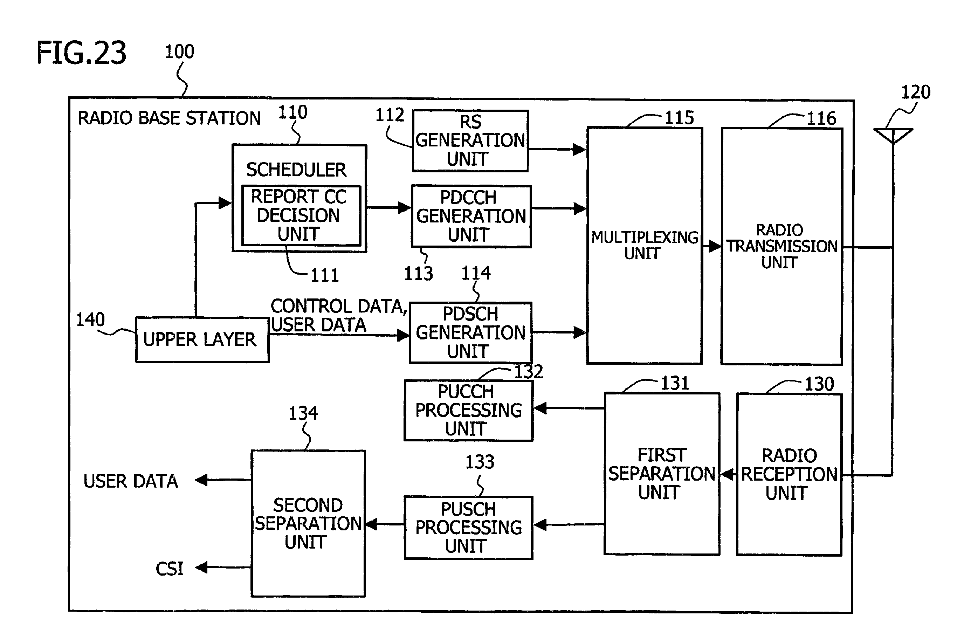

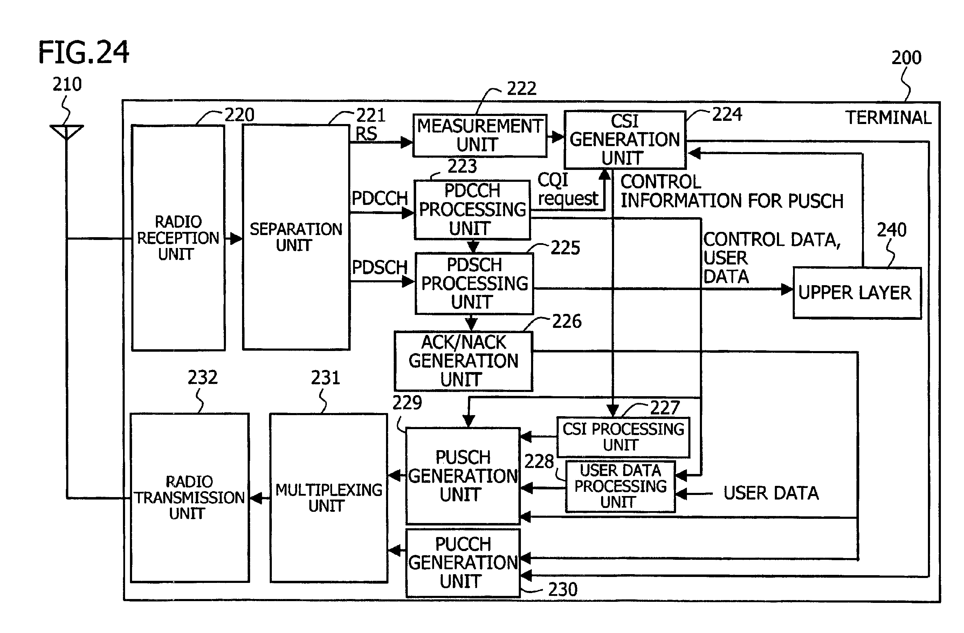

Next, examples of the configurations of the base station 100 and terminal 200 in the fifth embodiment are explained. FIG. 23 and FIG. 24 illustrate examples of the configurations of the base station 100 and terminal 200 respectively.

The base station 100 further includes an upper layer 140. The upper layer 140 generates a correspondence relation table (for example FIG. 22A) between the PDCCH monitoring CC and the scheduled DLCC, and outputs the table as a control data to the PDSCH generation unit 114. Also, upper layer 140 outputs the correspondence relation table to the scheduler 110.

The PDSCH generation unit 114 performs error correction encoding and similar of the control data from the upper layer 140, and outputs the result as the PDSCH signal to the multiplexing unit 115. The scheduler 110 or report CC decision unit 111 decides the DLCC for CSI reporting based on the correspondence relation table, and performs scheduling.

The terminal 200 further includes an upper layer 240. The upper layer 240 inputs the control data extracted by error correction decoding and similar in the PDSCH processing unit 225, and generates or holds the correspondence relation table. The upper layer 240 outputs the correspondence relation table to the CSI generation unit 224.

The CSI generation unit 224 holds a same correspondence relation table as the correspondence relation table generated by the base station 100. The CSI generation unit 224 generates the CSI for scheduled DLCC for the PDCCH monitoring CC for which the "CQI request" bit is "1", based on this table.

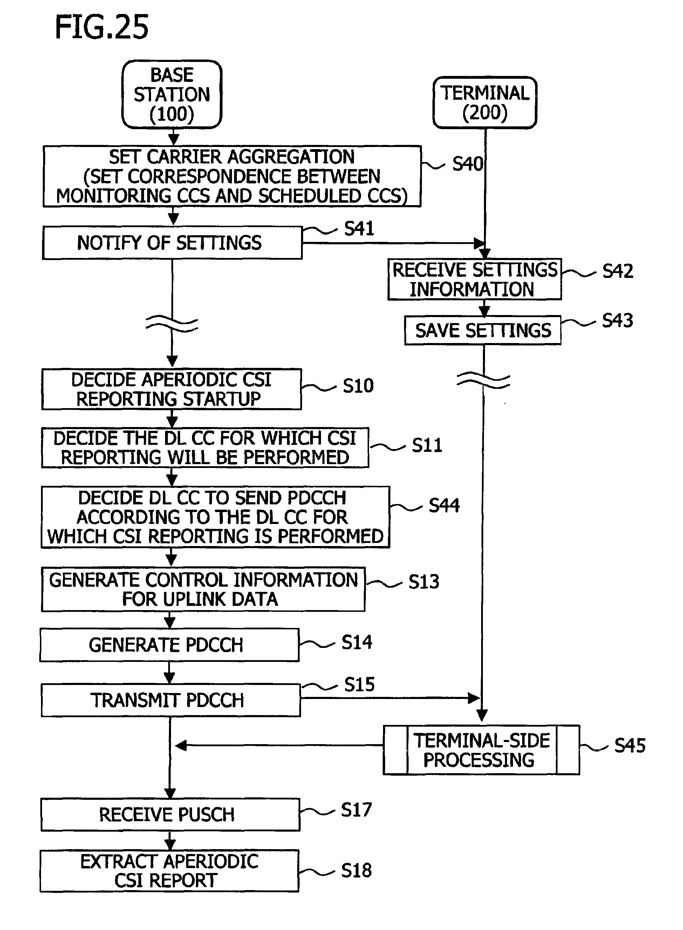

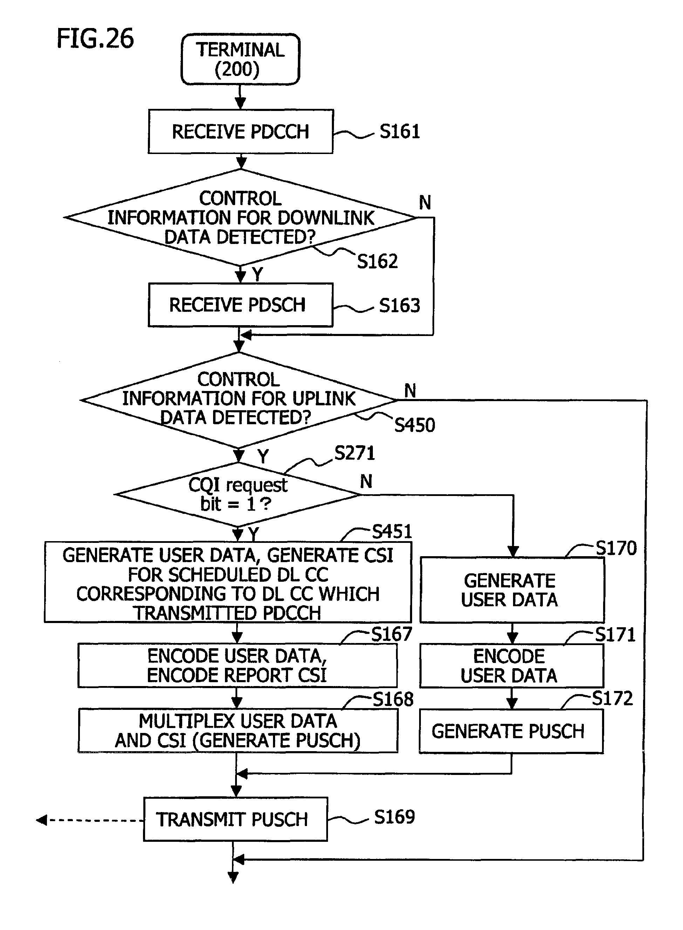

Next, an example of operation in the fifth embodiment is explained. FIG. 25 and FIG. 26 are flowcharts illustrating the operation example. This operation example is also explained focusing on difference with the second embodiment and similar.

First, the base station 100 sets associations between the PDCCH monitoring CC and scheduled DLCC (S40). For example, the upper layer 140 of the base station 100 uses carrier aggregation setting to set which bandwidth is which CC, which CC is the PDCCH monitoring CC, and which CC is scheduled DLCC, and similar. At this time, the upper layer 140 generates the correspondence relation table between the PDCCH monitoring CC and scheduled DLCC.

Next, the base station 100 provides notification of these settings (S41). For example, together with relations between band and CC set using carrier aggregation setting by the upper layer 140, the correspondence relation table is output to the PDSCH generation unit 114 as the control data (or a setting information). The control data is transmitted to the terminal 200 as the PDSCH signal by the PDSCH generation unit 114.

The terminal 200 receives the control data transmitted using the PDSCH (S42). For example, the PDSCH processing unit 225 extracts the control data from the PDSCH signal, and outputs the result to the upper layer 240.

Next, the terminal 200 saves the received control data (S43). For example, the upper layer 240 saves the control data.

From the above, the base station 100 and terminal 200 share correspondence relations between the PDCCH monitoring CC and scheduled DLCC (for example FIG. 22A). When the report CC decision unit 111 decides for which CC CSI report is to be made, the scheduler 110 uses the PDCCH monitoring CC corresponding to the decided DLCC to transmit the control information for uplink data based on the correspondence relation table (S10 to S15). For example, in the example of FIG. 22A, when CSI reporting is to be performed for DLCC#3, the base station 100 transmits the control information for uplink data (for example DCI format 0) with the "CQI request" bit set to "1" in the DLCC#1.

The terminal 200 receives this information and performs terminal-side processing (S45). For example, upon receiving the PDCCH signal in DLCC#1, based on the control information for downlink data transmitted using the PDCCH signal, the terminal 200 receives the PDSCH signals for DLCC#1 to CC#3, which are scheduled DLCCs (S161, "Y" in S162, S163).

Next, the terminal 200 detects whether the control information for uplink data is received (S450). For example, the PDCCH processing unit 223 performs detection based on the signal length of the received PDCCH signal and the Flag for format 0/format 1A differentiation included in the PDCCH signal. When the control information for uplink data is not received ("N" in S450), the terminal 200 ends the series of processing without performing aperiodic CSI reporting.

On the other hand, when the control information for uplink data is received ("Y" in S450), the terminal 200 determines whether the "CQI request" bit in the control information is "1" (whether aperiodic CSI reporting is performed) (S271).

When the bit is "1" ("Y" in S271), the terminal 200 performs CSI reporting for the corresponding scheduled DLCC based on the correspondence relation table (S451). For example, based on the frequency band of the received PDCCH signal, the PDCCH processing unit 223 outputs the information of which DLCC is used to transmit DCI format 0 together with the "CQI request" bit to the CSI generation unit 224. The CSI generation unit 224 takes the DLCC in which DCI format 0 is transmitted to be the PDCCH monitoring CC, and selects the scheduled DLCC based on the correspondence relation table, and generates the CSI with the DLCC as the CC for the CSI report (S451).

On the other hand, when the "CQI request" bit is not "1" ("N" in S271), the terminal 200 need not perform aperiodic CSI reporting, and references the control information for uplink data to perform user data generation and similar (S170 to S172).

Then, the terminal 200 transmits the generated CSI to the base station 100 (S169). At the time of transmission, in the case of cross-carrier scheduling for example, the terminal 200 performs transmission using the UL CC specified by the "carrier indicator" of DCI format 0 (for example FIG. 6).

Or, the terminal 200 may perform CSI transmission using the scheduled ULCC. In addition to DLCCs, there are also ULCCs for which the PDCCH can be set as PDCCH control information by the PDCCH monitoring CC. The terminal 200 can be made to use such the ULCC to transmit CSI.

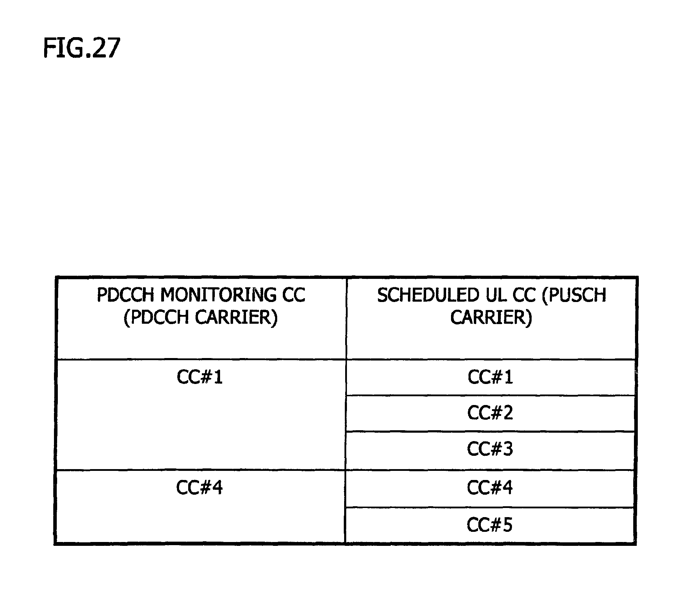

FIG. 27 illustrates an example of the correspondence relation between the PDCCH monitoring CC and scheduled ULCC. For example, similarly to a correspondence relation between the PDCCH monitoring CC and scheduled DLCC, the base station 100 sets and transmits as setting information (or control data) (S40, S41), and the terminal 200 shares the correspondence relation by receiving and saving the setting information (S42, S43). For example, when the base station 100 transmits the control information for uplink data with "CQI request" set to "1" in DLCC#1, the terminal 200 uses the carrier indicator to specify one of ULCC#1 to ULCC#3, and uses the specified ULCC to transmit the generated CSI.

Thus, in the fifth embodiment also, the base station 100 uses the correspondence relation between the PDCCH monitoring CC and scheduled DLCC to decide DLCC for which CSI reporting is performed. The base station 100 can cause CSI reporting for DLCC set as scheduled DLCC, and can cause the terminal 200 to report the information relating to the channel state of arbitrary frequency bands. Further, the terminal 200 is caused to report the CSI for DLCC set as scheduled CC, so that compared with a case in which the CSI is reported for all DLCCs, throughput can be improved. Further, in the fifth embodiment, there is no increase in the number of bits in DCI format 0 or similar, so that preexisting data structures can be used as-is, and there is no increase in overhead due to control signaling.

### Sixth Embodiment

Next, a sixth embodiment is explained. Differences with the fifth embodiment are mainly explained, and explanation of similar matter is omitted. The sixth embodiment is an example in which, separately from scheduled DLCC, DLCC for CSI reporting is determined in advance for PDCCH monitoring CC.

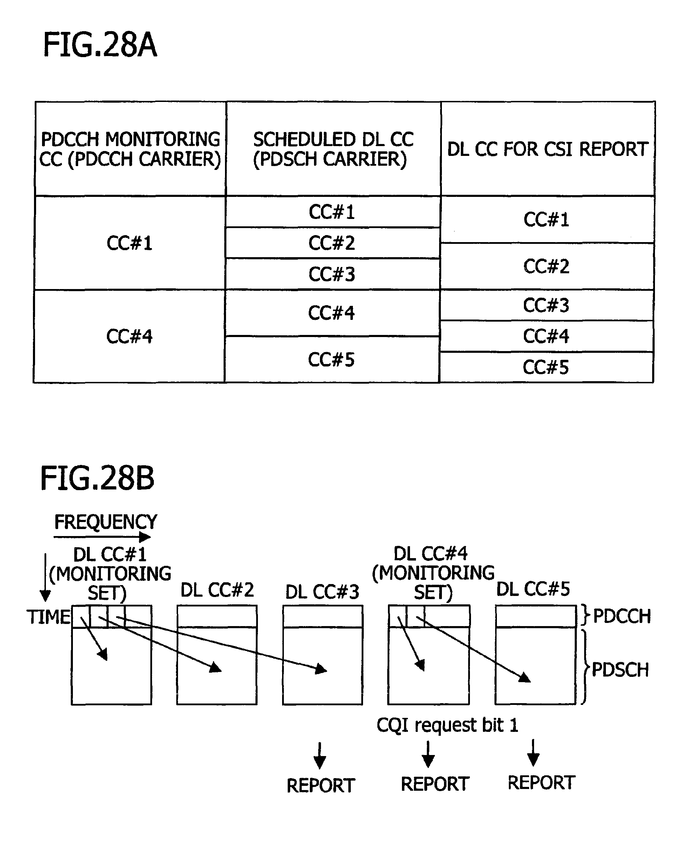

FIG. 28A illustrates an example of the relation between the PDCCH monitoring CC and scheduled DLCC and DLCC for CSI reporting. FIG. 28B illustrates an example of DLCC for CSI reporting.

For example, as illustrated in FIG. 28A, even when there is a correspondence relation between the PDCCH monitoring CC and scheduled DLCC, DLCC to cause CSI reporting for monitoring DLCC#1 can be set to DLCC#1 and DLCC#2, and DLCC to cause CSI reporting for monitoring DLCC #4 can be set to DLCC#3, DLCC#4 and DLCC#5. For example, when the base station 100 is to cause the terminal 200 to perform CSI reporting for DLCC#3, the DLCC#4, which is the PDCCH monitoring CC, is used to transmit the control information for uplink data (for example DCI format 0) with the "CQI request" bit set to "1". Based on the correspondence relation, the terminal 200 performs CSI reporting for DLCC#3 to #5. By this means, the base station 100 can receive CSI reports for DLCC#3.

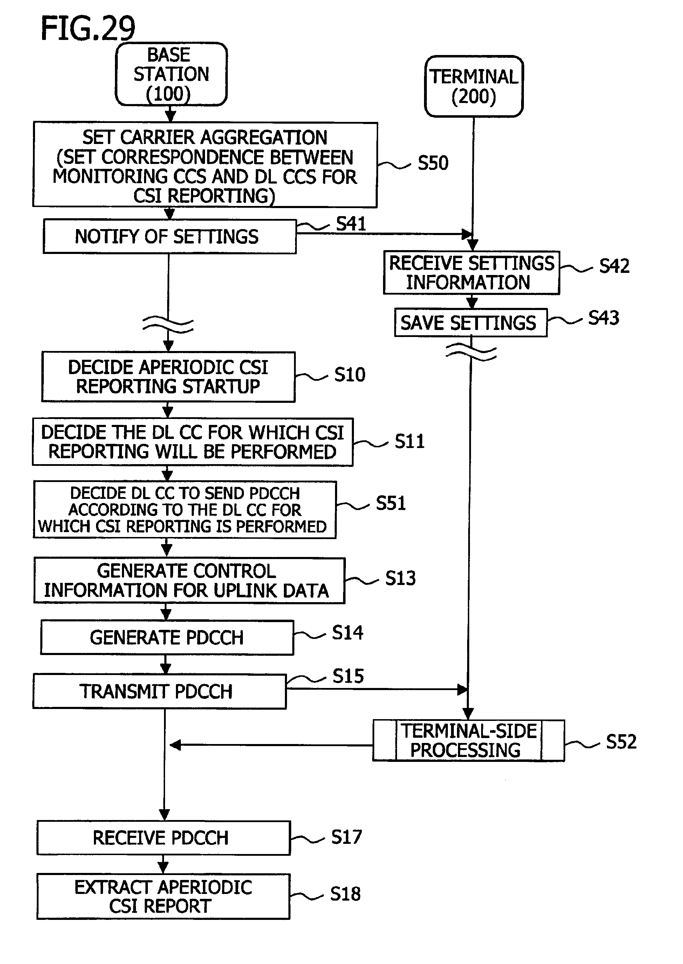

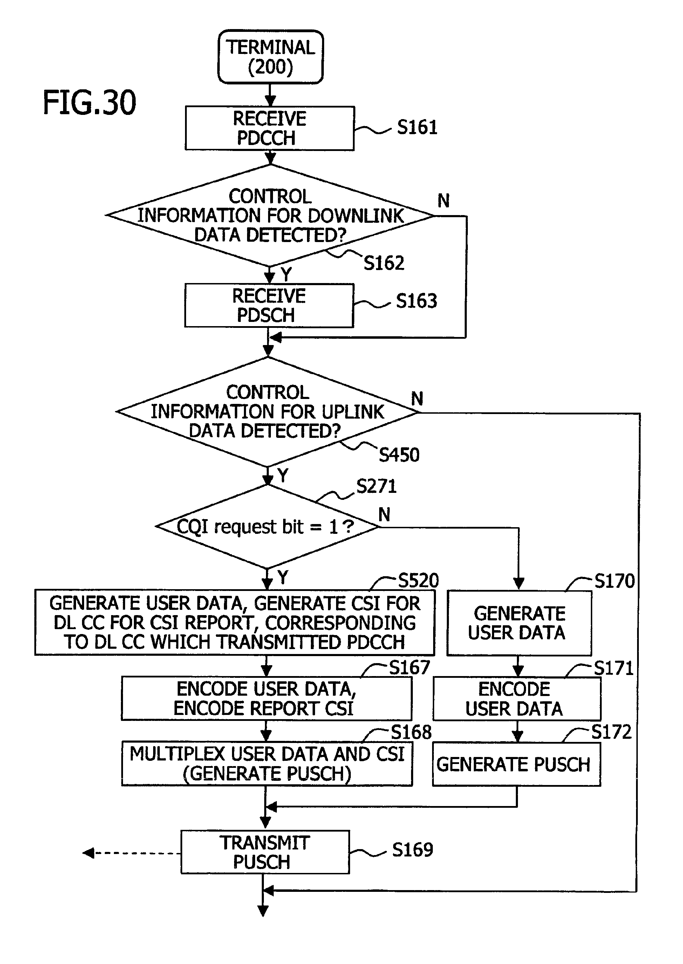

Examples of configuration of the base station 100 and terminal 200 can be implemented similarly to the fifth embodiment (for example FIG. 23 and FIG. 24). FIG. 29 and FIG. 30 are flowcharts of an operation example.

When making carrier aggregation setting, the upper layer 140 of the base station 100 generates a correspondence relation between the PDCCH monitoring CC and the DL CC for CSI reporting, holds this as the correspondence relation table (for example FIG. 28A), and transmits this to the terminal 200 (S50, S41).

On the other hand, the upper layer 240 of the terminal 200, by holding the correspondence relation table received as the control data (S42, S43), can share information on CCs for CSI reporting with the base station 100.

The base station 100 decides the DL CC for which CSI reporting is to be performed. Based on the correspondence relation table (for example FIG. 28A), the DLCC in which the PDCCH signal is to be transmitted is decided (S51). For example, the scheduler 110 references the correspondence relation table from the higher-level layer 104, and based on the table decides on the DLCC for transmission.

Then, the base station 100 uses the DLCC thus decided to transmit control information for uplink data with the "CQI request" bit set to "1" (S14, S15).

On the other hand, the terminal 200 performs terminal-side processing (S52), detects whether DCI format 0 control information is included in the received PDCCH signal (S450), and if detected ("Y" in S450), references the "CQI request" bit included in the DCI format control information (S271).

When the "CQI request" bit included in the control information for uplink data is "1" ("Y" in S271), the DLCC for CSI reporting corresponding to the DLCC in which the PDCCH signal is transmitted is read out based on the correspondence relation table. Then, the terminal 200 performs CSI reporting for the DLCC (S520). For example, the CSI generation unit 224 takes as input information on the DLCC in which the PDCCH signal was transmitted from the PDCCH processing unit 223, references the correspondence relation table from the upper layer 240, and decides the DLCC for CSI reporting corresponding to the DLCC. The CSI generation unit 224 then generates CSI for the DLCC thus decided.

The terminal 200 then transmits the generated CSI to the base station 100 (S169). For example, similarly to the fifth embodiment, the terminal 200 may use the UL CC specified by the "carrier indicator" of DCI format 0 for transmission, or may use the scheduled ULCC (for example FIG. 27) for transmission.

In this way, in the sixth embodiment also, the base station 100 can specify arbitrary DLCC for reporting based on a correspondence relation with PDCCH monitoring CCs. Hence the base station 100 can cause the terminal 200 to report information relating to channel states for arbitrary frequency band. Further, the terminal 200 can perform CSI reporting for CC set as DLCC for CSI reporting. Hence compared with a case in which the terminal 200 performs CSI reporting for all ULCCs, quantity of the information transmitted is reduced, so that throughput can be improved.

### Seventh Embodiment

Next, a seventh embodiment is explained. Differences with the fifth embodiment are mainly explained, and explanation of similar matter is omitted. The seventh embodiment is an example in which the correspondence relation between the ULCC in which the PUSCH signal is transmitted and the DLCC for CSI reporting is set, and the terminal 200 performs CSI reporting based on this correspondence relation.

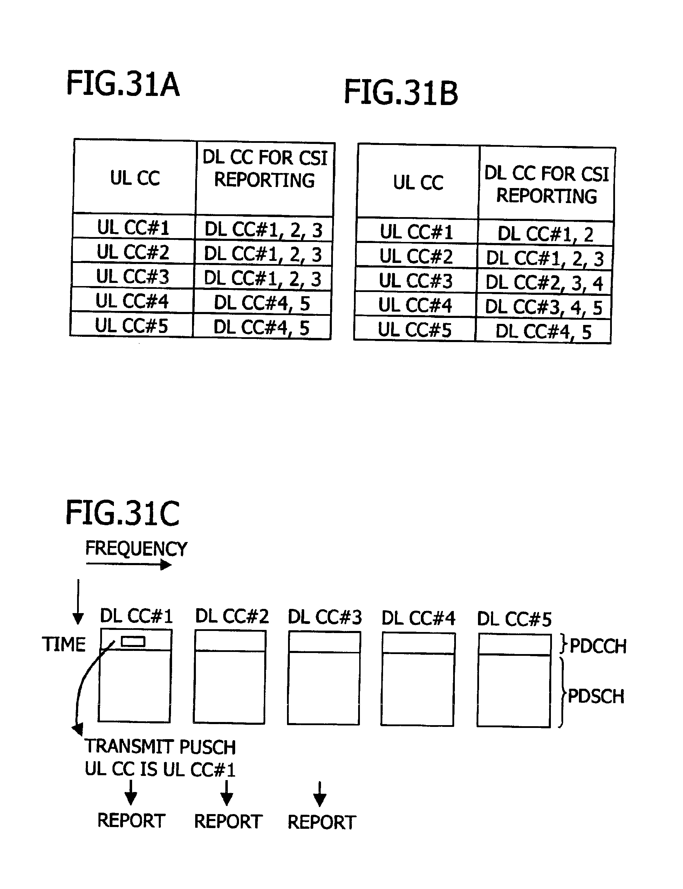

FIG. 31A and FIG. 31B illustrate examples of correspondence relation between the ULCC used to transmit PUSCH signal, and DLCC for CSI reporting; FIG. 31C illustrates an example of DLCC for which CSI reporting is performed.

As explained in the second embodiment, when cross-carrier scheduling is performed, the DCI format 0 control information includes a "carrier indicator" which indicates for example which ULCC is used to transmit the PUSCH signal. The DLCC for which CSI report is to be made is associated with the ULCC to be used to transmit the PUSCH signal, and CSI reporting is performed based on this correspondence relation.

For example, when the base station 100 is to cause CSI reporting for DLCC#3, the following processing is performed. From the correspondence relation (for example FIG. 31A), the ULCC corresponding to CC#3 as the DLCC for CSI reporting is one of ULCC#1 to CC#3. The base station 100 decides on the ULCC to be used to transmit the PUSCH signal (for example ULCC#1) from of ULCC#1 to CC#3.

The base station 100 may decide on all of the ULCC#1 to CC#3 as ULCC to transmit the PUSCH signal. The base station 100 generates the control information for uplink data specifying ULCC#1 as the ULCC for transmitting the PUSCH signal (for example, in the case of DCI format 0, "carrier indicator" = ULCC#1). The PDCCH signal for the control information may be transmitted using any DLCC in the case of cross-carrier scheduling (for example, using a PDCCH monitoring CC); in the example of FIG. 31C, DLCC#1 is used for transmission. In the case of same-carrier scheduling, the base station 100 transmits the PDCCH signal using DLCC#1. Because ULCC#1 is specified as the ULCC for transmission of the PUSCH signal, the terminal 200 performs CSI reporting for DLCC#1 to CC#3 based on the correspondence relation. By this means, the base station 100 can receive CSI reports for DLCC#3.

As illustrated in FIG. 31B, the correspondence between the ULCC and DLCC for CSI reporting may be such that different DLCC is specified for CSI reporting for each ULCC. Further, not all ULCCs need have information on DLCCs for reporting, and a portion of the ULCCs may have DLCCs for CSI reporting.

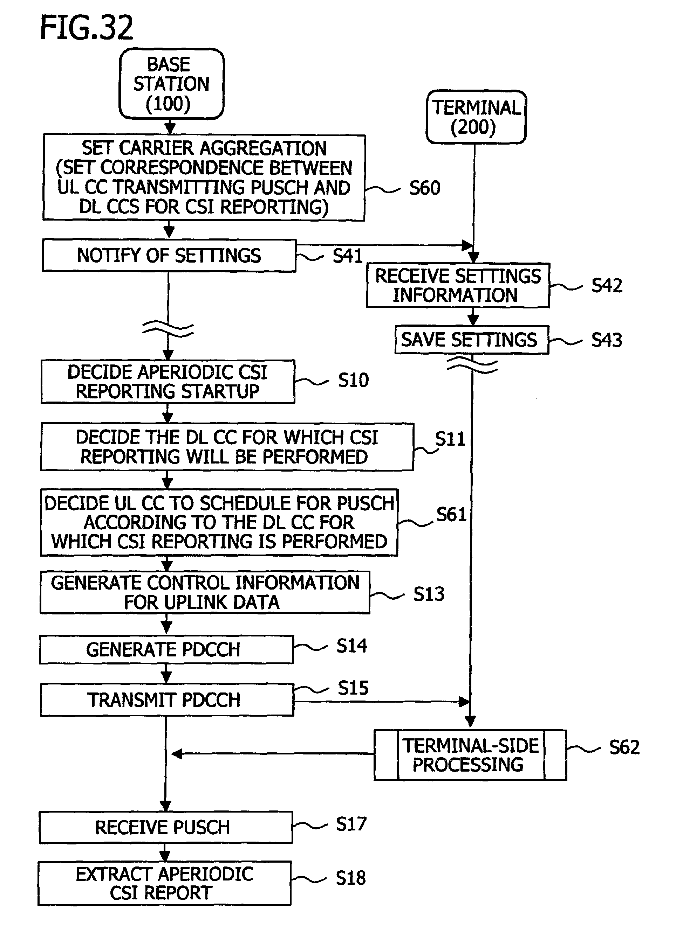

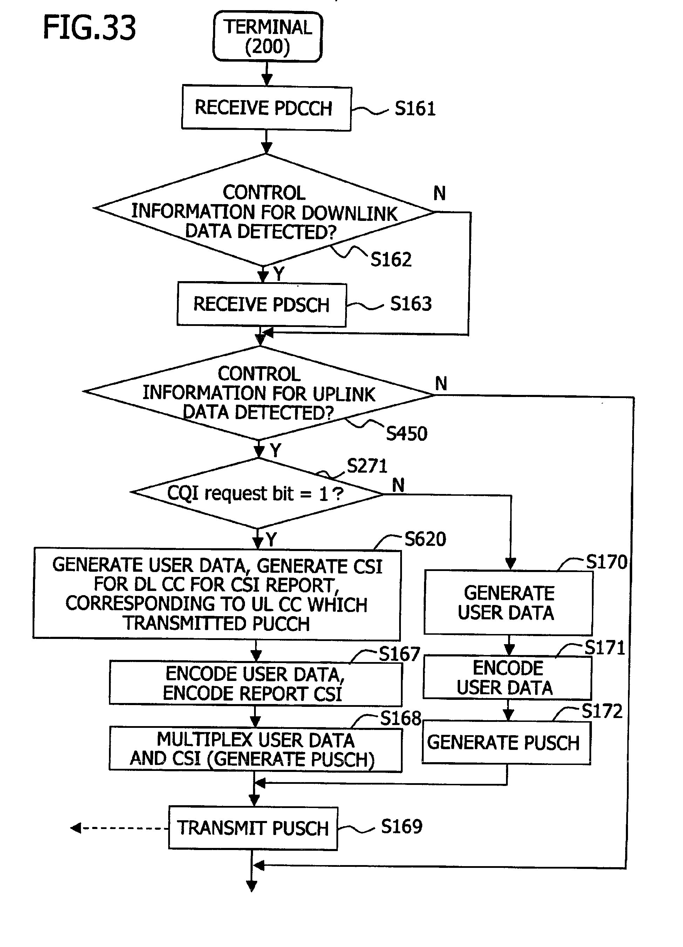

Examples of the configuration of the base station 100 and terminal 200 can be implemented similarly to the fifth embodiment (for example FIG. 23 and FIG. 24). FIG. 32 and FIG. 33 are flowcharts of an operation example. The operation example is explained in the order of the step numbers, focusing mainly on differences with the fifth embodiment.

First, in carrier aggregation settings, the base 100 sets an association between the ULCC transmitting the PUSCH signal and DLCC for CSI reporting (S60). For example, the upper layer 140 performs settings and generates the table indicating the correspondence relation (for example FIG. 31A). The base station 100 notifies the terminal 200 of the correspondence relation as the control data (S41), and the terminal 200 receives this, and saves the data as the table (S42, S43). For example, the upper layer 240 saves the data as the table. By this means, the correspondence relation is shared between the base station 100 and terminal 200.

The base station 100 decides for which DLCC CSI reporting is to be performed (S11), and decides the ULCC to use in transmitting the PUSCH signal according to these DLCC (S61). For example, the scheduler 110 references the correspondence table (for example FIG. 31A) according to the DLCC decided by the report CC decision unit 111, and decides the ULCC to transmit the PUSCH signal. Then, the base station 100 generates the PDCCH signal specifying this ULCC, and transmits the PDCCH signal to the terminal 200 (S14, S15).

The terminal 200 performs terminal-side processing (S62), and upon receiving the control information for uplink data ("Y" in S450 in FIG. 33), detects whether the "CQI request" bit is set to "1" (perform aperiodic CSI reporting) (S271).

Then, when the "CQI request" bit is "1" ("Y" in S271), the terminal 200 references the correspondence table (for example FIG. 31A) and decides the DLCC for CSI reporting corresponding to the ULCC transmitting the PUSCH signal, and generates the CSI for the DLCC thus decided (S620). For example, the PDCCH processing unit 223 extracts from the PDCCH signal the information as to which ULCC transmitted the PDSCH signal. In the case of cross-carrier scheduling, by extracting the "carrier indicator" included in the DCI format 0 control information, the information as to which ULCC is used to transmit the PUSCH signal can be extracted. In the case of same-carrier scheduling, the PDCCH processing unit 223 can perform extraction from the relation with the reception frequency bandwidth of the received PDCCH signal. The PDCCH processing unit 223 outputs to the CSI generation unit 224 an information indicating which ULCC transmits the PUSCH signal. The CSI generation unit 224 references the correspondence relation table from the upper layer 240 for the ULCC transmitting the PUSCH signal, decides the DLCC for CSI reporting, and generates the CSI for these DLCC.

The terminal 200 transmits the generated CSI using the specified ULCC (S169). By receiving this (S17, S18), the base station 100 can receive the CSI for the DLCC for CSI reporting.

In the seventh embodiment also, the base station 100 can receive the CSI for DLCC for reporting by specifying the ULCC to transmit the PUSCH signal, and so can cause the terminal 200 to report information relating to channel states for arbitrary frequency band. Further, the terminal 200 reports the CSI for CCs specified as the DLCC for CSI reporting. Hence compared with a case in which the terminal 200 performs CSI reporting for all DLCCs, quantity of the information transmitted is reduced, so that throughput can be improved.

### Eighth Embodiment

Next, an eighth embodiment is explained. Differences with the second embodiment are mainly explained, and explanation of similar matter is omitted. The eighth embodiment is an example in which a field for specifying DLCC for CSI reporting is added to the control information for uplink data (for example DCI format 0).

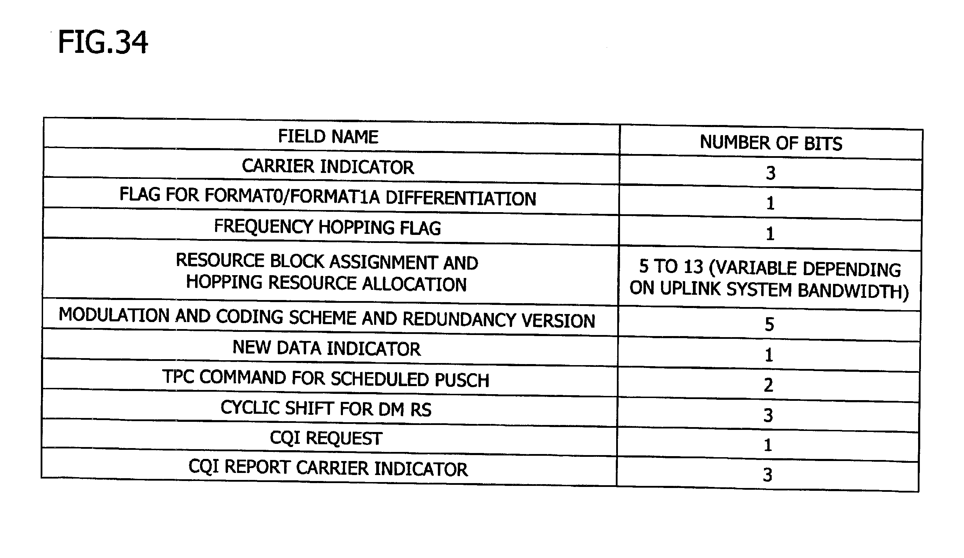

FIG. 34 illustrates an example of the DCI format 0 parameters in the eighth embodiment. In the DCI format, there is a "CQI report carrier indicator" field. The "CQI report carrier indicator" is a field used for example to specify DLCC for which CSI reporting is to be performed, of the plurality of DLCCs. When the base station 100 inserts the parameter value (3 bits) into this field and transmits to the terminal 200 as the PDCCH signal, the terminal 200 performs CSI reporting for the specified DLCC.

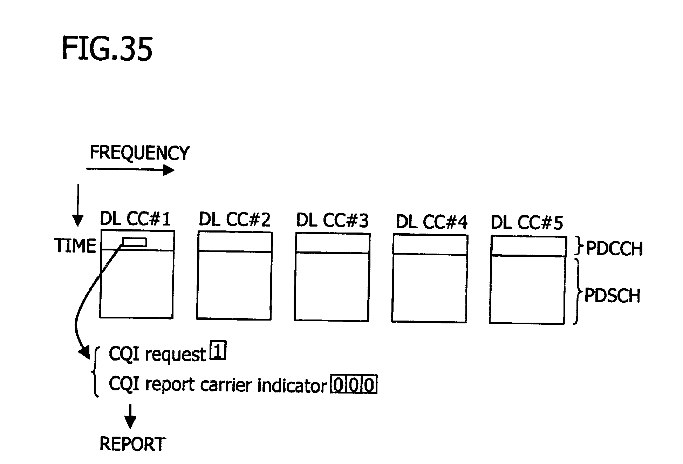

FIG. 35 illustrates an example of DLCC for which CSI reporting is performed. When the base station 100 sets the "CQI request" bit to "1" and specifies "000" in the "CQI report carrier indicator" field, the terminal 200 performs CSI reporting for the DLCC#1 corresponding to "000". For example, when the "CQI report carrier indicator" bits are "001", the terminal 200 performs CSI reporting for DLCC#2. The correspondence relation between the bit value (parameter value) of the "CQI report carrier indicator" field and the DLCC for reporting may for example be set at a time when the carrier aggregation is set, similarly to the fifth embodiment, and is notified to the terminal 200.

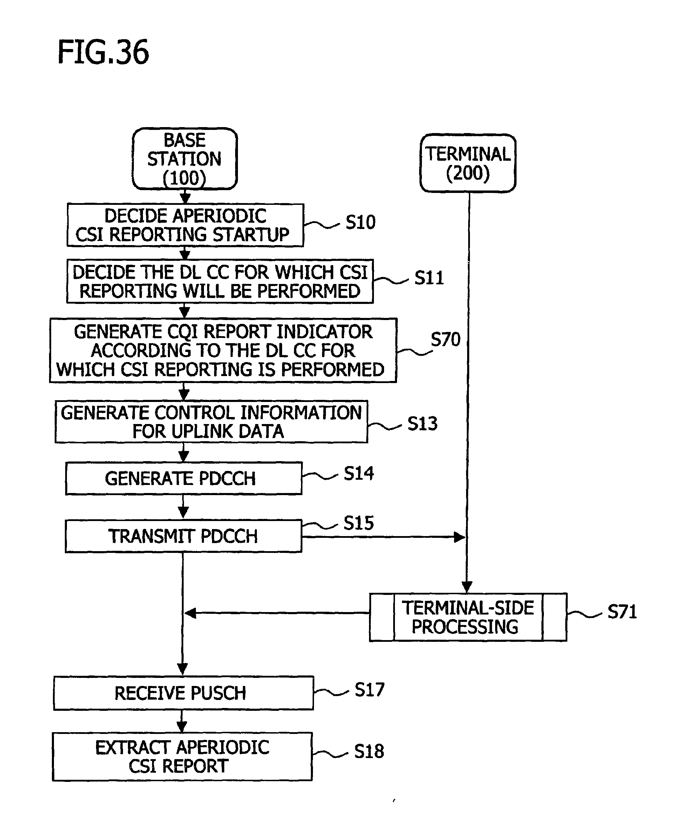

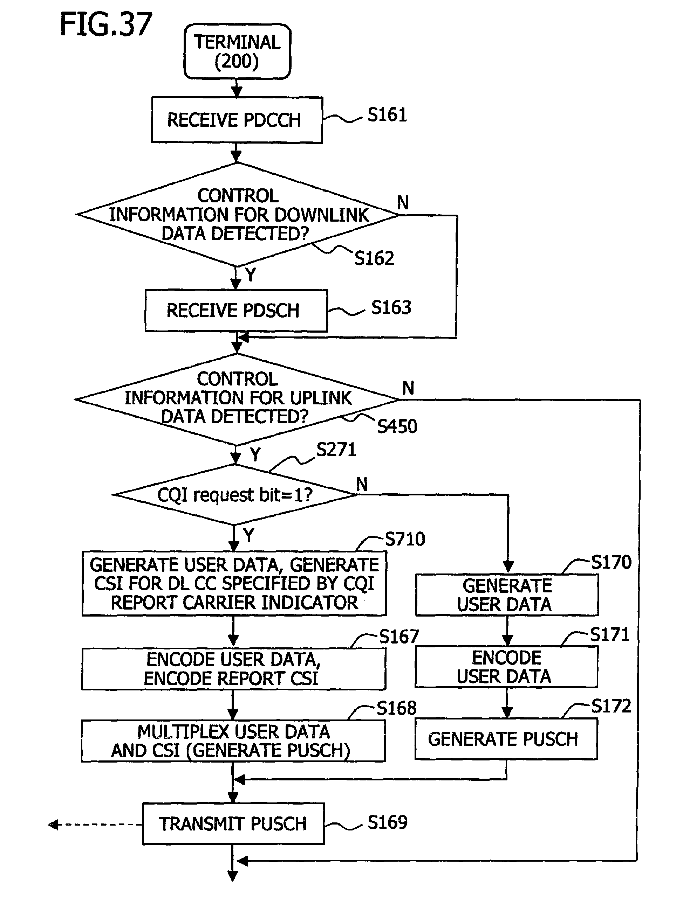

The base station 100 and terminal 200 in the eighth embodiment can be implemented similarly to the second embodiment (for example FIG. 8 and FIG. 9), or similarly to the fifth embodiment (for example FIG. 23 and FIG. 24). FIG. 36 and FIG. 37 are flowcharts illustrating an operation example in the eighth embodiment. The operation example is explained in the order of the step numbers, focusing mainly on differences with the second embodiment.

The base station 100 decides, by means of the report CC decision unit 111, for which DLCC CSI reporting is to be performed (S11), and generates the "CQI report carrier indicator" according to the DLCC thus decided (S70). For example, the scheduler 110 decides parameter value of the "CQI report carrier indicator" so as to correspond to the DLCC for reporting. At this time, the scheduler 110 generates the control information for uplink data in which the "CQI request" is set to "1" (to cause aperiodic CSI reporting). For example, the scheduler 110 creates the parameter value for each field of the DCI format 0, and based on these parameter value the PDCCH generation unit 113 generates the PDCCH signal for the control information for uplink data.

Then, the base station 100 transmits the PDCCH signal to the terminal 200 (S14, S15).

Next, the terminal 200 performs terminal-side processing (S71). That is, the terminal 200 receives the PDCCH signal (S161 in FIG. 37), and upon receiving the PDCCH signal for control information for uplink data ("Y" in S450), detects whether the "CQI request" bit is "1" (S271).

When the "CQI request" bit is "1" ("Y" in S271), the terminal 200 references the "CQI report carrier indicator" field, and generates CSI for the DLCC corresponding to the parameter value included in the field (S710). For example, the PDCCH processing unit 223 extracts each of the parameter values of DCI format 0 from the PDCCH signal, and outputs to the CSI generation unit 224 the parameter values included in "CQI report carrier indicator" as well as "CQI request". The CSI generation unit 224 generates CSI for the corresponding DLCC according to the parameter values of "CQI request" and "CQI report carrier indicator".

Then, the terminal 200 transmits the generated CSI to the base station 100 (S169), and by receiving this, the base station 100 can receive the CSI for any one DLCC specified by the "CQI report carrier indicator".

Thus in the eighth embodiment also, the base station 100 can cause CSI reporting to be performed for any DLCC, so that the terminal 200 can be made to report the information relating to the channel state for the arbitrary frequency band. Further, the terminal 200 reports the CSI for the CC specified by the "CQI report carrier indicator". Hence compared with a case in which the terminal 200 performs CSI reporting for all DLCCs, quantity of the information transmitted is reduced, so that throughput can be improved.

In the eighth embodiment, for example 3 bits can be specified using the "CQI report carrier indicator". When there are 4 or more DLCCs, the "CQI report carrier indicator" can be used to specify any one of the DLCCs. When there are 3 or fewer DLCCs, all combinations of arbitrary DLCCs can be specified.

### Ninth Embodiment

Next, a ninth embodiment is explained. Differences with the fifth embodiment are mainly explained, and explanation of similar matter is omitted. The ninth embodiment is an example in which the "carrier indicator" of control information for uplink data (for example DCI format 0) is used to specify the DLCC for CSI reporting.

As explained in the fifth embodiment, in cross-carrier scheduling, the ULCC to transmit the PUSCH signal can be specified by the "carrier indicator". When aperiodic CSI reporting is to be performed (when for example the "CQI request" bit is "1"), the base station 100 specifies the "carrier indicator" specifying the ULCC as the DLCC for CSI reporting. However, in this case the ULCC for transmitting the CSI cannot be specified, and so the terminal 200 transmits the CSI using the ULCC determined in advance.

On the other hand, when aperiodic CSI reporting is not to be performed (when for example the "CQI request" bit is "0"), the base station 100 uses the "carrier indicator" as usual to specify the ULCC for transmission of the PUSCH signal.

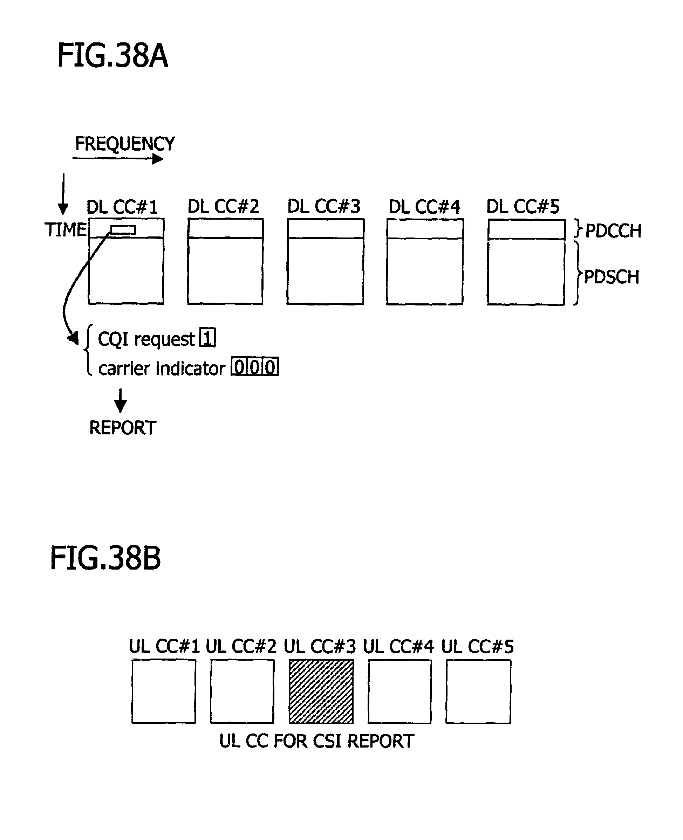

FIG. 38A illustrates an example of the DLCC for reporting, and FIG. 38B illustrates an example of the ULCC to perform CSI reporting. As illustrated in FIG. 38A, when for example CSI reporting is to be performed for the DLCC#1, the base station 100 transmits a DCI format 0 PDCCH signal in which the "CQI request" bit is "1" and the "carrier indicator" is "000". Because the DCI format 0 "CQI request" bit is "1", the terminal 200 interprets the "carrier indicator" to be the DLCC for CSI reporting, and generates CSI for the DL CC# 1 corresponding to "000". The terminal 200 for example uses the ULCC#3 determined in advance to transmit the CSI to the base station 100. By this means, the base station 100 can cause the terminal 200 to perform CSI report for the specified DLCC. Because the parameter value of the "carrier indicator" field is for example 3 bits, as explained in the eighth embodiment, the number of DLCCs for reporting is decided by the number of DLCCs set in carrier aggregation. That is, when there are 4 or more DLCCs, one of the DLCCs can be specified, and when there are 3 or fewer DLCCs, all combinations of arbitrary DLCCs can be specified.

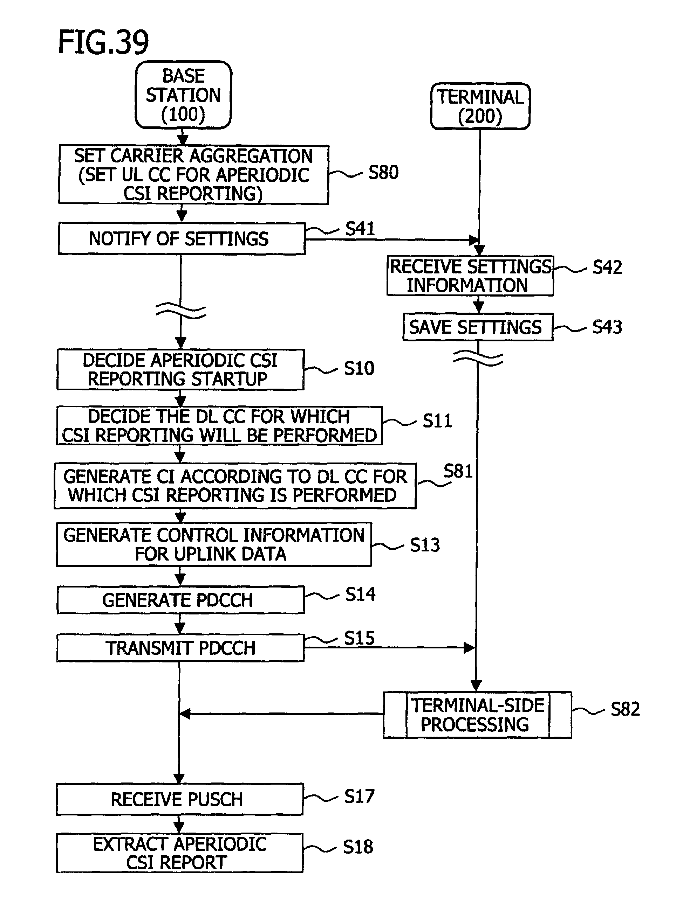

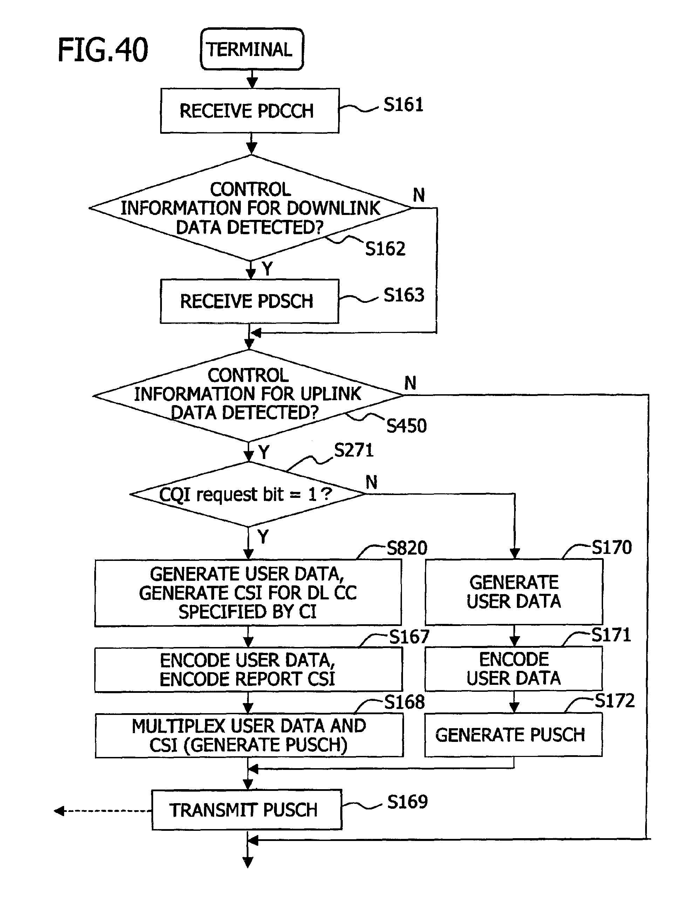

The base station 100 and terminal 200 in the ninth embodiment can be implemented similarly to the second embodiment (for example FIG. 8 and FIG. 9) or similarly to the fifth embodiment (FIG. 23 and FIG. 24). FIG. 39 and FIG. 40 are flowcharts illustrating an operation example in the ninth embodiment. The operation example is explained in the order of the step numbers, focusing mainly on differences with the second and fifth embodiments.

The base station 100 performs carrier aggregation setting, and performs setting which ULCC is used to perform CSI report (S80). For example, the upper layer 140 sets the ULCC#3 as the ULCC for CSI reporting.

The base station 100 then transmits this setting information to the terminal 200 as the control data (S41). The terminal 200 receives the control data, and saves the data as setting information (S42, S43). For example, the upper layer 240 takes as input the ULCC for CSI reporting and saves this as the setting information. By this means, the information as to which ULCC is used for CSI transmission is shared between the base station 100 and the terminal 200.

The base station 100 decides the DLCC for which reporting is to be performed (S11), and generates the "carrier indicator" according to the DLCC thus decided (S81). For example, the scheduler 110 generates a parameter value for the "carrier indicator" according to the DLCC decided by the report CC decision unit 111. When reporting of DLCC#1 is to be performed, the parameter value of the "carrier indicator" is "000"; when reporting is to be performed for DLCC#3, the parameter value is "010", and similar. The scheduler 110 also sets the "CQI request" to "1". Then, the base station 100 generates the PDCCH signal of control information for uplink data including these parameter values, and transmits the PDCCH signal to the terminal 200 (S14, S15).

The terminal 200 performs terminal-side processing (S82), and receives the PDCCH signal (S161 in FIG. 40). When the "CQI request" is "1", the terminal 200 references the "carrier indicator" parameter, and generates the CSI for the DLCC corresponding thereto (S820). For example, the PDCCH processing unit 223 extracts the "CQI request" and "carrier indicator" parameter values from the PDCCH signal, and outputs the value to the CSI generation unit 224. The CSI generation unit 224 references the setting information saved in the upper layer 240, and generates the CSI for the DLCC corresponding to the parameter value of the "carrier indicator".

Then, the terminal 200 uses the ULCC set in advance to transmit the generated CSI (S169). For example, the upper layer 240 notifies the PUSCH generation unit 229 of the ULCC for transmission, and the PUSCH generation unit 229 saves this information. The PUSCH generation unit 229 generates the PUSCH signal including a CSI report, and outputs the PUSCH signal so as to be transmitted to the terminal 200 using the saved ULCC.

The base station 100 receives the CSI for the DLCC specified by the ULCC determined in advance (S17, S18).

In the ninth embodiment also, the base station 100 can use the "carrier indicator" to cause CSI reporting for a specified DLCC, and so can cause the terminal 200 to report the information relating to channel state in the arbitrary frequency band. Further, the terminal 200 reports the CSI for the DLCC specified by the "carrier indicator". Hence compared with a case in which the terminal 200 performs CSI reporting for all DLCCs, quantity of the information transmitted is reduced, so that throughput can be improved.

### Tenth Embodiment

Next, a tenth embodiment is explained. Differences with the fifth embodiment are mainly explained, and explanation of similar matter is omitted. The tenth embodiment is an example in which the base station 100 causes CSI reporting by associating a subframe number and the DLCC for CSI reporting.

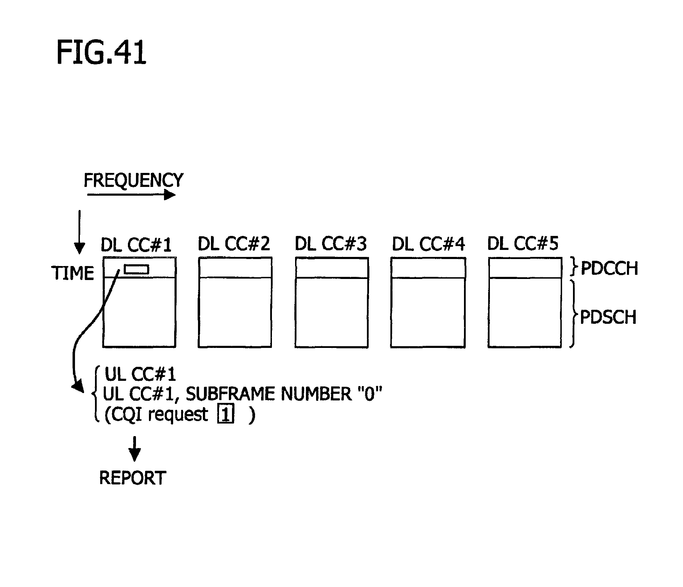

FIG. 41 illustrates an example of the DLCC for CSI reporting. In the case of cross-carrier scheduling, as described above, the PDCCH signal for the control information for uplink data (for example DCI format 0) includes the "carrier indicator" to indicate the ULCC for transmission of the PUSCH signal. In the case of same-carrier scheduling, the ULCC with the same number as the DLCC which transmitted the PDCCH signal for DCI format 0 is indicated. In the tenth embodiment, the correspondence relation is set in advance between the ULCC for transmission of the PUSCH signal and the subframe number in which the DCI format 0 PDCCH signal is transmitted and the DLCC for CSI reporting, and the base station 100 causes the terminal 200 to perform CSI reporting for the DLCC specified based on this relation. On the other hand, the terminal 200 performs CSI reporting for the corresponding DLCC based on this correspondence relation.

In the example of FIG. 41, for example the base station 100 uses the subframe "0" to transmit a DCI format 0 PDCCH signal with a specification that ULCC#1 be used to transmit the PUSCH signal. The terminal 200 generates the CSI for DLCC#1, for example, based on the correspondence relation, from the ULCC#1 transmitting the PUSCH signal and the subframe number "0". Hence in order to cause CSI reporting for DLCC#1, the base station 100 may specify that the ULCC#1 transmit the PUSCH signal, and that the PDCCH signal be transmitted using subframe number "0". In the DCI format 0 PDCCH signal, the ULCC#1 can be specified during cross-carrier scheduling by specification using the "carrier indicator", and during same-carrier scheduling can be specified by having the PDCCH signal transmitted using DLCC#1. The base station 100 sets the "CQI request" to "1" in the DCI format 0 control information in order to cause aperiodic CSI reporting.

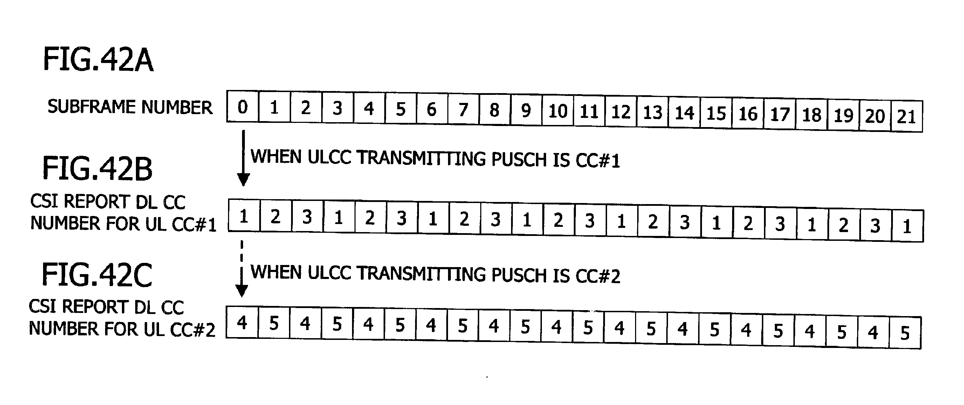

FIG. 42A to FIG. 42C illustrate the correspondence relation between subframe number, the ULCC used for transmitting the PUSCH signal, and the number of a DLCC for CSI reporting. In the example of FIG. 42A to FIG. 42C, the terminal 200 can use the ULCC#1 and the ULCC#2 simultaneously to transmit the PUSCH signal. The base station 100 decides in advance, and notifies the terminal 200 in advance, that DLCCs for which reporting is possible for the ULCC#1 are CC#1 to CC#3, and that DLCCs for which reporting is possible for the ULCC#2 are CC#4 and CC#5, and similar. The base station 100 creates the correspondence relation between subframe number and DLCC for which CSI reporting is performed as illustrated in FIG. 42A to FIG. 42C, and notifies the terminal 200 in advance of this correspondence relation. In this example, when the base station 100 is to cause CSI reporting for DLCC#5, the ULCC for transmission of the PUSCH signal is set to CC#2, and the DCI format 0 PDCCH of this specification may be transmitted in subframe number "1" (or "3", "5", or similar).

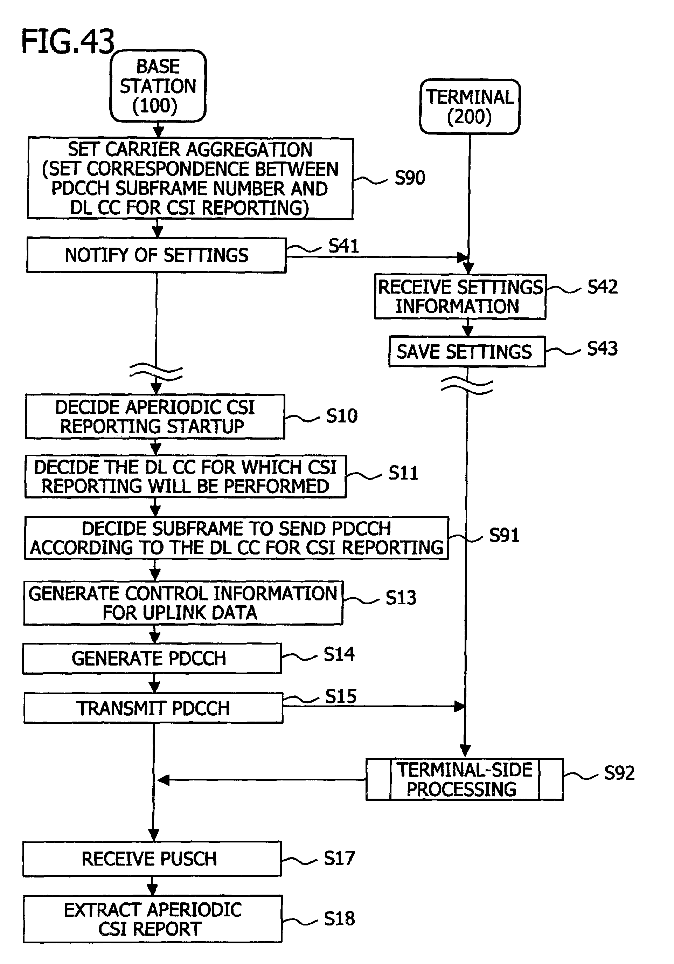

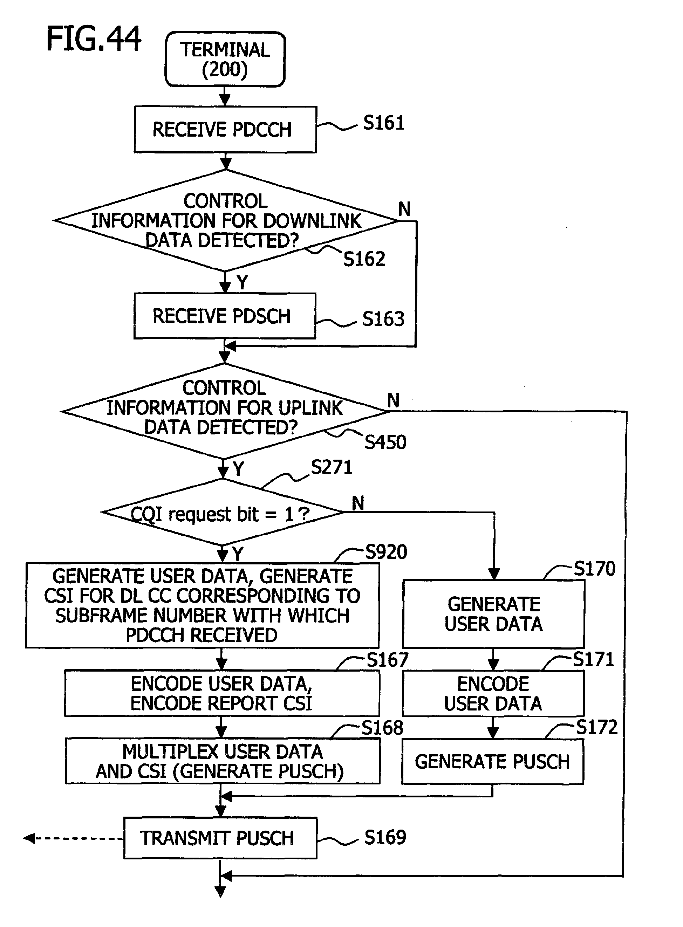

Examples of the configuration of the base station 100 and terminal 200 in the tenth embodiment can be implemented similarly to the fifth embodiment (for example FIG. 23 and FIG. 24). FIG. 43 and FIG. 44 are flowcharts illustrating an example of operation in the tenth embodiment. The operation example is explained in the order of the step numbers, focusing mainly on differences with the fifth embodiment.

First, when the base station 100 sets carrier aggregation, the base station 100 sets the correspondence between the subframe number and DLCC for CSI reporting. For example, the upper layer 140 sets the correspondence relation as illustrated in FIG. 42A to FIG. 42C.

Then, the base station 100 transmits the correspondence relation thus set, as control data, to the terminal 200 (S41), and the terminal 200 receives the control data and saves the correspondence relation (S42, S43). For example, the upper layer 240 saves the correspondence relation. By this means, the correspondence relation is shared between the base station 100 and the terminal 200.

The base station 100 decides for which DLCC CSI reporting is to be performed (S11), and decides on the ULCC for transmitting the PUSCH signal and the subframe number corresponding to the DLCC. For example, when CSI reporting is to be performed for DLCC#5, the scheduler 110 decides on the subframe number "1" and "carrier indicator" = ULCC#2 (in the case of cross-carrier scheduling).

Thereafter, the base station 100 uses the specified subframe number (and in the case of same-carrier scheduling, a specified DLCC as well), and transmits the PDCCH signal for control information for uplink data including the "CQI request" of "1" (S15).

The terminal 200 performs terminal-side processing (S92), and upon receiving the PDCCH signal and detecting reception ("Y" in S450), detects whether the "CQI request" is "1" (S271). When the "CQI request" is "1" ("Y" in S271), the terminal 200 extracts the subframe number for which the PDCCH signal is received and the information as to which ULCC is used to transmit the PUSCH signal, based on the correspondence relation decides the DLCC for reporting, and generates the CSI for this DLCC (S920). For example, the PDCCH processing unit 223 extracts the "CQI request" and the information as to which ULCC is to be used to transmit the PUSCH signal from the PDCCH signal, and outputs the information to the CSI generation unit 224. The PDCCH processing unit 223 uses the reception timing of subframe number "0" notified in advance by the base station 100 as announcement information, and the PDCCH signal reception timing, to extract the subframe number of the received PDCCH signal, and outputs the subframe number to the CSI generation unit 224. The CSI generation unit 224 references the correspondence relation saved in the upper layer 240 for the DLCC transmitting the PUSCH signal output from the PDCCH processing unit 223 and the subframe number, acquires the corresponding DLCC, and generates the CSI for this DLCC.

The terminal 200 transmits the generated CSI to the base station 100 as the PUSCH signal (S169). By receiving this, the base station 100 can receive CSI for the specified DLCC (S17, S18).

Thus in the tenth embodiment also, the base station 100 can cause reporting of the CSI for the specified DLCC based on the correspondence relation between subframe number, the ULCC transmitting the PUSCH signal, and the DLCC for CSI reporting. Hence in the tenth embodiment also, the base station 100 can cause the terminal 200 to report the information relating to the channel state of the arbitrary frequency band. Further, the terminal 200 reports the CSI for the specified DLCC based on the correspondence relation. Hence compared with a case in which the terminal 200 performs CSI reporting for all DLCCs, quantity of the information transmitted is reduced, so that throughput can be improved. In the tenth embodiment also, after specifying the DLCC for which CSI reporting is to be performed, the base station 100 transmits and receives signaling without newly increasing the number of bits. Hence in the tenth embodiment, compared with for example the second embodiment, there is no increase in control signaling overhead.

### Eleventh Embodiment

Next, an eleventh embodiment is explained. Differences with the fifth embodiment are mainly explained, and explanation of similar matter is omitted. The eleventh embodiment is an example in which CSI reporting is performed for the DLCC in an one-to-one relation with the ULCC which transmits the PUSCH signal.

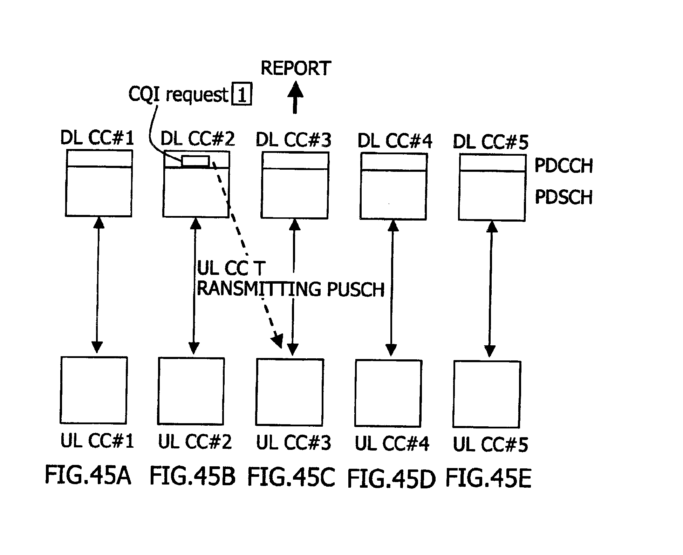

FIG. 45A to FIG. 45E illustrate an example of the correspondence relation between the ULCC and DLCC. For example, the ULCC transmitting the PUSCH signal and the DLCC for CSI reporting are associated in advance as in FIG. 45A to FIG. 45E. For example, in the DCI format 0 PDCCH signal, ULCC#3 is specified as the ULCC for transmission of the PUSCH signal. In this case, it is the DLCC#3 which is in the one-to-one relation with the ULCC#3, and so the terminal 200 reports the CSI for DLCC#3. In order to cause CSI reporting of the DLCC#3, the base station 100 sets the "CQI request" to "1", and transmits the DCI format 0 PDCCH signal with ULCC#3 specified as the ULCC to transmit the PUSCH signal. In the case of cross-carrier scheduling, the base station 100 can transmit this PDCCH signal from any DLCC. In the case of same-carrier scheduling, the base station 100 uses the DLCC in the one-to-one correspondence relation to transmit the PDCCH signal.

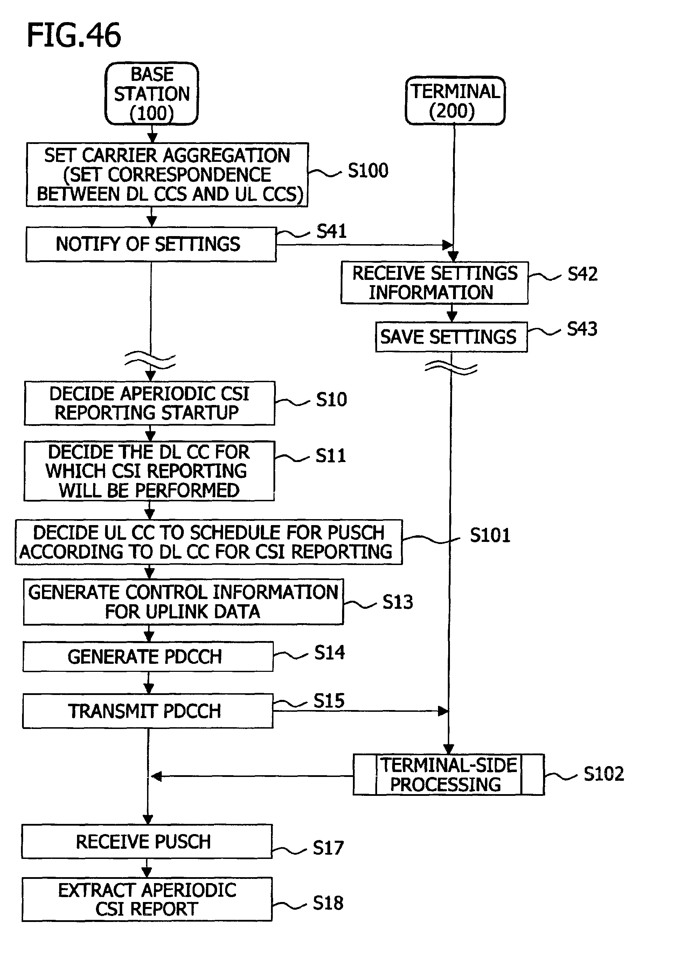

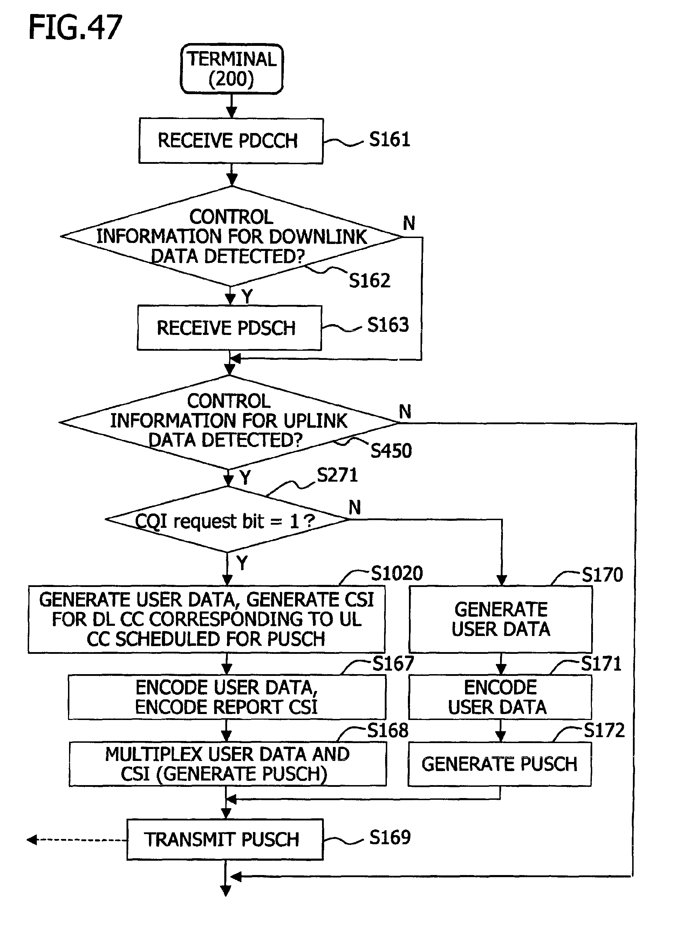

Examples of the configuration of the base station 100 and terminal 200 in the eleventh embodiment can be implemented similarly to the fifth embodiment (for example FIG. 23 and FIG. 24). FIG. 46 and FIG. 47 are flowcharts illustrating an example of operation in the eleventh embodiment. The operation example is explained in the order of the step numbers, focusing mainly on differences with the fifth embodiment.

First, the base station 100 sets carrier aggregation, and for example generates the correspondence relation between ULCC and DLCC such as illustrated in FIG. 45A to FIG. 45E (S100). For example, the upper layer 140 generates the correspondence relation.

The base station 100 notifies the terminal 200 of the setting information, and the terminal 200 saves the setting information (S42, S43). For example, the upper layer 240 saves the information, and also saves the correspondence relation illustrated in FIG. 45A to FIG. 45E. The upper layer 240 may output the correspondence relation to the CSI generation unit 224. By this means, the correspondence relation is shared by the base station 100 and the terminal 200.

Then, the base station 100 decides for which DLCC CSI reporting is to be performed, and decides the ULCC to transmit the PUSCH signal according to this decision (S101). For example, the scheduler 110 acquires the correspondence relation from the upper layer 140, and based on this correspondence relation, decides the ULCC corresponding to the DLCC decided on by the report CC decision unit 111. The base station 100 sets the "CQI request" to "1", generates the PDCCH signal for the control information for uplink data (for example DCI format 0) specifying the ULCC corresponding to the DLCC for CSI reporting to transmit the PUSCH signal, and transmits the PDCCH signal to the terminal 200 (S14, S15).

The terminal 200 receives the PDCCH signal through terminal-side processing (S102), and detects whether the "CQI request" is "1" (S271). When the "CQI request" is "1", based on the correspondence relation, the terminal 200 takes the DLCC corresponding to the ULCC transmitting the PUSCH signal to be the DLCC for CSI reporting, and generates the CSI. For example, the PDCCH processing unit 223 extracts the "CQI request" and the ULCC for transmission of the PUSCH signal from the PDCCH signal, and outputs these to the CSI generation unit 224. Based on the correspondence relation, the CSI generation unit 224 takes the DLCC corresponding to the ULCC to be the DLCC for CSI reporting, and generates the CSI.

Then, the terminal 200 transmits the CSI to the base station 100 as the PUSCH signal (S169), and by receiving this, the base station 100 can receive the CSI for the specified DLCC (S17, S18).

Thus, in the eleventh embodiment also, the base station 100 can specify the DLCC for CSI reporting based on the correspondence relation between the ULCC transmitting the PUSCH signal and the DLCC for CSI reporting. Hence in the eleventh embodiment also, the base station 100 can cause the terminal 200 to report the information relating to the channel state of the arbitrary frequency band. Further, based on the correspondence relation, the terminal 200 reports the CSI for the specified DLCC. Hence compared with a case in which the terminal 200 performs CSI reporting for all DLCCs, the quantity of information transmitted is reduced, so that throughput can be improved. In the eleventh embodiment also, after specifying the DLCC for which CSI reporting is to be performed, the base station 100 transmits and receives signaling without newly increasing the number of bits. Hence in the eleventh embodiment, compared with for example the second embodiment, there is no increase in control signaling overhead.

### Twelfth Embodiment

Next, a twelfth embodiment is explained. The twelfth embodiment is an example in which, when performing CSI reporting for the DLCC in an inactive state, reporting is caused to occur with a transmission timing slower by a constant time.

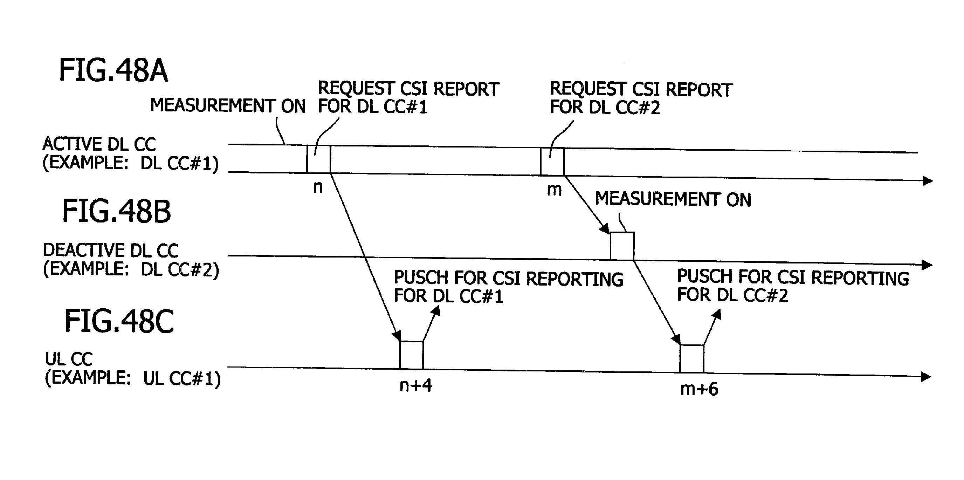

FIG. 48A to FIG. 48C illustrate an example of report timing. As explained in the second embodiment, the CC has for example an active state and the inactive state. When CSI reporting is caused for the DLCC in the inactive state, compared with the DLCC in the active state, a constant time is required until the CSI is generated. This is because the terminal 200 may halt reception processing of the DLCC in the inactive state, and may not be measuring the CSI of the DLCC in the inactive state. In such a case, the reporting timing is delayed to for example from four subframes later to six subframes later. By thus delaying the reporting timing for the DLCC in the inactive state, time is secured until the terminal 200 is in the active state and measurements of CQI and similar for the DLCC are started.

The twelfth embodiment can be applied to systems explained in the first to eleventh embodiments. Further, the twelfth embodiment can also be applied to the thirteenth to fifteenth embodiments described below. For example, when the upper layer 140 sets carrier aggregation, the report timing of the DLCC in the inactive state may be set to for example "transmission six subframes after PDCCH signal reception" or similar, and the terminal 200 may be notified of this setting. Or, the timing may be set in advance as a parameter determined in advance within the system. The upper layer 240 of the terminal 200 saves this setting, and the information is shared between the base station 100 and the terminal 200. For example, when the base station 100 transmitts the DCI format 0 PDCCH signal (second embodiment) with the "CQI request" set to "11000", the terminal 200 transmits the CSI for the DLCC#2, in the inactive state, after six subframes.

The timing for transmission of the CSI of the DLCC in the inactive state need only be delayed from the timing for transmission of the DLCC in the active state, and in addition to six subframes, a delay of five subframes, eight subframes, or similar may be used.

### Thirteenth Embodiment

Next, a thirteenth embodiment is explained. Differences with the second and fifth embodiments are mainly explained, and explanation of similar matter is omitted. The thirteenth embodiment is an example in which a MAC CE (Media Access Control Control Element), which is a control packet, is also used to start aperiodic CSI reporting.

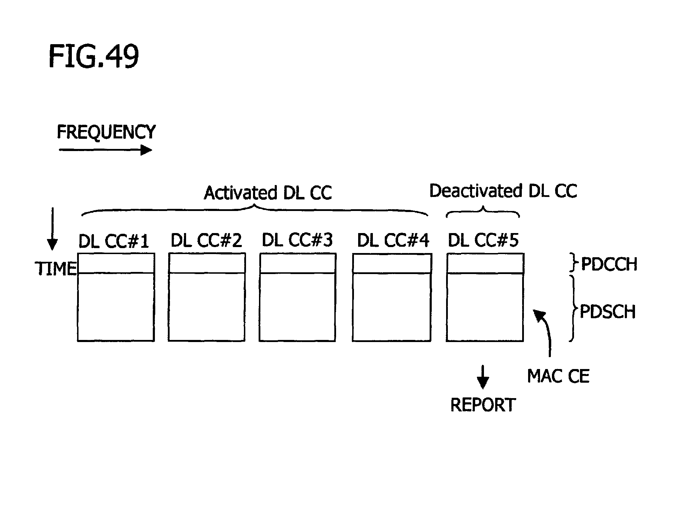

FIG. 49 illustrates an example of the DLCC for CSI reporting. The base station 100 transmits the MAC CE to the terminal 200 in order to change the DLCC in the inactive state (a deactivated DL CC) into the DLCC in the active state (the activated DL CC). Upon receiving the MAC CE, the terminal 200 puts the DL CC specified by the MAC CE into the active state, generates the CSI for the DLCC entered the active state, and transmits the CSI to the base station 100. In the example of FIG. 49, the base station 100 transmits to the terminal 200 the MAC CE specifying the DLCC#5, and the terminal 200 puts the DLCC#5 into the active state, generates the CSI for the DLCC#5, and transmits the CSI to the base station 100.

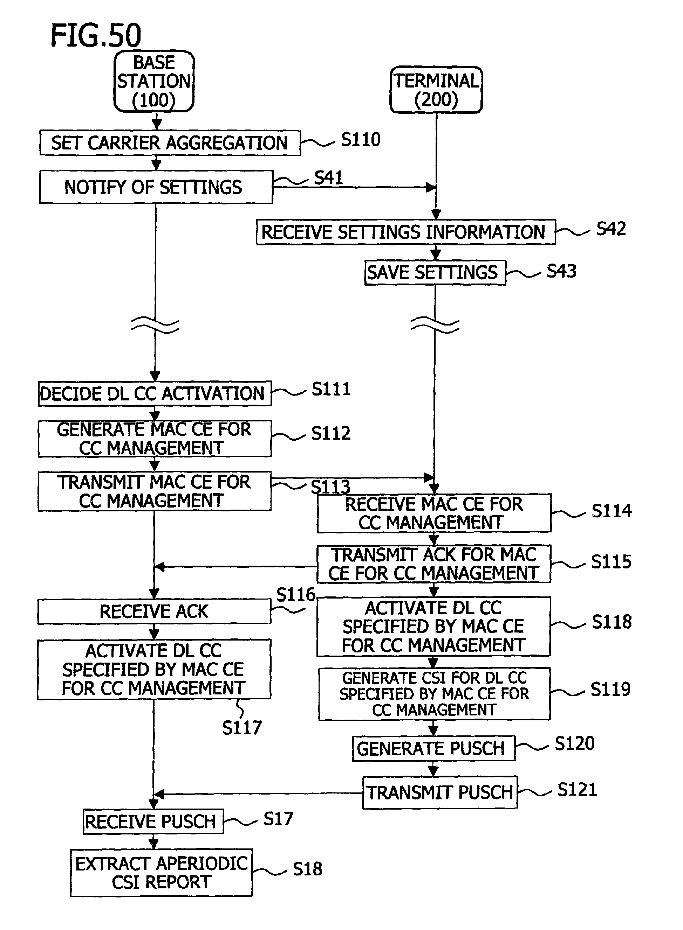

Examples of the configuration of the base station 100 and terminal 200 in the thirteenth embodiment can be implemented similarly to the fifth embodiment (for example FIG. 23 and FIG. 24). FIG. 50 is a sequence diagram illustrating an example of operation in the thirteenth embodiment. The operation example is explained in the order of the step numbers, focusing mainly on differences with the fifth embodiment.

First, the base station 100 sets carrier aggregation (S110). For example, the upper layer 140 sets each DLCC as the CC in the inactive state ("Configured but Deactivated CC"), the CC in the active state ("Configured and Activated CC"), or the PDCCH monitoring set CC ("PDCCH monitoring set"). For example, the upper layer 140 saves the setting information. The base station 100 then transmits this setting information to the terminal 200 as the PDSCH signal (S41).

The terminal 200 receives the PDSCH signal and saves the setting information (S42, S43). For example, the upper layer 240 saves the setting information. By this means, the base station 100 and terminal 200 share the information as to which DLCC is in the active state, which is in the inactive state, and which is CC in the PDCCH monitoring set in the active state.

The base station 100 decides which DLCC is to be put into the active state, of the DLCCs in the inactive state (S111). For example, based on setting information saved by the upper layer 140, whether the DLCC is to be put into the active state is decided. This decision is also used by the base station 100 to determine for which DLCC the CSI is to be reported.

Next, the base station 100 generates the MAC CE (or MAC CE for CC Management), which is the control packet (S112). For example, the upper layer 140 decides on the DLCC to put into the active state (and a DLCC for CSI reporting), and generates the MAC CE specifying the DLCC thus decided.

Next, the base station 100 transmits the generated MAC CE (S113). For example, the upper layer 140 outputs the generated MAC CE to the PDSCH generation unit 114, and the MAC CE is transmitted as the PDSCH signal.

Upon receiving the PDSCH signal (S114), the terminal 200 transmits an ACK signal to the base station 100 (S115). For example, the PDSCH processing unit 225 extracts an information included in the MAC CE from the PDSCH signal, and outputs a signal indicating the success of extraction to the ACK/NACK generation unit 226. Upon input of this signal, the ACK/NACK generation unit 226 generates the ACK signal, and outputs the ACK signal to the PUCCH generation unit 230. For example, the ACK signal is transmitted to the base station 100 as the PUCCH signal.

Upon receiving the ACK signal (S116), the base station 100 puts the DLCC specified by the MAC CE into the active state (activates the DLCC) (S117). For example, the upper layer 140 resets the DLCC, which is set in the inactive state, into the active state, and saves the setting as setting information. Further, the upper layer 140 transmits the signal in the frequency bandwidth of the DLCC in the active state, or similar, to each unit.

On the other hand, the terminal 200 puts the DLCC specified by the MAC CE into the active state (S118). For example, the upper layer 240 inputs the information included in the MAC CE from the PDSCH processing unit 225, and registers information relating to the DLCC put into the active state of this information as the active state. For example, the upper layer 240 sets each unit such that the signal in the frequency band of the specified DLCC is received, and similar.

Next, the terminal 200 generates the CSI for the DLCC specified by the MAC CE (S119). For example, the upper layer 240 outputs the information on the DLCC put into the active state to the CSI generation unit 224. The CSI generation unit 224 generates the CSI for the corresponding DLCC based on this information.

Next, the terminal 200 transmits the generated CSI as the PUSCH signal (S120, S121), and the base station 100, by receiving this signal, receives the CSI for the DLCC put into the active state (S17, S18).

Thus in the thirteenth embodiment also, the base station 100, by using the MAC CE to specify the DLCC to be put into the active state, can receive CSI for the DLCC. Hence in the thirteenth embodiment also, the base station 100 can cause the terminal 200 to report the information relating to the channel state of the arbitrary frequency band. Further, the terminal 200 reports the CSI for the DLCC put into the active state. Hence compared with a case in which the terminal 200 performs CSI reporting for all DLCCs, throughput can be improved.

### Fourteenth Embodiment

Next, a fourteenth embodiment is explained. Differences with the fifth and ninth embodiments are mainly explained, and explanation of similar matter is omitted. The fourteenth embodiment is an example which combines the fifth embodiment and the ninth embodiment.

In the fifth embodiment, for example, based on the correspondence relation between the PDCCH monitoring CC and scheduled DLCC, the base station 100 uses a certain PDCCH monitoring CC to transmit the PDCCH signal for control information for uplink data (fr example DCI format 0) in which "CQI request" is set to "1". The terminal 200 reports the CSI for all scheduled DLCCs in the correspondence relation with the PDCCH monitoring CC (for example FIG. 22A and FIG. 22B).

In the ninth embodiment, in the PDCCH signal for control information for uplink data (for example DCI format 0) in which the "CQI request" is set to "1", the "carrier indicator" is used to specify the DLCC for CSI reporting (for example FIG. 38A and FIG. 38B).

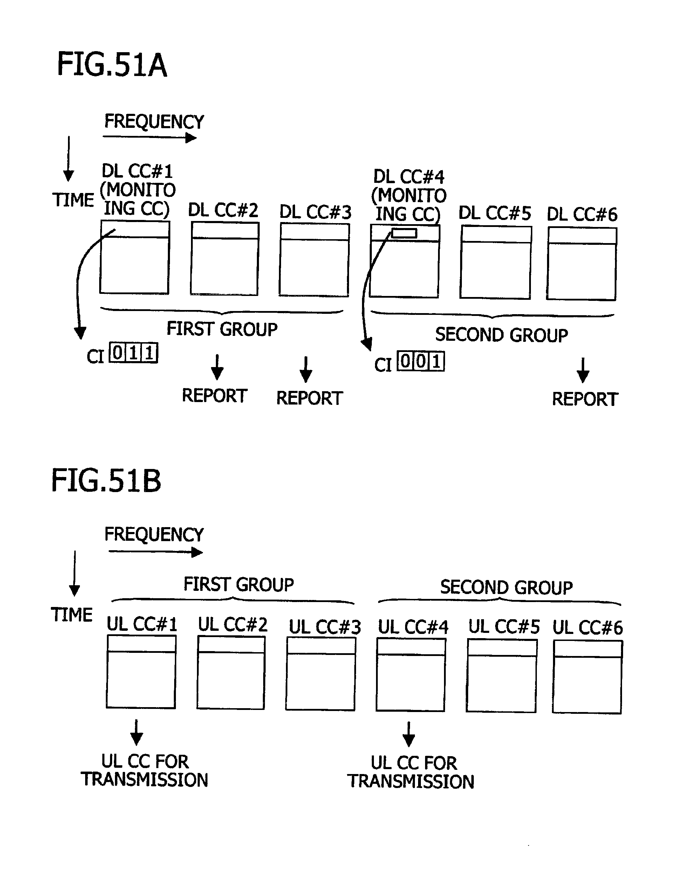

FIG. 51A and FIG. 51B illustrate examples of the DLCC for CSI reporting and ULCC used in transmission, respectively. In the fourteenth embodiment, the number of scheduled DLCCs which can be associated with the PDCCH monitoring CC is three or fewer. In the example of FIG. 51A, DLCC#1 and DLCC#4 are set as PDCCH monitoring CCs, and the scheduled DLCC associated with DLCC#1, which is the PDCCH monitoring CC, are DLCC#1 to #3 (first group). DLCCs associated with DLCC#4, which is a PDCCH monitoring CC, are DLCC#4 to #6 (second group).

In the fourteenth embodiment also, when "CQI request" is set to "1", "carrier indicator" is used to specify the DLCC for CSI reporting. For example 3 bits can be used in the "carrier indicator", and so in the first group, for example, when causing CSI reporting for DLCC#2 and DLCC#3, the base station 100 can set the "carrier indicator" to "011". That is, when causing CSI reporting for DLCC#2 and DLCC#3, the base station 100 uses the DLCC#1 which is the PDCCH monitoring CC, and transmits the DCI format 0 PDCCH signal in which the "CQI request" is set to "1" and the "carrier indicator" is set to "011".

At this time, similarly to the ninth embodiment, the base station 100 cannot use the "carrier indicator" to specify the ULCC to transmit the PUSCH signal. Hence in this case the ULCC to transmit the PUSCH signal is decided in advance for each PDCCH monitoring CC (each group), and the ULCC is used for CSI transmission. In the example of FIG. 51B, the CSI report (the CSI for DLCC#1 to DLCC#3) started by the PDCCH transmitted using the PDCCH monitoring CC#1 (DLCC#1) is transmitted by the ULCC#1 as the PUSCH signal.

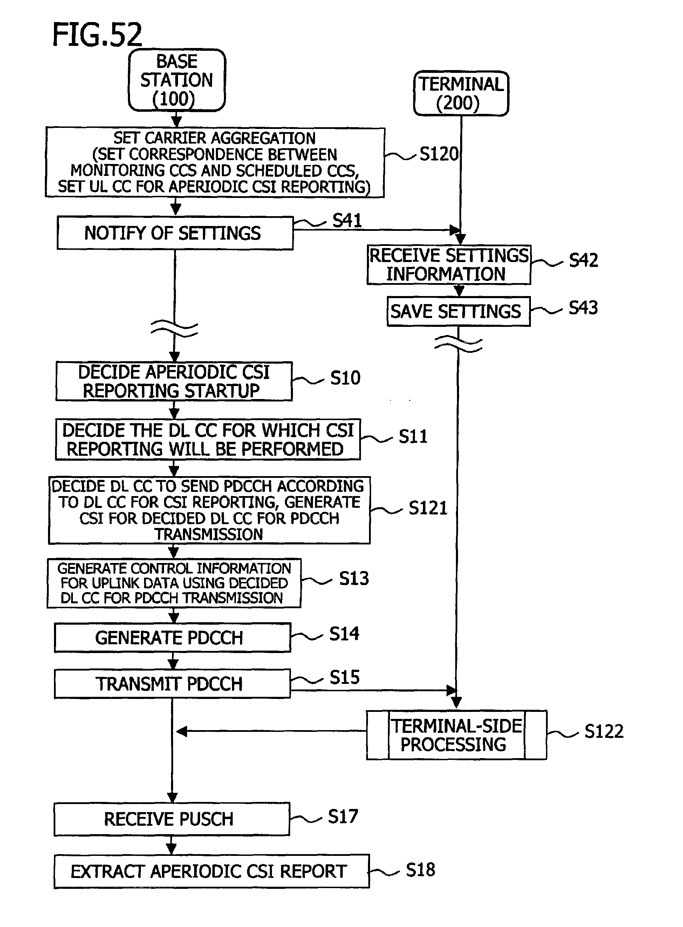

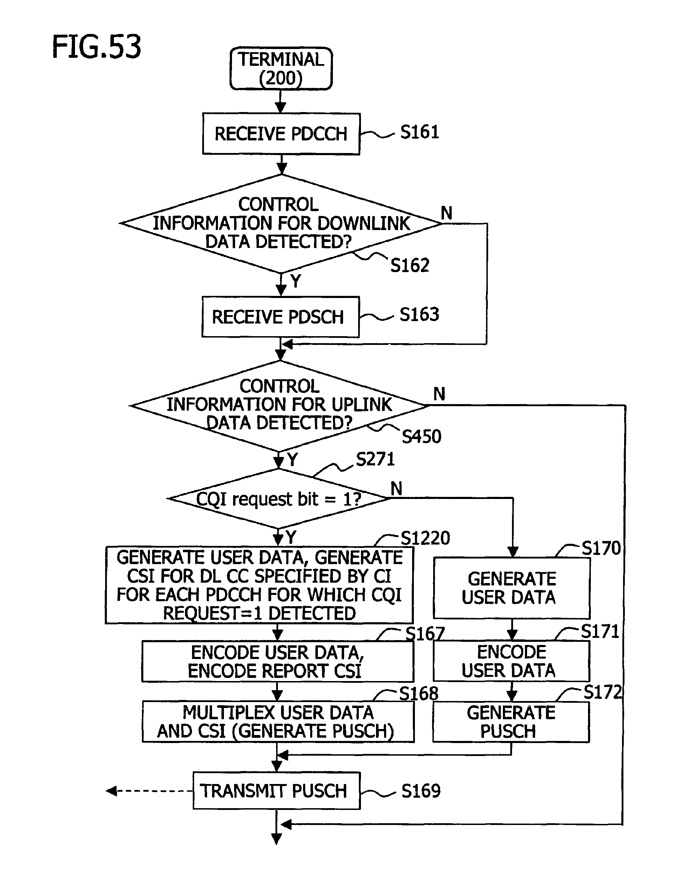

Examples of the configuration of the base station 100 and terminal 200 in the fourteenth embodiment can be implemented similarly to the fifth and ninth embodiments (for example FIG. 23 and FIG. 24). FIG. 52 and FIG. 53 are sequence diagrams illustrating an example of operation in the fourteenth embodiment. The operation example is explained in the order of the step numbers, focusing mainly on differences with the fifth and ninth embodiments.

First, when setting carrier aggregation, the base station 100 sets the correspondence relation between the PDCCH monitoring CC and scheduled CC, and sets the ULCC for aperiodic CSI reporting (S120). For example, the upper layer 140 decides the scheduled DLCC (three or fewer) to be in the same group as the DLCC which is the PDCCH monitoring CC, as illustrated in FIG. 51A. Further, the upper layer 140 decides on one ULCC for aperiodic CSI transmission in each group. The upper layer 140 saves the information thus decided as setting information, and notifies the terminal 200 (S41).

The terminal 200 receives the setting information as the PUSCH signal, and saves the setting information (S43). For example, the upper layer 240 saves the setting information.

Then, upon deciding for which DLCC CSI reporting is to be performed, the base station 100 decides on the DLCC which is the PDCCH monitoring CC to transmit the PDCCH signal based on the setting information. Further, the base station 100 generates the "carrier indicator" specifying the combination of DLCCs for CSI reporting (S121). For example, when the report CC decision unit 111 decides on DLCC#2 for CSI reporting, the scheduler 110 acquires the setting information from the upper layer 140, and decides on transmission using the DLCC#1, which is a PDCCH monitoring CC. Further, the scheduler 110 decides to set "CQI request" to "1" and "carrier indicator" to "010".

Next, the base station 100 generates the control information for uplink data (for example DCI format 0) (S13). For example, the scheduler 110 generates the control information with the "CQI request" set to "1" and the "carrier indicator" set to "010", and outputs the control information to the PDCCH generation unit 113.

Then, the base station 100 uses the decided-upon DLCC which is the PDCCH monitoring CC to transmit the PDCCH signal to the terminal 200 (S14, S15). The base station 100 can use a plurality of PDCCH monitoring CCs to specify DLCCs for CSI reporting. For example, in the example of FIG. 51A, the two PDCCH monitoring CCs which are DLCC#1 and DLCC#4 are used to specify DLCCs for CSI reporting.

Through terminal-side processing (S122), the terminal 200 receives the PDCCH signal, and detects DCI format 0 and detects "CQI request" = "1" ("Y" in S450, "Y" in S271).

Next, the terminal 200 extracts the "carrier indicator" from the DCI format 0 PDCCH signal with the "CQI request" set to "1", and generates the CSI for the DLCC specified by the "carrier indicator" (S1220). For example, the PDCCH processing unit 223 reads out the "CQI request" and "carrier indicator" from the PDCCH signal, and outputs these to the CSI generation unit 224. The PDCCH processing unit 223 identifies the DLCC from the reception frequency bandwidth of the received PDCCH signal (the DLCC which is a PDCCH monitoring CC), and outputs the DLCC information to the CSI generation unit 224. The CSI generation unit 224 acquires setting information from the upper layer 240 and acquires the corresponding DLCC from the DLCC information and "carrier indicator" from the PDCCH processing unit 223 based on the setting information. The CSI generation unit 224 generates CSI for the acquired DLCC. In this case, when the PDCCH signal has been transmitted using the plurality of PDCCH monitoring CCs, CSI is generated for each.

Then, the terminal 200 uses the ULCC decided in advance to transmit the generated CSI to the base station 100 (S169). For example, the PUSCH generation unit 229 acquires a setting information from the upper layer 240, and extracts an information as to which ULCC is to be used for transmission. The PUSCH generation unit 229 then uses the extracted ULCC to output the PUSCH signal so as to be transmitted.

The base station 100 receives the PUSCH signal, and receives the CSI for the specified DLCC (S17, S18).

Thus in the fourteenth embodiment also, similarly to the fifth and ninth embodiments, the DLCC for CSI reporting can be specified by a combination of the PDCCH monitoring CC and "carrier indicator". Hence in the fourteenth embodiment also, the base station 100 can cause the terminal 200 to report information relating to the channel state of the arbitrary frequency band. Further, based on the correspondence relation, the terminal 200 reports the CSI of the DLCC specified by the combination of the PDCCH monitoring CC and "carrier indicator". Hence compared with a case in which the terminal 200 performs CSI reporting for all DLCCs, the quantity of information transmitted is reduced, so that throughput can be improved.

Further, in the fourteenth embodiment, even when the number of DLCCs is greater than three, a combination of arbitrary DLCCs for CSI reporting can be specified by combining into a plurality of groups. In the above-described example, six DLCCs are grouped into two groups. When there are eight DLCCs, for example, grouping into three groups is possible. As described above, by using the plurality of PDCCH monitoring CCs to transmit the PDCCH signal, the base station 100 can cause CSI reporting to be performed for DLCCs in different groups.

### Fifteenth Embodiment

Next, a fifteenth embodiment is explained. Differences with the second embodiment are mainly explained, and explanation of similar matter is omitted. The fifteenth embodiment is an example in which, in a control information for uplink data supporting SU-MIMO (control information relating to PUSCH), a portion of fields in the control information is used to specify the DLCC for CSI reporting.

In a radio communication system, SU-MIMO (Single User-MIMO) can be supported in the uplink. On the other hand, in the above-described second embodiment and similar, the DCI format 0 is explained as the control information for uplink data transmission, but in order to support SU-MIMO, a DCI format can be newly defined. SU-MIMO enables transmission and reception of different signals by one user (the terminal 200) and one base station 100, each using the plurality of antennas, for each antenna directionality.

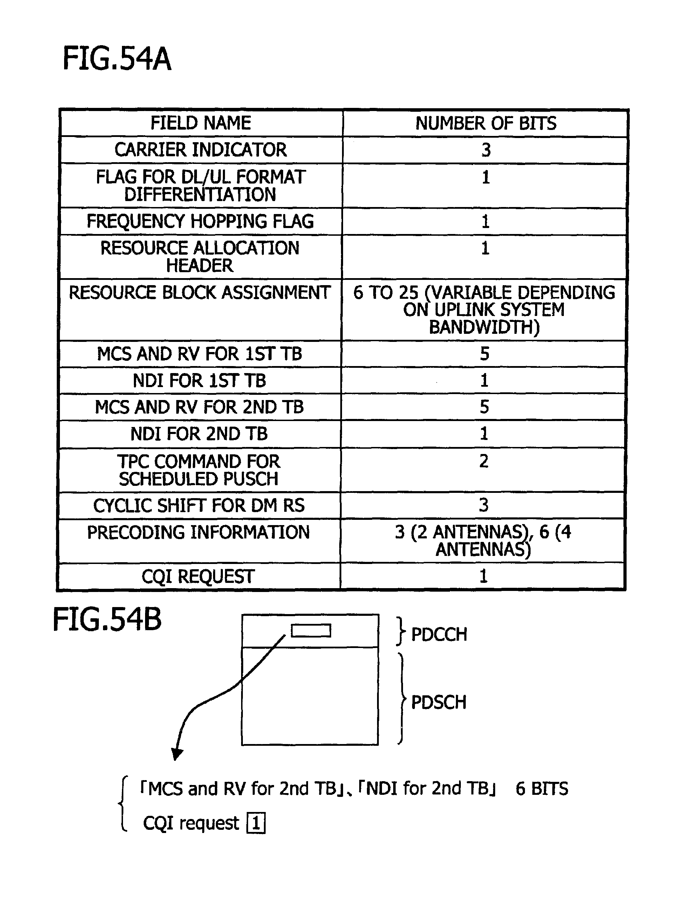

FIG. 54A illustrates an example of parameters of a DCI format supporting SU-MIMO. The SU-MIMO for uplinks supports transmission of a maximum two data blocks (also called transport blocks) using the plurality of antennas. In the example of FIG. 54A, the "NDI" (New Data Indicator) field and the "MCS and RV" (Modulation and Coding Scheme and Redundancy Version) field are fields defined for two data blocks, so as to correspond to two data blocks.

In the fifteenth embodiment, when the "CQI request" is set to "1" (when aperiodic CSI reporting is performed), one of the two data blocks in the "NDI" field and the "MCS and RV" field is made valid, and the other is used to specify the DLCC for aperiodic CSI reporting.

FIG. 54B is used to explain an example of a case in which such the DCI format is specified. For example, the base station 100 sets the "CQI request" to "1", and uses the six bits in total of the "NDI" field and the "MCS and RV" field for the second transport block to specify the DLCC for CSI reporting. By means of this specification, the terminal 200 generates and transmits to the base station 100 the CSI for the specified DLCC. This "six bits" is one example, and bits specified as the "NDI" field and the "MCS and RV" field may be used. Also, instead of the second transport block, the two fields for the first transport block may be used.

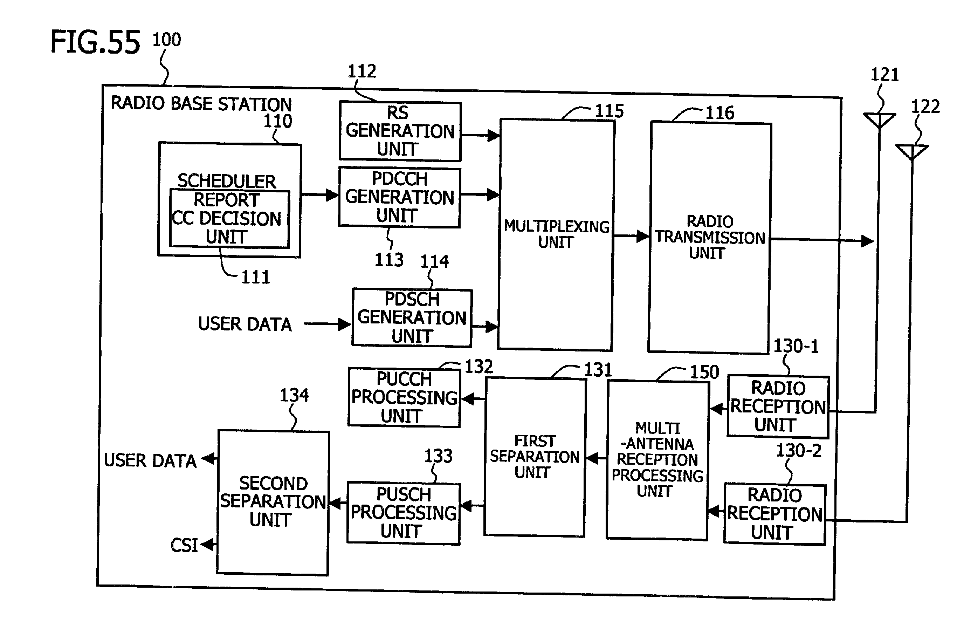

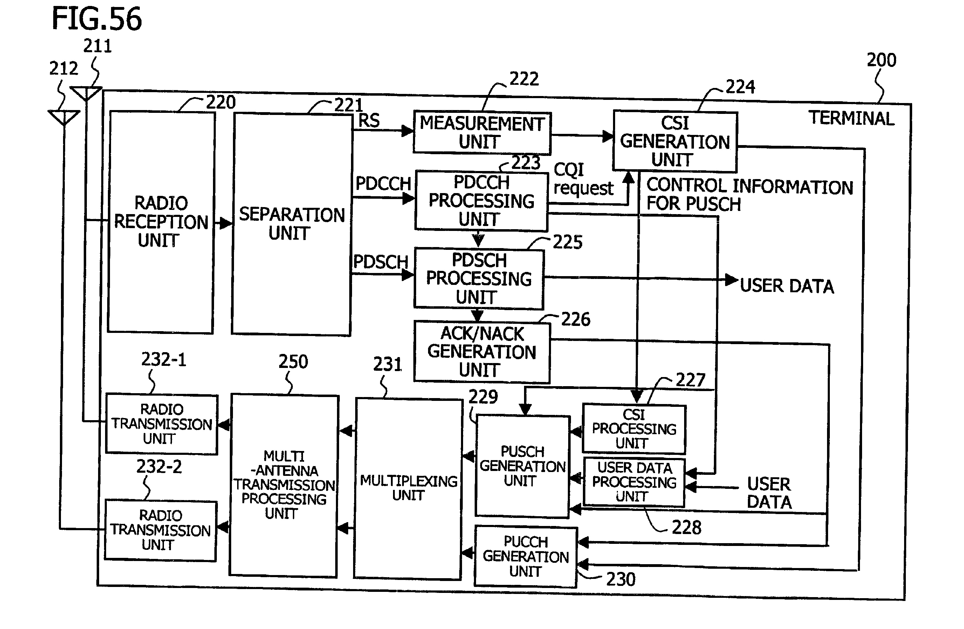

FIG. 55 and FIG. 56 illustrate examples of the configuration of the base station 100 and the terminal 200 respectively of the fifteenth embodiment.

The base station 100 further includes two antennas 121 and 122, two radio reception units 130-1 and 130-2, and a multi-antenna reception processing unit 150. The two radio reception units 130-1 and 130-2 and the multi-antenna reception processing unit 150 are for example included in the reception unit 12 in the first embodiment.

The two antennas 121 and 122 each receive radio signals transmitted by MIMO from the terminal 200, and output signals to the two radio reception units 130-1 and 130-2 respectively.

The two radio reception units 130-1 and 130-2 each down-convert the received radio signals, converting the signals into baseband signals, and output the signals to the multi-antenna reception processing unit 150.

The multi-antenna reception processing unit 150 performs a precoding matrix operation and similar, for example, and outputs baseband signal so as to correspond to the distribution (or weighting) when transmitted from the terminal 200 to the two antennas.

The terminal 200 further includes two antennas 211 and 212, two radio transmission units 232-1 and 232-2, and a multi-antenna transmission processing unit 250. The two radio transmission units 232-1 and 232-2 and the multi-antenna transmission processing unit 250 are for example included in the transmission unit 22 in the first embodiment.

The multi-antenna transmission processing unit 250 performs precoding matrix and similar operations on the baseband signal output from the multiplexing unit 231, and outputs the result. By this means, the radio signal is transmitted from for example the two antennas 211 and 212 according to a precoding matrix or other distribution.

The two radio transmission units 232-1 and 232-2 perform up-conversion by frequency conversion or similar of the baseband signals output from the multi-antenna transmission processing unit 250, and generate radio signals respectively. The two radio transmission units 232-1 and 232-2 output the generated radio signals to the two antennas 211 and 212 respectively.

The two antennas 211 and 212 each transmit the radio signals to the base station 100.

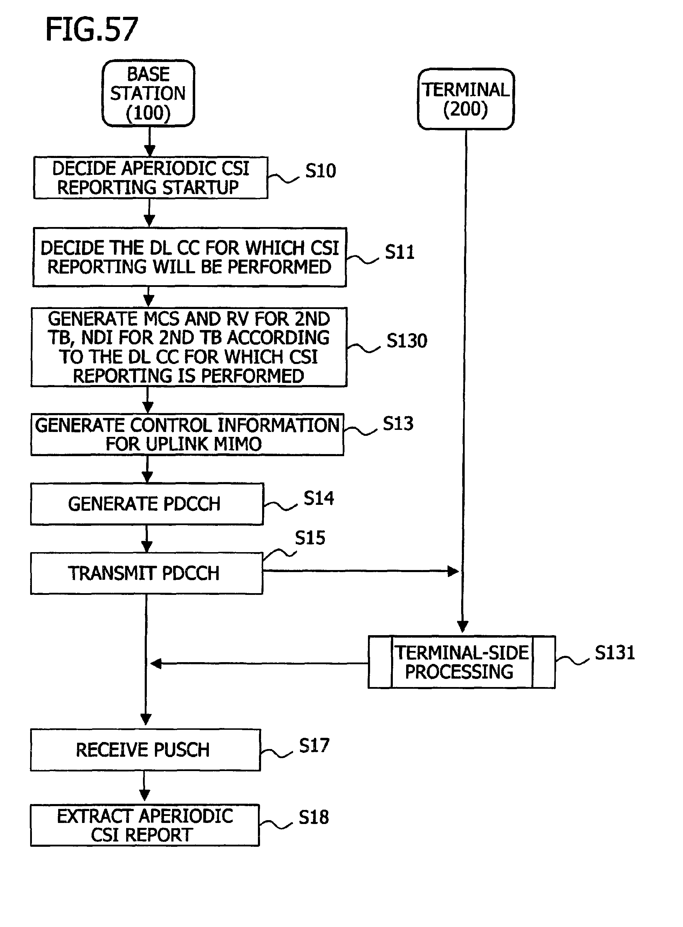

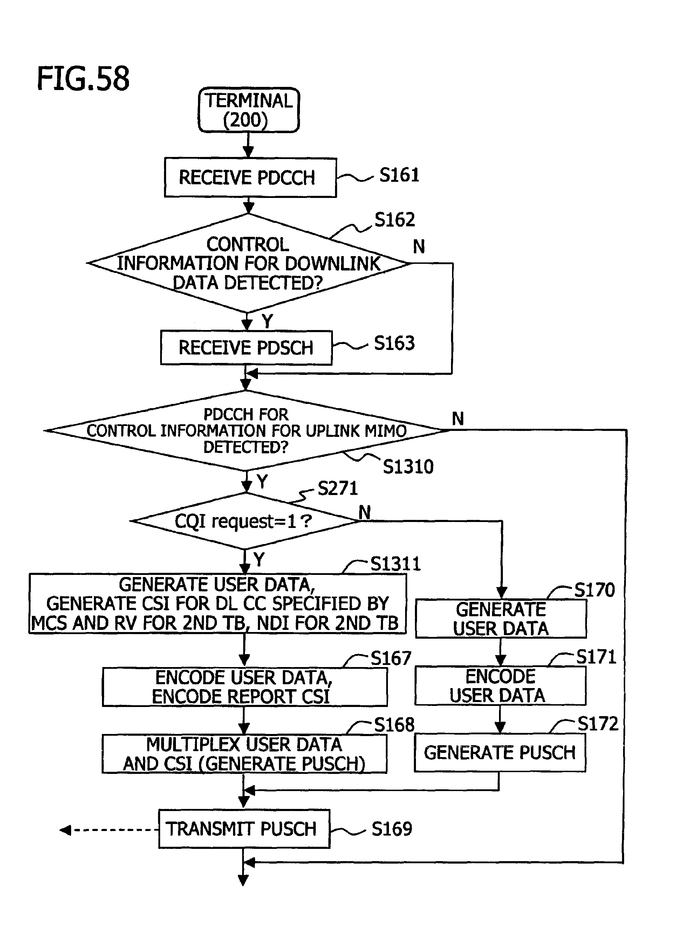

Next, an example of operation is explained. FIG. 57 and FIG. 58 are flowcharts illustrating an operation example. The operation example is explained in the order of the step numbers, focusing mainly on differences with the second embodiment.

The base station 100, upon deciding for which DLCC CSI reporting is to be performed, accordingly decides parameter value to be transmitted using the "MCS and RV for 2nd TB" field and the "NDI for 2nd TB" field (S130). For example, the scheduler 110 generates parameter value corresponding to the DLCC for CSI reporting decided on by the report CC decision unit 111. Similarly to the second embodiment, the scheduler 110 can specify a combination of the plurality of DLCCs.

Then, the base station 100 generates the control information for uplink data (hereafter, control information for uplink MIMO) in a new DCI format (for example FIG. 54A), and transmits the PDCCH signal for control information for uplink MIMO to the terminal 200 (S13 to S15).

The terminal 200, upon receiving the PDCCH signal through terminal-side processing (S131), detects whether the PDCCH signal for control information for uplink MIMO is received (S1310). For example, the PDCCH processing unit 223 detects the PDCCH signal for control information for uplink MIMO from the signal length.

When the terminal 200 cannot detect the PDCCH signal for control information for uplink MIMO ("N" in S1310), the terminal 200 determines that the base station 100 is not requesting aperiodic CSI reports, and ends the series of processing.

On the other hand, upon detecting the PDCCH signal for control information for uplink MIMO ("Y" in S1310), the terminal 200 determines whether the "CQI request" is "1" (S271). When the "CQI request" is "1" (when aperiodic CSI reporting is requested) ("Y" in S271), the terminal 200 generates the CSI for the DLCC corresponding to the parameter values transmitted in the "MCS and RV for 2nd TB" field and the "NDI for 2nd TB" field (S1311). For example, the PDCCH processing unit 223 extracts the parameter values of the "MCS and RV for 2nd TB" and "NDI for 2nd TB" from the PDCCH signal, and outputs the values together with the "CQI request" to the CSI generation unit 224. The CSI generation unit 224 generates the CSI for the corresponding DLCC based on the parameter values.

Then, the terminal 200 transmits the generated CSI as the PUSCH signal (S169). The base station 100 receives the PUSCH signal, and so can receive the CSI generated by the terminal 200 (S17, S18).

In the fifteenth embodiment also, the base station 100 can specify the DLCC for CSI reporting through the control information for uplink MIMO, so that the base station 100 can cause the terminal 200 to report the information relating to the channel state of the arbitrary frequency band. Further, the terminal 200 reports the CSI for the specified DLCC. Hence compared with a case in which the terminal 200 performs CSI reporting for all DLCCs, the quantity of information transmitted is reduced, so that throughput can be improved.

In the fifteenth embodiment, an example is explained in which, when specifying the DLCC for CSI reporting, the two fields "NDI" and "MCS and RV" are used. In the new DCI format, for example, another field may be used to specify the DLCC for CSI reporting. In this case, a field not illustrated in FIG. 54A can be used for specification. If parameter values of fields capable of transmitting together with "CQI request" are used, the DLCC for CSI reporting can be specified.

### Other Examples

For example, in the explanation of the second embodiment, when the terminal includes one or more "1"'s in the "CQI request", the CSI for the specified DLCC is generated, and user data is also generated (for example S166 in FIG. 11). However, the terminal 200 may for example generate the CSI for the specified DLCC without generating user data. In each of the third and subsequent embodiments also, the terminal 200 can generate the specified DLCC without generating user data (for example S166 in FIG. 17 and similar).

### EXPLANATION OF REFERENCE NUMERALS

| | |
|---|---|
| 100 | RADIO BASE STATION APPARATUS (BASE STATION) |
| 110 | SCHEDULER |
| 111 | REPORT CC DECISION UNIT |
| 113 | PDCCH GENERATION UNIT |
| 114 | PDSCH GENERATION UNIT |
| 120 | (121, 122) ANTENNA |
| 140 | UPPER LAYER |
| 200 | TERMINAL APPARATUS (TERMINAL) |
| 222 | MEASUREMENT UNIT |
| 223 | PDCCH PROCESSING UNIT |
| 224 | CSI GENERATION UNIT |
| 225 | PDSCH PROCESSING UNIT |
| 227 | CSI PROCESSING UNIT |
| 229 | PUSCH GENERATION UNIT |
| 235 | SEPARATION UNIT |
| 240 | UPPER LAYER |

## Claims

1. A radio communication method for performing radio communication by using a plurality of frequency bands in a first radio communication apparatus and a second radio communication, the method comprising:
transmitting to the second radio communication apparatus a first channel quality information request corresponding to each of the plurality of frequency band, by the first radio communication apparatus; and
transmitting to the first radio communication apparatus an information relating to a channel state for the frequency band specified by the first channel quality information request, when the second radio communication apparatus receives the first channel quality information request, by the second radio communication apparatus.

2. The radio communication method according to Claim 1, wherein the first radio communication apparatus transmits the first channel quality information request by using a second radio resource usable in data signal transmission.

3. The radio communication method according to Claim 1, wherein the first radio communication apparatus groups the plurality of frequency bands into a plurality of groups, and transmits to the second radio communication apparatus for each of the groups the first channel quality information request corresponding to each of the plurality of frequency bands included in each of the groups.

4. The radio communication method according to Claim 1, wherein the first radio communication apparatus transmits a control information to be used when the second radio communication apparatus transmits the information relating to the channel state to the first radio communication apparatus, and the first channel quality information request.

5. The radio communication method according to Claim 1, further comprising:
transmitting a second channel quality information request by using a first radio resource usable in control signal transmission to the second radio communication apparatus, by the first radio communication apparatus transmits, wherein
the second radio communication apparatus transmits the information relating to the channel state for the frequency band specified by the first channel quality information request transmitted by using the second radio resource, when the second radio communication apparatus receives the second channel quality information request to request the information relating to the channel state.

6. The radio communication method according to Claim 1, further comprising:
transmitting to the second radio communication apparatus a second channel quality information request by using a first radio resource usable in control signal transmission, wherein
the second radio communication apparatus receives a control information transmitted with the second channel quality information request using by the first radio resource, as a control information used when the second radio communication apparatus receives a data signal transmitted from the first radio communication apparatus to the second radio communication apparatus, and transmits to the first radio communication apparatus an information relating to the channel state by using the control information received with the first channel quality information request by using the second radio resource, when the second communication apparatus receives the second channel quality information request requesting the information relating the channel state.

7. A radio communication method for performing radio communication by using a plurality of frequency bands in a first radio communication apparatus and a second radio communication apparatus, the method comprising:
transmitting to the second radio communication apparatus a first channel quality information request by using a first frequency band of the plurality of frequency bands, by the first radio communication apparatus; and
transmitting to the first radio communication apparatus an information relating to a channel state for a frequency band in a correspondence with the first frequency band, when the second radio communication apparatus receives the first channel quality information request, by the second radio communication apparatus .

8. The radio communication method according to Claim 7, wherein the second radio communication apparatus transmits to the first radio communication apparatus the information relating to the channel state for a frequency band for which scheduling is possible by using a control information received with the first channel quality information request by using the first frequency band.

9. The radio communication method according to Claim 8, further comprising:
transmitting to the second radio communication apparatus an information indicating correspondence relation between the frequency band for which scheduling is possible and the first frequency band, by the first radio communication apparatus, wherein
the second radio communication apparatus transmits the information relating to the channel state for the frequency band for which scheduling is possible according to the information indicating the correspondence relation.

10. The radio communication method according to Claim 7, further comprising:
transmitting the information indicating the correspondence relation to the second radio communication apparatus, by the second radio communication apparatus, wherein
the second radio communication apparatus transmits the information relating to the channel state of a frequency band in a correspondence with the first frequency band according to the information indicating the correspondence relation.

11. A radio communication method for performing radio communication by using a plurality of frequency band in a first radio communication apparatus and a second radio communication apparatus, the method comprising:
transmitting a first channel quality information request to the second radio communication apparatus, by the first radio communication; and
generating an information relating to a channel state for a frequency band in a correspondence with a first frequency band of the plurality of frequency bands and transmitting the information relating to the channel state to the first radio communication apparatus by using the first frequency band, when the second communication apparatus receives the first channel quality information request, by the second radio communication apparatus.

12. The radio communication method according to Claim 11, wherein the first radio communication apparatus transmits to the second radio communication apparatus the first channel quality information request and a control information indicating the first frequency band.

13. The radio communication method according to Claim 11, wherein the first frequency band indicate same identification number as a frequency band used in transmission of the first channel quality information request.

14. The radio communication method according to Claim 11, further comprising:
transmitting to the second radio communication apparatus an information indicating the correspondence relation between the first frequency band and frequency band for which an information relating to the channel state is generated, by the first radio communication apparatus, wherein
the second radio communication apparatus generates the information relating to the channel state according to the information indicating the correspondence relation.

15. The radio communication method according to Claim 14, wherein the correspondence relation is a one-to-one correspondence relation between the first frequency band and the frequency band for which the information relating to the channel state is generated.

16. A radio communication method for performing radio communication by using a plurality of frequency bands in a first radio communication apparatus and a second radio communication apparatus, the method comprising:
transmitting a first channel quality information request to the second radio communication apparatus, by the first radio communication apparatus; and
transmitting to the first radio communication apparatus an information relating to a channel state for one frequency band of the plurality of frequency bands, specified by the first channel quality information request, when the second communication apparatus receives the first channel quality information request, by the second radio communication apparatus.

17. The radio communication method according to Claim 16, further comprising:
transmitting a second channel quality information request and the first channel quality information request to the second radio communication apparatus, by the first radio communication apparatus, wherein
the second radio communication apparatus transmits the information relating to the channel state for the frequency band specified by the first channel quality information request, when the second radio communication apparatus receives the second channel quality information request requesting the information relating to the channel state.

18. A radio communication method for performing radio communication by using a plurality of frequency bands in a first radio communication apparatus and a second radio communication apparatus, the method comprising:
transmitting a frequency band identifier as a first channel quality information request to the second radio communication apparatus, and transmitting a second channel quality information request to the second radio communication apparatus, by the first radio communication apparatus; and
generating an information relating to a channel state for a frequency band specified by the frequency band identifier received as the first channel quality information request, and transmitting to the first radio communication apparatus the generated information by using a frequency band determined in advance, when the second communication apparatus receives the second channel quality information request requesting information relating to the channel state, by the second radio communication apparatus

19. The radio communication apparatus according to Claim 18, further comprising:
transmitting data signal to the first radio communication apparatus by using the frequency band specified by the frequency band identifier, when the second communication apparatus receives the second channel quality information request not requesting information relating to the channel state, by the second radio communication apparatus.

20. A radio communication method for performing radio communication by using a plurality of frequency bands in a first radio communication apparatus and a second radio communication apparatus, the method comprising:
transmitting a first channel quality information request to the second radio communication apparatus, by the first radio communication apparatus; and
transmitting to the first radio communication apparatus an information relating to a channel state for a frequency band in a correspondence with subframe number with which the first channel quality information request is transmitted, when the second radio communication apparatus receives the first channel quality information request, by the second radio communication apparatus.

21. The radio communication method according to Claim 20, further comprising:
transmitting to the second radio communication apparatus an information indicating a correspondence relation between the subframe number and the frequency band for which the information relating to the channel state is generated, by the first radio communication apparatus, wherein
the second radio communication apparatus transmits the information relating to the channel state according to the information indicating the correspondence relation.

22. The radio communication method according to Claim 20, wherein the second radio communication apparatus generates the information relating to the channel state for the frequency band in a correspondence with a frequency band specified by a frequency band identifier and the subframe number, and transmits information relating to the channel state by using the frequency band specified by the frequency band identifier.

23. A radio communication method for performing radio communication by using a plurality of frequency bands in a first radio communication apparatus and a second radio communication apparatus, the method comprising:
transmitting to the second communication apparatus a control packet causing a frequency band in an inactive state of the plurality of frequency bands to change an active state, by the first radio communication apparatus; and
changing the frequency band in the inactive state to the active state, and transmitting to the first radio communication apparatus an information relating to a channel state of the frequency band in the active state, when the second radio communication apparatus receives the control packet, by the second radio communication apparatus.

24. A radio communication method for performing radio communication by using a plurality of frequency bands in a first radio communication apparatus and a second radio communication apparatus, the method comprising:
transmitting to the second radio communication apparatus a frequency band identifier by using a first frequency band of the plurality of frequency band, and transmitting to the second radio communication apparatus a first channel quality information request, by the first radio communication apparatus; and
transmitting to the first radio communication apparatus an information relating to a channel state for a frequency band specified by the frequency band identifier and corresponded with the first frequency band, when the second radio communication apparatus receives the first channel quality information request requesting the information relating to the channel state, by the second radio communication apparatus.

25. The radio communication method according to Claim 24, wherein the frequency band identifier can specify all combinations of frequency bands in correspondence with the first frequency band.

26. A radio communication method for performing radio communication by using a plurality of frequency bands in a first radio communication apparatus and a second radio communication apparatus, the method comprising:
transmitting to the second radio communication apparatus a control information for a first data block of control information for MIMO communication as a first channel quality information request corresponding to each of the plurality of frequency band, and transmitting to the second radio communication apparatus a second channel quality information request, by the first radio communication apparatus; and
transmitting to the first radio communication apparatus an information relating to a channel state for the frequency band specified by the first channel quality information request, when the second radio communication apparatus receives the second channel quality information request requesting the information relating to the channel state, by the second radio communication apparatus.

27. The radio communication method according to any one of Claims 1, 7, 11, 16, 18, 20, 24 and 26, wherein the first radio communication apparatus transmits the first channel quality information request by using a first radio resource usable in control signal transmission.

28. A radio communication apparatus for performing radio communication by using a plurality of frequency bands with another radio communication apparatus, the apparatus comprising:
a transmission unit which transmits a first channel quality information request corresponding to each of the plurality of frequency band; and
a reception unit which receives from the other radio communication apparatus an information relating to a channel state for the frequency band specified by the first channel quality information request.

29. A radio communication apparatus for performing radio communication by using a plurality of frequency bands with another radio communication apparatus, the apparatus comprising:
a reception unit which receives from the another radio communication apparatus a first channel quality information request corresponding to each of the plurality of frequency band; and
a transmission unit which transmits to the another radio communication apparatus an information relating to a channel state for the frequency band specified by the first channel quality information request.

30. A radio communication apparatus for performing radio communication by using a plurality of frequency bands with another radio communication apparatus, the apparatus comprising:
a transmission unit which transmits to the another radio communication apparatus a first channel quality information request by using a first frequency band of the plurality of frequency bands; and
a reception unit which receives from the another radio communication apparatus an information relating to a channel state for a frequency band in a correspondence with the first frequency band.

31. A radio communication apparatus for performing radio communication by using a plurality of frequency bands with another radio communication apparatus, the apparatus comprising:
a reception unit which receives a first channel quality information request transmitted by using a first frequency band of the plurality of frequency bands; and
a transmission unit which transmits to the another radio communication apparatus an information relating to a channel state for a frequency band in a correspondence with the first frequency band.

32. A radio communication apparatus for performing radio communication by using a plurality of frequency bands with another radio communication apparatus, the apparatus comprising:
a transmission unit which transmits a first channel quality information request to the another radio communication apparatus; and
a reception unit which receives from the another radio communication apparatus an information relating to a channel state for a frequency band in a correspondence with a first frequency band of the plurality of frequency bands,
wherein the reception unit receives the information relating to the channel state transmitted by using a second frequency band.

33. A radio communication apparatus for performing radio communication by using a plurality of frequency bands with another radio communication apparatus, the apparatus comprising:
a reception unit which receives a first channel quality information request from the another radio communication apparatus; and
a transmission unit which generates an information relating to a channel state for a frequency band in a correspondence with a first frequency band of the plurality of frequency bands, and transmits the information relating to the channel state to the another radio communication apparatus by using a second frequency band.

34. A radio communication apparatus for performing radio communication by using a plurality of frequency bands with another radio communication apparatus, the apparatus comprising:
a transmission unit which transmits to the another radio communication apparatus a first channel quality information request specifying one frequency band of the plurality of frequency bands; and
a reception unit which receives from the another radio communication apparatus an information relating to a channel state for the one specified frequency band.

35. A radio communication apparatus for performing radio communication by using a plurality of frequency bands with another radio communication apparatus, the apparatus comprising:
a reception unit which receives a first channel quality information request from the another radio communication apparatus; and
a transmission unit which transmits to the another radio communication apparatus an information relating to a channel state for one frequency band specified by the first channel quality information request, of the plurality of frequency bands.

36. A radio communication apparatus for performing radio communication by using a plurality of frequency bands with another radio communication apparatus, the apparatus comprising:
a transmission unit which transmits a frequency identifier as a first channel quality information request to the another radio communication apparatus, and further transmits to the another radio communication apparatus a second channel quality information request requesting an information relating to a channel state; and
a reception unit which receives from the another radio communication apparatus the information relating to the channel state for a frequency band specified by the frequency identifier,
wherein the reception unit receives the information relating to the channel state transmitted by using a frequency band determined in advance.

37. A radio communication apparatus for performing radio communication by using a plurality of frequency bands with another radio communication apparatus, the apparatus comprising:
a reception unit which receives a frequency identifier as a first channel quality information request from the another radio communication apparatus, and receives a second channel quality information request from the other radio communication apparatus;
a transmission unit which generates an information relating to a channel state for a frequency band specified by the frequency identifier, and transmits the generated information relating to the channel state to the another radio communication apparatus by using a frequency determined in advance, when the reception unit receives the second channel quality information request requesting the information relating to the channel state.

38. A radio communication apparatus for performing radio communication by using a plurality of frequency bands with another radio communication apparatus, the apparatus comprising:
a transmission unit which transmits a first channel quality information request to the another radio communication apparatus; and
a reception unit which receives from the another radio communication apparatus an information relating to a channel state for a frequency band in a correspondence with number of subframe transmitting the first channel quality information.

39. A radio communication apparatus for performing radio communication by using a plurality of frequency bands with another radio communication apparatus, the apparatus comprising:
a reception unit which receives a first channel quality information request from the another radio communication apparatus; and
a transmission unit which generates an information relating to a channel state for a frequency band in a correspondence with number pf subframe transmitting the first channel quality information request, and transmits the information relating to the channel state to the other radio communication apparatus.

40. A radio communication apparatus for performing radio communication by using a plurality of frequency bands with another radio communication apparatus, the apparatus comprising:
a transmission unit which transmits to the another radio communication apparatus a control packet causing a frequency band in an inactive state of the plurality of frequency band to change a frequency band an active state; and
a reception unit which receives from the another radio communication apparatus an information relating to a channel state for the frequency band changed from the inactive state to the active state.

41. A radio communication apparatus for performing radio communication by using a plurality of frequency bands with another radio communication apparatus, the apparatus comprising:
a reception unit which receives from the another radio communication apparatus a control packet causing a frequency band in an inactive state of the plurality of frequency bands to change a frequency band in an active state; and
a transmission unit which transmits to the another radio communication apparatus an information relating to a channel state for the frequency band changed from the inactive state to the active state.

42. A radio communication apparatus for performing radio communication by using a plurality of frequency bands with another radio communication apparatus, the apparatus comprising:
a transmission unit which transmits a frequency band identifier by using a first frequency band of the plurality of frequency bands to the another radio communication apparatus, and transmits a first channel quality information request requesting an information relating to a channel state to the another radio communication apparatus; and
a reception unit which receives from the another radio communication apparatus the information relating to the channel state for a frequency band specified by the frequency identifier and corresponded with the first frequency band.

43. A radio communication apparatus for performing radio communication by using a plurality of frequency bands with another radio communication apparatus, the apparatus comprising:
a reception unit which receives from the another radio communication apparatus a frequency band identifier transmitted by using a first frequency band of the plurality of frequency band, and receives from the other radio communication apparatus a first channel quality information request; and
a transmission unit which transmits to the another radio communication apparatus an information relating to a channel state for a frequency band specified by the frequency band identifier and corresponded with the first frequency band, when the reception unit receives the first channel quality information request requesting the information relating to the channel state.

44. A radio communication apparatus for performing radio communication by using a plurality of frequency bands with another radio communication apparatus, the apparatus comprising:
a transmission unit which transmits to the another radio communication apparatus a control information for a first data block of control information for MIMO communication as a first channel quality information request corresponding to each of the plurality of frequency band, and transmits to the another radio communication apparatus a second channel quality information request requesting an information relating to a channel state; and
a reception unit which receives from the another radio communication apparatus the information relating to the channel state for the frequency band specified by the first channel quality information request.

45. A radio communication apparatus for performing radio communication by using a plurality of frequency bands with another radio communication apparatus, the apparatus comprising:
a reception unit which receives from the another radio communication apparatus a control information for a first data block of control information for MIMO communication as a first channel quality information request corresponding to each of the plurality of frequency band, and receives from the other radio communication apparatus a second channel quality information request; and
a transmission unit which transmits to the another radio communication apparatus an information relating to a channel state for the frequency band specified by the first channel quality information request, when the reception unit receives the second channel quality information request requesting the information relating to the channel state.

46. The radio communication method according to any one of Claims 1, 7, 11, 16, 18, 20, 23, 24 and 26, wherein the second radio communication apparatus transmits the information relating to the channel state to the first radio communication apparatus with a timing delayed from a threshold value.

47. The radio communication apparatus according to any one of Claims 28, 30, 32, 34, 36, 38, 40, 42 and 44, wherein the reception unit receives the information relating to the channel state from the another radio communication apparatus with a timing delayed from a threshold value.

48. The radio communication apparatus according to any one of Claims 29, 31, 33, 35, 37, 39, 41, 43 and 45, wherein the transmission unit transmits the information relating to the channel state to the another radio communication apparatus with a timing delayed from a threshold value.
